# EUROPÄISCHE PATENTSCHRIFT

(11) **EP 1 313 747 B1**
(45) Veröffentlichungstag und Bekanntmachung des Hinweises auf die Patenterteilung: **20.04.2005**
(21) Anmeldenummer: 01969627.7
(22) Anmeldetag: 22.08.2001
(51) Int. Cl.: C07F 17/00

(54) **VERFAHREN ZUR HERSTELLUNG VON AlKYLVERBRÜCKTEN LIGANDSYSTEMEN UND ÜBERGANGSMETALLVERBINDUNGEN**
METHOD FOR PRODUCING ALKYL-BRIDGED LIGAND SYSTEMS AND TRANSITION METAL COMPOUNDS
PROCEDE DE PRODUCTION DE SYSTEMES LIGANDS PONTES PAR DES ALKYLES ET COMPOSES DE METAUX TRANSITOIRES

(30) Priorität: 29.08.2000 DE 10042450
(43) Veröffentlichungstag der Anmeldung: 28.05.2003
(73) Patentinhaber: Basell Polyolefine GmbH, 50389 Wesseling (DE)
(72) Erfinder: SCHULTE, Jörg, 60487 Frankfurt (DE); BINGEL, Carsten, 65830 Kriftel (DE); SCHOTTEK, Jörg, 60486 Frankfurt (DE)
(86) Internationale Anmeldenummer: PCT/EP2001/009682
(87) Internationale Veröffentlichungsnummer: WO 2002/018397

(56) Entgegenhaltungen:
- DE-A- 3 742 934
- DE-A- 4 406 109
- US-A- 5 017 714
- MARCH J.: "ADVANCED ORGANIC CHEMISTRY FOURTH EDITION" 1992 , JOHN WILEY & SONS , NEW YORK XP002181318 Seite 353 -Seite 354

## Beschreibung

Die vorliegende Erfindung betrifft ein Verfahren zur Herstellung von alkylverbrückten Ligandsystemen und Übergangsmetallverbindungen.

Die Herstellung von Metallocenen ist an sich bekannt (US 4,752,597; US 5,017,714; EP-A-320762; EP-A-416815; EP-A-537686; EP-A- 669340; H.H. Brintzinger et al.; Angew. Chem., 107 (1995), 1255; H.H. Brintzinger et al., J. Organomet. Chem. 232 (1982), 233). Dazu können zum Beispiel Indenyl-Metall-Verbindungen mit Halogeniden von Übergangsmetallen wie Titan, Zirkonium und Hafnium umgesetzt werden.

Metallocene können, gegebenenfalls in Kombination mit einem oder mehreren Co-Katalysatoren, als Katalysatorkomponente für die Polymerisation und Copolymerisation von Olefinen verwendet werden. Insbesondere werden als Katalysatorvorstufen halogenhaltige Metallocene eingesetzt, die sich beispielsweise durch ein Aluminoxan in einen polymerisationsaktiven kationischen Metallocenkomplex überführen lassen (EP-A-129368).

Die Polymerisationseigenschaften einer Metallocenverbindung lassen sich durch das Ligandsystem steuern. Derivate des Zirkonocendichlorids, in denen die beiden substituierten Indenylgruppen über eine Brücke miteinander verbunden sind, können aufgrund ihrer konformativen Starrheit als Katalysatoren zur isospezifischen Polymerisation von Olefinen eingesetzt werden. Durch die Variation dieser Brücke können die Eigenschaften des Katalysators und des resultierenden Polymers gezielt gesteuert werden (Chemical Reviews 2000, volume 100, Issue 4). Neben Dialkylsilandiyl-verbrückten Metallocenen sind auch Ethyliden-verbrückte Metallocene bekannt (DE 19713549).

Zwar wurden bereits mehrere Synthesewege zur Darstellung einfacher gering substituierter Kohlenstoff-verbrückter Ligandsysteme beschrieben, jedoch lassen sich diese nicht auf die Darstellung hochsubstituierter Bisindenyl-Liganden übertragen.

Eine weitere Schwierigkeit bei der Synthese Kohlenstoff-verbrückter, hochsubstituierter Metallocene liegt in der Metallierung des Liganden. Die Synthese dieser Komplexe ist somit kompliziert und zeichnet sich durch schlechte Ausbeuten aus, was unmittelbar zu erhöhten Kosten und zu einer begrenzten kommerziellen Nutzbarkeit führt.

In Chem. Ber. 1994, 127, 2417-2419 wird die Synthese von 1,2-Bis(fluorenyl)-1-phenylethane-zirconiumdichlorid beschrieben. Dieser unsubstituierte Alkyl-verbrückte Metallkomplex wir in einer Ausbeute von 13% erhalten.

In Organometallics 1992, 11, 1869-1876 wird die Synthese von 2,3-Butylene-1,1'-bis(indenyl)zirconiumdichlorid beschrieben. Dieser am Indenylliganden unsubstituierte Metallkomplex wird mit 18%iger Ausbeute erhalten.

Es bestand somit die Aufgabe einen neuen synthetischen Zugang zu dieser Verbindungsklasse zu finden, der die Nachteile des beschriebenen Standes der Technik vermeidet und die gewünschten Verbindungen in besseren Ausbeuten liefert.

Überraschenderweise wurde nun gefunden, daß ausgehend von hochsubstituierten Inden-Derivaten und alternativen Verbrückungsreagenzien die Ligandsysteme in hohen Ausbeuten erhalten werden können. Der Einsatz einer alternativen Metallquelle führt in hohen Ausbeuten und Reinheiten zu den Zielverbindungen. Der hier beschriebene Syntheseweg zeichnet sich durch eine hohe Gesamtausbeute und hohe Reinheiten aus.

Gegenstand der vorliegenden Erfindung ist somit ein Verfahren zur Herstellung von Verbindungen der Formel I: 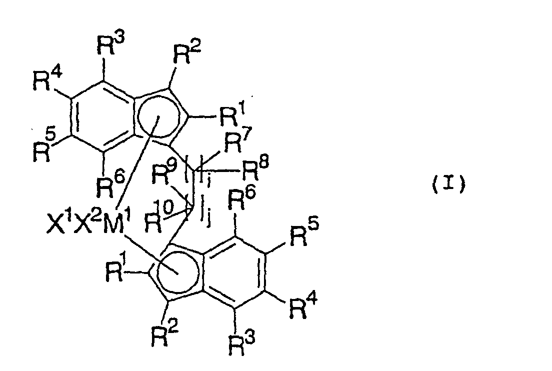 worin
- M¹: gleich Ti, Zr oder Hf ist, besonders bevorzugt Zirkonium,
- R¹: gleich oder verschieden sind und eine C₁-C₂₀ - kohlenstoffhaltige Gruppe, bevorzugt C₁-C₁₈-Alkyl, wie Methyl, Ethyl, n-Propyl, n-Butyl, n-Pentyl, n-Hexyl, n-Heptyl, n-Octyl, n-Nonyl, n-Decyl, Cyclopentyl oder Cyclohexyl, Isopropyl, Isobutyl, Isopentyl, Isohexyl, tert-Butyl, C₂-C₁₀-Alkenyl, C₃-C₁₅-Alkylalkenyl, C₆-C₁₈-Aryl, C₄-C₁₈-Heteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇₋C₂₀-Alkylaryl bedeuten kann, und
- R²: gleich oder verschieden sind und Wasserstoff, eine C₁-C₂₀ - kohlenstoffhaltige Gruppe, bevorzugt C₁-C₁₈-Alkyl, wie Methyl, Ethyl, n-Propyl, n-Butyl, n-Pentyl, n-Hexyl, n-Heptyl, n-Octyl, n-Nonyl, n-Decyl, Cyclopentyl oder Cyclohexyl, Isopropyl, Isobutyl, Isopentyl, Isohexyl, tert-Butyl, C₂-C₁₀-Alkenyl, C₃-C₁₅-Alkylalkenyl, C₆-C₁₈-Aryl, C₄-C₁₈-Heteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇₋C₂₀-Alkylaryl bedeuten, wobei R¹ mit R² auch ein mono- oder polycyclisches Ringsystem bilden kann, und
- R³: gleich oder verschieden sind und ein Wasserstoffatom oder eine C₆-C₁₈-Arylgruppe, die gegebenenfalls substituiert sein kann, insbesondere Phenyl, 4-Methylphenyl, 4-Ethylphenyl, 4-Propylphenyl, 4-Isopropylphenyl, 4-tert-Butylphenyl, 4-Methoxyphenyl, 1-Naphthyl, 9-Anthracenyl, 3,5-di-tert-Butylphenyl, 4-Trifluormethylphenyl, C₅-C₁₈-Heteroaryl, C₇-C₂₀-Arylalkyl, C₇-C₂₀-Alkylaryl, fluorhaltiges C₆-C₁₈-Aryl, fluorhaltiges C₇-C₂₀-Arylalkyl oder fluorhaltiges C₇-C₂₀-Alkylaryl ist und zwei Reste R³ mit R⁴ ein mono- oder polycyclisches Ringssystem bilden können, wobei insbesondere 4,5-Benzindenyl bevorzugt ist,
- R⁴: gleich oder verschieden sind und entweder ein Wasserstoffatom bedeutet oder mit R³ ein mono- oder polycyclisches Ringsystem bildet,
- R⁵, R⁶: jeweils gleich oder verschieden sind und ein Wasserstoffatom, eine C₁-C₂₀ - kohlenstoffhaltige Gruppe, bevorzugt C₂-C₁₀-Alkenyl, C₃-C₁₅-Alkylalkenyl, C₆-C₁₈-Aryl, C₄-C₁₈-Heteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇-C₂₀-Alkylaryl bedeuten.
- R⁷, R⁸, R⁹, R¹⁰: gleich oder verschieden sind und Wasserstoffatome, eine C₁-C₂₀- kohlenstoffhaltige Gruppe, z.B. Methyl, Ethyl, n-Propyl, n-Butyl, n-Pentyl, n-Hexyl, n-Heptyl, n-Octyl, n-Nonyl, n-Decyl, Cyclopentyl oder Cyclohexyl, Isopropyl, Isobutyl, Isopentyl, Isohexyl, tert-Butyl,. C₂-C₁₀-Alkenyl, C₃-C₁₅-Alkylalkenyl, C₆-C₁₈-Aryl, C₄-C₁₈-Heteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇₋C₂₀-Alkylaryl bedeuten, und untereinander ein mono- oder bicyclisches Ringsystem, z. B. cis - oder trans-cyclopentyl, cyclohexyl, cycloheptyl, cyclooctyl, cyclononyl, cyclodecyl bilden können,
- i: gleich 1 bis 10, bevorzugt 1 bis 8, ganz besonders bevorzugt 1 bis 3 ist und
- j: gleich 1 bis 10, bevorzugt 1 bis 8, ganz besonders bevorzugt 1 bis 3 ist und
- X¹, X²: gleich oder verschieden sein können und Halogenatome, insbesondere Chlor, Alkylgruppen, insbesondere Methyl, oder substituierte oder unsubstituierte Phenolate sind. X¹ kann auch mit einem oder mehreren Resten X¹ oder X² ein monooder polycyclisches Ringsystem bilden.

Trotz gleicher Indizierung können die beiden Indenylreste unterschiedlich substituiert sein, wie z.B. für den ersten Indenylrest ist R³ gleich Phenyl und im zweiten Indenylrest ist R³ gleich Naphthyl.

Dazu wird eine Verbindung der Formel II 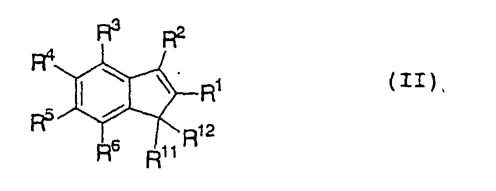 worin
- R¹, R², R³, R⁴, R⁵ und R⁶: die gleiche Bedeutung wie oben genannt haben und
- R¹¹: ein Wasserstoffatom und
- R¹²: Wasserstoff oder eine gegen ein Metall austauschbare Gruppe, bevorzugt Chlor, Brom oder Iod, ist
ist, zunächst mit einer Verbindung der Formel III

M²R¹³ (III)

worin
- M²: Lithium ist und
- R¹³: ein Wasserstoffatom, ein C₁-C₂₀ - kohlenstoffhaltige Gruppe, bevorzugt C₁-C₁₈-Alkyl, wie Methyl, Ethyl, n-Butyl, n-Hexyl, sec-Butyl, tert-Butyl, Cyclohexyl oder Cyclooctyl, C₂-C₁₀-Alkenyl, C₃-C₁₅-Alkylalkenyl, C₆-C₁₈-Aryl, C₆-C₁₈-Aryl, wie Phenyl, Tolyl Xylyl, C₅-C₁₈-Heteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇₋C₂₀-Alkylaryl ist, bevorzugt C₁-C₁₈-Alkyl, wie Methyl, Ethyl, n-Butyl, n-Hexyl, tert.-Butyl, C₆-C₁₈-Aryl, wie Phenyl, Tolyl Xylyl, besonders bevorzugt Methyl, Ethyl, n-Butyl, n-Hexyl, tert.-Butyl, Phenyl und Tolyl ist
in einem Lösungsmittel umgesetzt. Die Verbindungen der Formel III können in Lösung, als Reinsubstanz oder als Suspension eingesetzt oder in situ aus einem Metall M² wie z.B. Lithium und einem Alkyloder Arylhalogenid generiert werden. Nicht einschränkende Beispiele für die bevorzugten Verbindungen der Formel III sind:
Methyllithium, Ethyllithium, n-Propyllithium, i-Propyllithium, n-Butyllithium, s-Butyllithium, t-Butyllithium, n-Pentyllithium, s-Pentyllithium, t-Pentyllithium, n-Hexyllithium, s-Hexyllithium, t-Hexyllithium, Heptyllithium, Octyllithium, Nonyllithium, Decyllithium, Phenyllithium, o-Tolyllithium, m-Tolyllithium, p-Tolyllithium, Xylyllithium, Methylnatrium, Ethylnatrium, n-Propylnatrium, i-Propylnatrium, n-Butylnatrium, s-Butylnatrium, t-Butylnatrium, n-Pentylnatrium, s-Pentylnatrium, t-Pentylnatrium, n-Hexylnatrium, s-Hexylnatrium, t-Hexylnatrium, Heptylnatrium, Octylnatrium, Nonylnatrium, Decylnatrium, Phenylnatrium, o-Tolylnatrium, m-Tolylnatrium, p-Tolylnatrium, Xylylnatrium, Methylkalium, Ethylkalium, n-Propylkalium, i-Propylkalium, n-Butylkalium, s-Butylkalium, t-Butylkalium, n-Pentylkalium, s-Pentylkalium, t-Pentylkalium, n-Hexylkalium, s-Hexylkalium, t-Hexylkalium, Heptylkalium, Octylkalium, Nonylkalium, Decylkalium, Phenylkalium, o-Tolylkalium, m-Tolylkalium, p-Tolylkalium, Xylylkalium, Methylmagnesiumbromid, Ethylmagnesiumbromid, n-Propylmagnesiumbromid, i-Propylmagnesiumbromid, n-Butylmagnesiumbromid, s-Butylmagnesiumbromid, t-Butylmagnesiumbromid, n-Pentylmagnesiumbromid, s-Pentylmagnesiumbromid, t-Pentylmagnesiumbromid, n-Hexylmagnesiumbromid, s-Hexylmagnesiumbromid, t-Hexylmagnesiumbromid, Heptylmagnesiumbromid, Octylmagnesiumbromid, Nonylmagnesiumbromid, Decylmagnesiumbromid, Phenylmagnesiumbromid, o-Tolylmagnesiumbromid, m-Tolylmagnesiumbromid, p-Tolylmagnesiumbromid, Xylylmagnesiumbromid, Dimethylmagnesium, Diethylmagnesium, Di-n-propylmagnesium, Di-i-propylmagnesium, Di-n-butylmagnesium, s-Dibutylmagnesium, Di-t-butylmagnesium, Di-n-pentylmagnesium, s-Dipentylmagnesium, Di-t-pentylmagnesium, Di-n-hexylmagnesium, s-Dihexylmagnesium, Di-t-hexylmagnesium, Diheptylmagnesium, Dioctylmagnesium, Dinonylmagnesium, Didecylmagnesium, Diphenylmagnesium, o-Ditolylmagnesium, m-Ditolylmagnesium, p-Ditolylmagnesium, Butyloctylmagnesium und Dixylylmagnesium.

Zunächst können eine oder mehrere Verbindung der Formel II in einem Reaktionsgefäß vorgelegt werden. Die Verbindungen können entweder in einem Lösungsmittel gelöst oder suspendiert sein, oder aber auch in Substanz vorliegen. Als Lösungsmittel dienen sowohl polare aprotische Lösungsmittel (Cycloalkyl-, Dialkyl-, Alkyl-Aryl-, Diarylether) wie z. B. Dimethylether, Diethylether, Dipropylether, Diisopropylether, Di-n-butylether, Di-s-butylether, Di-t-butylether, t-Butylmethylether, Dimethoxyethan, Diethoxyethan, Tetrahydrofuran, Tetrahydropyran, Anisol, Diphenylether etc. als auch unpolare aprotische Lösungsmittel (aliphatische oder aromatische Kohlenwasserstoffe) wie z.B. n-Pentan, Isopentan, n-Hexan, n-Heptan, Cyclohexan, Isododekan, n-Octan, n-Nonan, n-Decan, Petrolether, Toluol, Benzol, o-Xylol, m-Xylol, p-xylol, 1,2,3-Trimethylbenzol, 1,2,4-Trimethylbenzol, 1,2,5-Trimethylbenzol, 1,3,5-Trimethylbenzol, Ethylbenzol, Propylbenzol etc. Mischungen von diesen. Die Vorlage erfolgt bei Temperaturen zwischen -100°C und 300°C, bevorzugt zwischen -78°C und 100°C, insbesondere bevorzugt bei Temperaturen zwischen -40°C und 40°C. Die Verbindung der Formel II sollte vorteilhafterweise in gelöster Form oder als Suspension vorliegen. Anschließend kann die Zugabe einer oder mehrerer Verbindungen der Formel III erfolgen. Diese können ebenfalls in einem Lösungsmittel gelöst oder suspendiert sein aber auch in Substanz vorliegen. Als Lösungsmittel dienen die bereits oben beschriebenen oder Mischungen dieser.

Die Zugabe kann über einen Zeitraum von 1 Minute bis zu 96 Stunden erfolgen. Bevorzugt ist eine Zugabe innerhalb von 10 Minuten bis zu 8 Stunden. Die Temperatur der Vorlage liegt bei der Zugabe zwischen -100°C und 200°C. Bevorzugt sind Temperaturen zwischen -80°C und 150°C. Besonders bevorzugt sind Temperaturen zwischen -40°C und 40°C. Die Temperatur wird so gewählt, daß zumindest ein Reaktionspartner in flüssiger Phase vorliegt. Die anschließende Reaktionstemperatur liegt in einem bevorzugten Temperaturbereich zwischen -40 °C und 100°C. Desweiteren kann die Umsetzung bei Normaldruck durchgeführt, sie kann jedoch auch bei erhöhtem Druck durchgeführt werden, was jedoch entsprechende Reaktoren voraussetzt. Das stöchiometrische Verhältnis, in dem Verbindungen der Formel II und III zusammengegeben werden, liegt zwischen 1 : 1000 und 1 : 0,011. Bevorzugt ist ein stöchiometrisches Verhältnis zwischen Verbindungen der Formel II und III zwischen 1 :100 und 1 : 11. Besonders bevorzugt ist eine stöchiometrische Umsetzung, bezogen auf die Verbindungen der Formel II und III. Die Reaktion kann sowohl in der hier beschriebenen Reihenfolge, als auch in der inversen Reihenfolge, d.h. durch Zugabe von Verbindungen der Formel II in gelöster Form, Suspension, oder Reinsubstanz zu Verbindungen der Formel III in gelöster Form, Suspension, oder Reinsubstanz durchgeführt werden. Die Reaktionsführung erfolgt analog zu den hier beschriebenen Bedingungen.

Aus der Umsetzung von einer Verbindung der Formel II mit der Verbindung der Formel III resultiert eine Verbindung der Formel IV 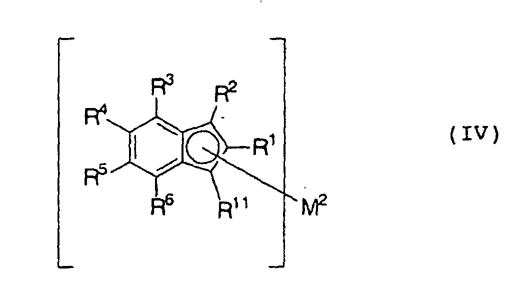 worin
- R¹, R², R³, R⁴, R⁵, R⁶, R¹¹: die gleiche Bedeutung wie oben ge-. nannt haben und
- M²: die gleiche Bedeutung wie oben genannt hat.

Verbindungen der Formel IV können entweder isoliert werden, oder in dem gleichen oder einem anderen Lösungsmittel direkt mit einer Verbindung der Formel V 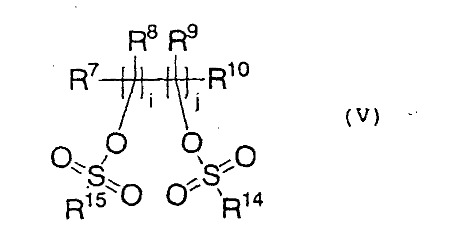 umgesetzt werden, worin
- R⁷, R⁸, R⁹ und R¹⁰: die gleiche Bedeutung wie oben genannt haben und
- R¹⁴, R¹⁵: Trifluormethyl bedeuten,
- i: gleich 1 bis 10, bevorzugt 1 bis 8, ganz besonders bevorzugt 1 bis 3 ist und
- j: gleich 1 bis 10, bevorzugt 1 bis 8, ganz besonders bevorzugt 1 bis 3 ist.

Zunächst können eine oder mehrere Verbindung der Formel IV in einem Reaktionsgefäß vorgelegt werden.

Die Verbindungen können entweder in einem Lösungsmittel gelöst oder suspendiert sein, oder aber auch in Substanz vorliegen. Als Lösungsmittel dienen sowohl polare aprotische Lösungsmittel (Cycloalkyl-, Dialkyl-, Alkyl-Aryl-, Diarylether) wie z. B. Dimethylformamid, Dimethylacetamid, Dimethylsulfoxid, Dimethylether, Diethylether, Dipropylether, Diisopropylether, Di-n-butylether, Di-s-butylether, Di-t-butylether, t-Butylmethylether, Dimethoxyethan, Diethoxyethan, Tetrahydrofuran, Tetrahydropyran, Anisol, Diphenylether etc. als auch unpolare aprotische Lösungsmittel (aliphatische oder aromatische Kohlenwasserstoffe) wie z.B. n-Pentan, Isopentan, n-Hexan, n-Heptan, Cyclohexan, Isododekan, n-Octan, n-Nonan, n-Decan, Petrolether, Toluol, Benzol, o-Xylol, m-Xylol, p-Xylol, 1,2,3-Trimethylbenzol, 1,2,4-Trimethylbenzol, 1,2,5-Trimethylbenzol, 1,3,5-Trimethylbenzol, Ethylbenzol, Propylbenzol etc. Mischungen von diesen. Die Vorlage erfolgt bei Temperaturen zwischen -100°C und 300°C, bevorzugt zwischen -78°C und 100°C, insbesondere bevorzugt bei Temperaturen zwischen -40°C und 40°C. Die Verbindung der Formel IV sollte vorteilhafterweise in gelöster Form oder als Suspension vorliegen. Anschließend kann die Zugabe einer oder mehrerer Verbindungen der Formel V erfolgen. Diese können ebenfalls in einem Lösungsmittel gelöst oder suspendiert sein aber auch in Substanz vorliegen. Als Lösungsmittel dienen die bereits oben beschriebenen oder Mischungen dieser.

Die Zugabe kann über einen Zeitraum von 1 Minute bis zu 96 Stunden erfolgen. Bevorzugt ist eine Zugabe innerhalb von 10 Minuten bis zu 8 Stunden. Die Temperatur der Vorlage liegt bei der Zugabe zwischen -100°C und 200°C. Bevorzugt sind Temperaturen zwischen -80°C und 150°C. Besonders bevorzugt sind Temperaturen zwischen -40°C und 40°C. Die Temperatur wird so gewählt, daß zumindest ein Reaktionspartner in flüssiger Phase vorliegt. Die anschließende Reaktionstemperatur liegt in einem bevorzugten Temperaturbereich zwischen -40 °C und 100°C. Desweiteren kann die Umsetzung bei Normaldruck durchgeführt, sie kann jedoch auch bei erhöhtem Druck durchgeführt werden, was jedoch entsprechende Reaktoren voraussetzt. Das stöchiometrische Verhältnis in dem Verbindungen der Formel IV und V zusammengegeben werden liegt zwischen 1 : 10 und 1 : 0,05. Bevorzugt ist ein stöchiometrisches Verhältnis zwischen Verbindungen der Formel IV und V zwischen 1 : 2 und 1 : 0,25. Besonders bevorzugt ist eine stöchiometrische Umsetzung bezogen auf die Verbindungen der Formel IV und V. Die Reaktion kann auch sowohl in der hier beschriebenen Reihenfolge, als auch in der inversen Reihenfolge, d.h. durch Zugabe von Verbindungen der Formel IV in gelöster Form, Suspension, oder Reinsubstanz zu Verbindungen der Formel V in gelöster Form, Suspension, oder Reinsubstanz durchgeführt werden. Die Reaktionsführung erfolgt analog zu den hier beschriebenen Bedingungen. Die Aufarbeitung des Reaktionsgemisches erfolgt durch Hydrolyse und Entfernung wasserlöslicher Nebenprodukte. Das Produkt VI kann entweder durch Chromatographie bzw. Umkristallisation gereinigt oder ohne weitere Reinigung umgesetzt werden.

Aus der Umsetzung von einer Verbindung der Formel IV mit einer Verbindung der Formel V resultiert ein Ligandensystem der Formel VI 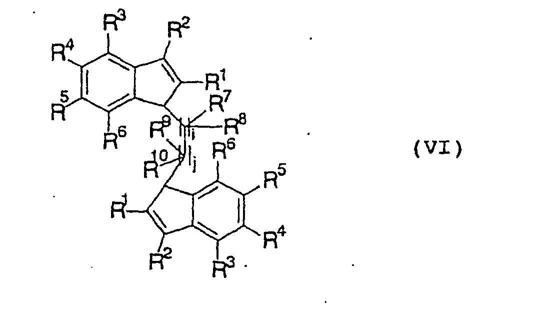 worin
- R¹, R², R³, R⁴, R⁵, R⁶, R⁷, R⁸, R⁹, R¹⁰: die gleiche Bedeutung wie oben genannt haben und
- i und j: die gleiche Bedeutung wie oben genannt haben.

Bei den Verbindungen der Formel VI kann es sich um Gemische verschiedener Doppelbindungsisomere handeln.

Zur Synthese der Übergangsmetallkomplexe der Formel VII wird eine Verbindung der Formel VI mit einer Verbindung der Formel III umgesetzt. Die Verbindungen der Formel III können in Lösung, als Reinsubstanz oder als Suspension eingesetzt oder in situ aus einem Metall M² wie z.B. Lithium und einem Alkyl- oder Arylhalogenid generiert werden.

Zunächst können eine oder mehrere Verbindung der Formel VI in einem Reaktionsgefäß vorgelegt werden. Die Verbindungen können entweder in einem Lösungsmittel gelöst oder suspendiert sein, oder aber auch in Substanz vorliegen. Als Lösungsmittel dienen sowohl polare aprotische Lösungsmittel (Cycloalkyl-, Dialkyl-, Alkyl-Aryl-, Diarylether) wie z. B. Dimethylether, Diethylether, Dipropylether, Diisopropylether, Di-n-butylether, Di-s-butylether, Di-t-butylether, t-Butylmethylether, Dimethoxyethan, Diethoxyethan, Tetrahydrofuran, Tetrahydropyran, Anisol, Diphenylether etc. als auch unpolare aprotische Lösungsmittel (aliphatische oder aromatische Kohlenwasserstoffe) wie z.B. n-Pentan, Isopentan, n-Hexan, n-Heptan, Cyclohexan, Isododekan, n-Octan, n-Nonan, n-Decan, Petrolether, Toluol, Benzol, o-Xylol, m-Xylol, p-Xylol, 1,2,3-Trimethylbenzol, 1,2,4-Trimethylbenzol, 1,2,5-Trimethylbenzol, 1,3,5-Trimethylbenzol, Ethylbenzol, Propylbenzol etc. Mischungen von diesen. Die Vorlage erfolgt bei Temperaturen zwischen -100°C und 300°C, bevorzugt zwischen -78°C und 100°C, insbesondere bevorzugt bei Temperaturen zwischen -40°C und 40°C. Die Verbindung der Formel VI sollte vorteilhafterweise in gelöster Form oder als Suspension vorliegen. Anschließend kann die Zugabe einer oder mehrerer Verbindungen der Formel III erfolgen. Diese können ebenfalls in einem Lösungsmittel gelöst oder suspendiert sein aber auch in Substanz vorliegen. Als Lösungsmittel dienen die bereits oben beschriebenen oder Mischungen dieser.

Die Zugabe kann über einen Zeitraum von 1 Minute bis zu 96 Stunden erfolgen. Bevorzugt ist eine Zugabe innerhalb von 10 Minuten bis zu 8 Stunden. Die Temperatur der Vorlage liegt bei der Zugabe zwischen -100°C und 200°C. Bevorzugt sind Temperaturen zwischen -80°C und 150°C. Besonders bevorzugt sind Temperaturen zwischen -40°C und 40°C. Die Temperatur wird so gewählt, daß zumindest ein Reaktionspartner in flüssiger Phase vorliegt. Die anschließende Reaktionstemperatur liegt in einem bevorzugten Temperaturbereich zwischen -40 °C und 100°C. Desweiteren kann die Umsetzung bei Normaldruck durchgeführt, sie kann jedoch auch bei erhöhtem Druck durchgeführt werden, was jedoch entsprechende Reaktoren voraussetzt. Das stöchiometrische Verhältnis, in dem Verbindungen der Formel VI und III zusammengegeben werden, liegt zwischen 1 : 10 und 1 : 1. Bevorzugt ist ein stöchiometrisches Verhältnis zwischen Verbindungen der Formel VI und III zwischen 1 :3 und 1 : 1,8. Besonders bevorzugt ist ein stöchiometrisches Verhältnis von den Verbindungen der Formeln VI zu den Verbindungen der Formel III zwischen 1 : 2,2 und 1 : 2. Die Reaktion kann sowohl in der hier beschriebenen Reihenfolge, als auch in der inversen Reihenfolge, d.h. durch Zugabe von Verbindungen der Formel VI in gelöster Form, Suspension, oder Reinsubstanz zu Verbindungen der Formel III in gelöster Form, Suspension, oder Reinsubstanz durchgeführt werden. Die Reaktionsführung erfolgt analog zu den hier beschriebenen Bedingungen.

Aus der Umsetzung von einer Verbindung der Formel VI mit einer Verbindung der Formel III resultiert ein metalliertes Ligandensystem der Formel VII 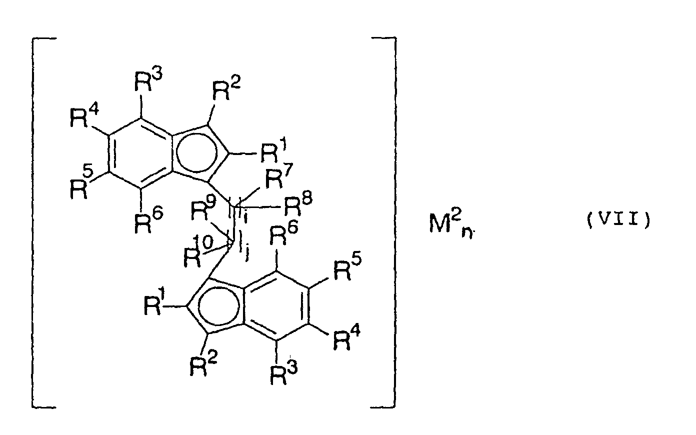 worin
- R¹, R², R³, R⁴, R⁵, R⁶, R⁷, R⁸, R⁹, R¹⁰, und R¹¹: die gleiche Bedeutung wie oben genannt haben und
- M²: die gleiche Bedeutung wie oben genannt hat und
- n: 2 ist und
- i und j: die gleiche Bedeutung wie oben genannt haben.

Die Verbindung der Formel VII kann analog zu DE 19739946 isoliert oder in situ dargestellt und umgesetzt werden mit einer Verbindung der Formel VIII

M¹(X¹)_{f}(X²)_{g}(D)ₐ (VIII)

worin
- M¹: Titan, Zirkonium oder Hafnium ist, ganz besonders bevorzugt Zirkonium, und
- D: ein Donorlösungsmittel ist, das mindestens ein Sauerstoffatom oder ein Schwefelatom, bevorzugt 1 bis 2 Sauerstoffatome oder Schwefelatome, ganz besonders bevorzugt 1 bis 2 Sauerstoffatome enthält und
- X¹ und X²: gleich oder verschieden sind und die gleiche Bedeutung wie oben genannt haben, bevorzugt Halogenatome oder Phenolate sind, besonders bevorzugt Chlor, Brom oder Iod, ganz besonders bevorzugt Chlor sind, und
- f: eine Zahl zwischen 0 und 4, bevorzugt 1 und 4 ist, und
- g: eine Zahl zwischen 0 und 4, bevorzugt 1 und 4 ist, und die Summe aus f + g der Oxidationsstufe des Metallions entspricht,
- a: eine Zahl zwischen 1 und 100, bevorzugt 1 und 10, besonders bevorzugt 1 und 2 ist.

Bevorzugt steht der Rest D für einen Ether, cyclischen Ether, ein Acetal wie Tetrahydrofuran, Tetrahydropyran, Diethylether, Dimethoxymethan, Diethoxymethan, Dipropoxymethan, 1,2-Dimethoxyethan, 1,2-Diethoxyethan, 1,2-Dipropoxyethan, 1,3-Dimethoxypropan; 1,3-Diethoxypropan, 1,3-Dipropoxypropan, 1,2-Dimethoxybenzol, 1,2-Diethoxybenzol und/oder 1,2-Dipropoxybenzol.

Bevorzugt ist R¹, R² gleich und steht für eine C₁-C₂₀ - kohlenstoffhaltige Gruppe, bevorzugt C₁-C₁₈-Alkyl, wie Methyl, Ethyl, n-Propyl, n-Butyl, n-Pentyl, n-Hexyl, n-Heptyl, n-Octyl, n-Nonyl, n-Decyl, Cyclopentyl oder Cyclohexyl, Isopropyl, Isobutyl, Isopentyl, Isohexyl, tert-Butyl, C₂-C₁₀-Alkenyl, C₃-C₁₅-Alkylalkenyl, C₆-C₁₈-Aryl, C₄-C₁₈-Heteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇₋C₂₀-Alkylaryl, wobei R¹ mit R² auch ein mono- oder polycyclisches Ringsystem bilden kann.

Erläuternde, jedoch nicht einschränkende Beispiele für Verbindungen der Formel VIII die mit dem erfindungsgemäßen Verfahren herstellbar sind, sind:
ZrCl₄(Tetrahydrofuran)₂; ZrCl₄(Tetrahydropyran)₂; ZrCl₄(Diethylether)₂; ZrCl₄(Dimethoxymethan); ZrCl₄(Diethoxymethan); ZrCl₄(Dipropoxymethan); ZrCl₄(1,2-Dimethoxyethan); ZrCl₄(1,2-Diethoxyethan); ZrCl₄(1,2-Dipropoxyethan); ZrCl₄(1,3-Dimethoxypropan); ZrCl₄(1,3-Diethoxypropan); ZrCl₄(1,3-Dipropoxypropan); ZrCl₄(1,2-Dimethoxybenzol); ZrCl₄(1,2-Diethoxybenzol); ZrCl₄(1,2-Dipropoxybenzol); TiCl₄(Tetrahydrofuran)₂; TiCl₄(Tetrahydropyran)₂; TiCl₄(Diethylether)₂; TiCl₄(Dimethoxymethan); TiCl₄(Diethoxymethan); TiCl₄(Dipropoxymethan); TiCl₄(1,2-Dimethoxyethan); TiCl₄(1,2-Diethoxyethan); TiCl₄(1,2-Dipropoxyethan); TiCl₄(1,3-Dimethoxypropan); TiCl₄(1,3-Diethoxypropan); TiCl₄(1,3-Dipropoxypropan); TiCl₄(1,2-Dimethoxybenzol); TiCl₄(1,2-Diethoxybenzol); TiCl₄(1,2-Dipropoxybenzol); HfCl₄(Tetrahydrofuran)₂; HfCl₄(Tetrahydropyran)₂; HfCl₄(Diethylether)₂; HfCl₄(Dimethoxymethan); HfCl₄(Diethoxymethan); HfCl₄(Dipropoxymethan); HfCl₄(1,2-Dimethoxyethan); HfCl₄(1,2-Diethoxyethan); HfCl₄(1,2-Dipropoxyethan); HfCl₄(1,3-Dimethoxypropan); HfCl₄(1,3-Diethoxypropan); HfCl₄(1,3-Dipropoxypropan); HfCl₄(1,2-Dimethoxybenzol); HfCl₄(1,2-Diethoxybenzol); HfCl₄(1,2-Dipropoxybenzol).

Zur Synthese der Übergangsmetallkomplexe der Formel I wird eine Verbindung der Formel VII mit einer Verbindung der Formel VIII umgesetzt. Die Verbindungen der Formel VIII können in Lösung, als Reinsubstanz oder als Suspension eingesetzt oder in situ aus einem Metallhalogenid der Formel M¹X_{f}X_{g} wie z.B. Zirkontetrachlorid und einem Donorlösungsmittel Dₐ generiert werden.

Zunächst können eine oder mehrere Verbindung der Formel VII in einem Reaktionsgefäß vorgelegt werden. Die Verbindungen können entweder in einem Lösungsmittel gelöst oder suspendiert sein, oder aber auch in Substanz vorliegen. Als Lösungsmittel dienen sowohl polare aprotische Lösungsmittel (Cycloalkyl-, Dialkyl-, Alkyl-Aryl-, Diarylether) wie z. B. Dimethylether, Diethylether, Dipropylether, Diisopropylether, Di-n-butylether, Di-s-butylether, Di-t-butylether, t-Butylmethylether, Dimethoxyethan, Diethoxyethan, Tetrahydrofuran, Tetrahydropyran, Anisol, Diphenylether etc. als auch unpolare aprotische Lösungsmittel (aliphatische oder aromatische Kohlenwasserstoffe) wie z. B. n-Pentan, Isopentan, n-Hexan, n-Heptan, Cyclohexan, Isododekan, n-Octan, n-Nonan, n-Decan, Petrolether, Toluol, Benzol, o-Xylol, m-Xylol, p-Xylol, 1,2,3-Trimethylbenzol, 1,2,4-Trimethylbenzol, 1,2,5-Trimethylbenzol, 1,3,5-Trimethylbenzol, Ethylbenzol, Propylbenzol etc. und Mischungen von diesen. Die Vorlage erfolgt bei Temperaturen zwischen -100°C und 300°C, bevorzugt zwischen -78°C und 100°C, insbesondere bevorzugt bei Temperaturen zwischen -40°C und 40°C. Die Verbindung der Formel VII sollte vorteilhafterweise in gelöster Form oder als Suspension vorliegen. Anschließend kann die Zugabe einer oder mehrerer Verbindungen der Formel VIII erfolgen. Diese können ebenfalls in einem Lösungsmittel gelöst oder suspendiert sein aber auch in Substanz vorliegen. Als Lösungsmittel dienen die bereits oben beschriebenen oder Mischungen dieser.

Die Zugabe kann über einen Zeitraum von 1 Minute bis zu 96 Stunden erfolgen. Bevorzugt ist eine Zugabe innerhalb von 10 Minuten bis zu 8 Stunden. Die Temperatur der Vorlage liegt bei der Zugabe zwischen -100°C und 200°C. Bevorzugt sind Temperaturen zwischen -80°C und 150°C. Besonders bevorzugt sind Temperaturen zwischen -40°C und 40°C. Die Temperatur wird so gewählt, daß zumindest ein Reaktionspartner in flüssiger Phase vorliegt. Die anschließende Reaktionstemperatur liegt in einem bevorzugten Temperaturbereich zwischen -40 °C und 100°C. Desweiteren kann die Umsetzung bei Normaldruck durchgeführt, sie kann jedoch auch bei erhöhtem Druck durchgeführt werden, was jedoch entsprechende Reaktoren voraussetzt. Das stöchiometrische Verhältnis in dem Verbindungen der Formel VII und VIII zusammengegeben werden liegt zwischen 1 : 10 und 1 : 0, 1. Bevorzugt ist ein stöchiometrisches Verhältnis zwischen Verbindungen der Formel VII und VIII zwischen 1 : 5 und 1 : 0,5. Besonders bevorzugt ist ein stöchiometrisches Verhältnis von den Verbindungen der Formeln VII zu den Verbindungen der Formel VIII von 1 : 1. Die Reaktion kann auch sowohl in der hier beschriebenen Reihenfolge, als auch in der inversen Reihenfolge, d.h. durch Zugabe von Verbindungen der Formel VII in gelöster Form, Suspension, oder Reinsubstanz zu Verbindungen der Formel VIII in gelöster Form, Suspension, oder Reinsubstanz durchgeführt werden. Die Reaktionsführung erfolgt analog zu den hier beschriebenen Bedingungen.

Aus der Umsetzung von einer Verbindung der Formel VII mit einer Verbindung der Formel VIII resultiert eine Übergangsmetallverbindung der Formel I.

Bevorzugt sind Verbindungen der Formel I, bei denen die jeweiligen Reste R¹ und auch die jeweiligen Reste R³ gleich sind.

Erläuternde, die Erfindung jedoch nicht einschränkende Beispiele für Metallocene, die über die hier beschriebene Synthesesequenz hergestellt werden können sind:
1,2-Ethandiyl-bis-(2-methylindenyl)-zirkoniumdichlorid
1,2-Ethandiyl-bis-(2-methyl-4,5-benzindenyl)-zirkoniumdichlorid
1,2-Ethandiyl-bis-(2-methyl-4-phenylindenyl)-zirkoniumdichlorid
1,2-Ethandiyl-bis-(2-methyl-4-(4'-methylphenyl)-indenyl)-zirkoniumdichlorid
1,2-Ethandiyl-bis-(2-methyl-4-(4'-ethylphenyl)-indenyl)-zirkoniumdichlorid
1,2-Ethandiyl-bis-(2-methyl-4-(4'-propylphenyl)-indenyl)-zirkoniumdichlorid
1,2-Ethandiyl-bis-(2-methyl-4-(4'-isopropylphenyl)-indenyl)-zirkoniumdichlorid
1,2-Ethandiyl-bis-(2-methyl-4-(4'-tert-butylphenyl)-indenyl)-zirkoniumdichlorid
1,2-Ethandiyl-bis-(2-methyl-4-(4'-methoxyphenyl)-indenyl)-zirkoniumdichlorid
1,2-Ethandiyl-bis-(2-methyl-4-(1'-naphthyl)-indenyl)-zirkoniumdichlorid
1,2-Ethandiyl-bis-(2-methyl-4-(9'-anthracenyl)-indenyl)-zirkonium dichlorid
1,2-Ethandiyl-bis-(2-methyl-4-(3',5'-di-tert-butylphenyl)-indenyl )-zirkoniumdichlorid
1,2-Ethandiyl-bis-(2-methyl-4-(4'-trifluormethylphenyl)-indenyl)-zirkoniumdichlorid
1,2-Ethandiyl-bis-(9'-fluorenyl)-zirkoniumdichlorid
1,2-Ethandiyl-bis-(2-ethylindenyl)-zirkoniumdichlorid
1,2-Ethandiyl-bis-(2-ethyl-4,5-benzindenyl)-zirkoniumdichlorid
1,2-Ethandiyl-bis-(2-ethyl-4-phenylindenyl)-zirkoniumdichlorid
1,2-Ethandiyl-bis-(2-ethyl-4-(4'-methylphenyl)-indenyl)-zirkoniumdichlorid
1,2-Ethandiyl-bis-(2-ethyl-4-(4'-ethylphenyl)-indenyl)-zirkoniumdichlorid
1,2-Ethandiyl-bis-(2-ethyl-4-(4'-propylphenyl)-indenyl)-zirkoniumdichlorid
1,2-Ethandiyl-bis-(2-ethyl-4-(4'-isopropylphenyl)-indenyl)-zirkon iumdichlorid
1,2-Ethandiyl-bis-(2-ethyl-4-(4'-tert-butylphenyl)-indenyl)-zirkoniumdichlorid
1,2-Ethandiyl-bis-(2-ethyl-4-(4'-methoxyphenyl)-indenyl)-zirkoniumdichlorid
1,2-Ethandiyl-bis-(2-ethyl-4-(1'-naphthyl)-indenyl)-zirkoniumdich lorid
1,2-Ethandiyl-bis-(2-ethyl-4-(9'-anthracenyl)-indenyl)-zirkoniumdichlorid
1,2-Ethandiyl-bis-(2-ethyl-4-(3',5'-di-tert-butylphenyl)-indenyl) -zirkoniumdichlorid
1,2-Ethandiyl-bis-(2-ethyl-4-(4'-trifluormethylphenyl)-indenyl) -zirkoniumdichlorid
1,2-Ethandiyl-bis-(2-propylindenyl)-zirkoniumdichlorid
1,2-Ethandiyl-bis-(2-propyl-4,5-benzindenyl)-zirkoniumdichlorid
1,2-Ethandiyl-bis-(2-propyl-4-phenylindenyl)-zirkoniumdichlorid
1,2-Ethandiyl-bis-(2-propyl-4-(4'-methylphenyl)-indenyl)-zirkoniu mdichlorid
1,2-Ethandiyl-bis-(2-propyl-4-(4'-ethylphenyl)-indenyl)-zirkoniumdichlorid
1,2-Ethandiyl-bis-(2-propyl-4-(4'-propylphenyl)-indenyl)-zirkoniu mdichlorid
1,2-Ethandiyl-bis-(2-propyl-4-(4'-isopropylphenyl)-indenyl)-zirkoniumdichlorid
1,2-Ethandiyl-bis-(2-propyl-4-(4'-tert-butylphenyl)-indenyl)-zirkoniumdichlorid.
1,2-Ethandiyl-bis-(2-propyl-4-(4'-methoxyphenyl)-indenyl)-zirkoniumdichlorid
1,2-Ethandiyl-bis-(2-propyl-4-(1'-naphthyl)-indenyl)-zirkoniumdichlorid
1,2-Ethandiyl-bis-(2-propyl-4-(9'-anthracenyl)-indenyl)-zirkonium dichlorid
1,2-Ethandiyl-bis-(2-propyl-4-(3',5'-di-tert-butylphenyl)-indenyl )-zirkoniumdichlorid
1,2-Ethandiyl-bis-(2-propyl-4-(4'-trifluormethylphenyl)-indenyl)-zirkoniumdichlorid
1,2-Ethandiyl-bis-(2-isopropylindenyl)-zirkoniumdichlorid
1,2-Ethandiyl-bis-(2-isopropyl-4,5-benzindenyl)-zirkoniumdichlorid
1,2-Ethandiyl-bis-(2-isopropyl-4-phenylindenyl)-zirkoniumdichlorid
1,2-Ethandiyl-bis-(2-isopropyl-4-(4'-methylphenyl)-indenyl)-zirkoniumdichlorid
1,2-Ethandiyl-bis-(2-isopropyl-4-(4'-ethylphenyl)-indenyl)-zirkoniumdichlorid
1,2-Ethandiyl-bis-(2-isopropyl-4-(4'-propylphenyl)-indenyl)-zirkoniumdichlorid
1,2-Ethandiyl-bis-(2-isopropyl-4-(4'-isopropylphenyl)-indenyl) -zirkoniumdichlorid
1,2-Ethandiyl-bis-(2-isopropyl-4-(4'-tert-butylphenyl)-indenyl) -zirkoniumdichlorid
1,2-Ethandiyl-bis-(2-isopropyl-4-(4'-methoxyphenyl)-indenyl)-zirkoniumdichlorid
1,2-Ethandiyl-bis-(2-isopropyl-4-(1'-naphthyl)-indenyl)-zirkoniumdichlorid
1,2-Ethandiyl-bis-(2-isopropyl-4-(9'-anthracenyl)-indenyl)-zirkon iumdichlorid
1,2-Ethandiyl-bis-(2-isopropyl-4-(3',5'-di-tert-butylphenyl)-indenyl)-zirkoniumdichlorid
1,2-Ethandiyl-bis-(2-isopropyl-4-(4'-trifluormethylphenyl)-indenyl)-zirkoniumdichlorid
1,2-Ethandiyl-bis-(2-isobutylindenyl)-zirkoniumdichlorid
1,2-Ethandiyl-bis-(2-isobutyl-4,5-benzindenyl)-zirkoniumdichlorid
1,2-Ethandiyl-bis-(2-isobutyl-4-phenylindenyl)-zirkoniumdichlorid
1,2-Ethandiyl-bis-(2-isobutyl-4-(4'-methylphenyl)-indenyl)-zirkoniumdichlorid
1,2-Ethandiyl-bis-(2-isobutyl-4-(4'-ethylphenyl)-indenyl)-zirkoniumdichlorid
1,2-Ethandiyl-bis-(2-isobutyl-4-(4'-propylphenyl)-indenyl)-zirkon iumdichlorid
1,2-Ethandiyl-bis-(2-isobutyl-4-(4'-isopropylphenyl)-indenyl)-zir koniumdichlorid
1,2-Ethandiyl-bis-(2-isobutyl-4-(4'-tert-butylphenyl)-indenyl) -zirkoniumdichlorid
1,2-Ethandiyl-bis-(2-isobutyl-4-(4'-methoxyphenyl)-indenyl)-zirkoniumdichlorid
1,2-Ethandiyl-bis-(2-isobutyl-4-(1'-naphthyl)-indenyl)-zirkoniumdichlorid
1,2-Ethandiyl-bis-(2-isobutyl-4-(9'-anthracenyl)-indenyl)-zirkoniumdichlorid
1,2-Ethandiyl-bis-(2-isobutyl-4-(3',5'-di-tert-butylphenyl)-indenyl)-zirkoniumdichlorid
1,2-Ethandiyl-bis-(2-isobutyl-4-(4'-trifluormethylphenyl)-indenyl)-zirkoniumdichlorid
1,2-Ethandiyl-bis-(2-butylindenyl)-zirkoniumdichlorid
1,2-Ethandiyl-bis-(2-butyl-4,5-benzindenyl)-zirkoniumdichlorid
1,2-Ethandiyl-bis-(2-butyl-4-phenylindenyl)-zirkoniumdichlorid
1,2-Ethandiyl-bis-(2-butyl-4-(4'-methylphenyl)-indenyl)-zirkoniumdichlorid
1,2-Ethandiyl-bis-(2-butyl-4-(4'-ethylphenyl)-indenyl)-zirkoniumdichlorid
1,2-Ethandiyl-bis-(2-butyl-4-(4'-propylphenyl)-indenyl)-zirkonium dichlorid
1,2-Ethandiyl-bis-(2-butyl-4-(4'-isopropylphenyl)-indenyl)-zirkon iumdichlorid
1,2-Ethandiyl-bis-(2-butyl-4-(4'-tert-butylphenyl)-indenyl)-zirkoniumdichlorid
1,2-Ethandiyl-bis-(2-butyl-4-(4'-methoxyphenyl)-indenyl)-zirkoniumdichlorid
1,2-Ethandiyl-bis-(2-butyl-4-(1'-naphthyl)-indenyl)-zirkoniumdichlorid
1,2-Ethandiyl-bis-(2-butyl-4-(9'-anthracenyl)-indenyl)-zirkoniumdichlorid
1,2-Ethandiyl-bis-(2-butyl-4-(3',5'-di-tert-butylphenyl)-indenyl) -zirkoniumdichlorid
1,2-Ethandiyl-bis-(2-butyl-4-(4'-trifluormethylphenyl)-indenyl) -zirkoniumdichlorid
1,2-Ethandiyl-bis-(2-tert-butylindenyl)-zirkoniumdichlorid
1,2-Ethandiyl-bis-(2-tert-butyl-4,5-benzindenyl)-zirkoniumdichlorid
1,2-Ethandiyl-bis-(2-tert-butyl-4-phenylindenyl)-zirkoniumdichlorid
1,2-Ethandiyl-bis-(2-tert-butyl-4-(4'-methylphenyl)-indenyl)-zirkoniumdichlorid
1,2-Ethandiyl-bis-(2-tert-butyl-4-(4'-ethylphenyl)-indenyl)-zirkoniumdichlorid
1,2-Ethandiyl-bis-(2-tert-butyl-4-(4'-propylphenyl)-indenyl)-zirkoniumdichlorid
1,2-Ethandiyl-bis-(2-tert-butyl-4-(4'-isopropylphenyl)-indenyl) -zirkoniumdichlorid
1,2-Ethandiyl-bis-(2-tert-butyl-4-(4'-tert-butylphenyl)-indenyl) -zirkoniumdichlorid
1,2-Ethandiyl-bis-(2-tert-butyl-4-(4'-methoxyphenyl)-indenyl)-zir koniumdichlorid
1,2-Ethandiyl-bis-(2-tert-butyl-4-(1'-naphthyl)-indenyl)-zirkoniumdichlorid
1,2-Ethandiyl-bis-(2-tert-butyl-4-(9'-anthracenyl)-indenyl)-zirko niumdichlorid
1,2-Ethandiyl-bis-(2-tert-butyl-4-(3',5'-di-tert-butylphenyl)-indenyl)-zirkoniumdichlorid
1,2-Ethandiyl-bis-(2-tert-butyl-4-(4'-trifluormethylphenyl)-indenyl)-zirkoniumdichlorid
1,2-Ethandiyl-bis-(2-cyclopentylindenyl)-zirkoniumdichlorid
1,2-Ethandiyl-bis-(2-cyclopentyl-4,5-benzindenyl)-zirkoniumdichlorid
1,2-Ethandiyl-bis-(2-cyclopentyl-4-phenylindenyl)-zirkoniumdichlorid
1,2-Ethandiyl-bis-(2-cyclopentyl-4-(4'-methylphenyl)-indenyl)-zir koniumdichlorid
1,2-Ethandiyl-bis-(2-cyclopentyl-4-(4'-ethylphenyl)-indenyl)-zirkoniumdichlorid
1,2-Ethandiyl-bis-(2-cyclopentyl-4-(4'-propylphenyl)-indenyl)-zir koniumdichlorid
1,2-Ethandiyl-bis-(2-cyclopentyl-4-(4'-isopropylphenyl)-indenyl)-zirkoniumdichlorid
1,2-Ethandiyl-bis-(2-cyclopentyl-4-(4'-tert-butylphenyl)-indenyl) -zirkoniumdichlorid
1,2-Ethandiyl-bis-(2-cyclopentyl-4-(4'-methoxyphenyl)-indenyl) -zirkoniumdichlorid
1,2-Ethandiyl-bis-(2-cyclopentyl-4-(1'-naphthyl)-indenyl)-zirkoniumdichlorid
1,2-Ethandiyl-bis-(2-cyclopentyl-4-(9'-anthracenyl)-indenyl)-zirk oniumdichlorid
1,2-Ethandiyl-bis-(2-cyclopentyl-4-(3',5'-di-tert-butylphenyl)-in denyl)-zirkoniumdichlorid
1,2-Ethandiyl-bis-(2-cyclopentyl-4-(4'-trifluormethylphenyl)-indenyl)-zirkoniumdichlorid
1,2-Ethandiyl-bis-(2-cyclohexylindenyl)-zirkoniumdichlorid
1,2-Ethandiyl-bis-(2-cyclohexyl-4,5-benzindenyl)-zirkoniumdichlorid
1,2-Ethandiyl-bis-(2-cyclohexyl-4-phenylindenyl)-zirkoniumdichlorid
1,2-Ethandiyl-bis -(2-cyclohexyl-4-(4'-methylphenyl)-indenyl)-zirkoniumdichlorid
1,2-Ethandiyl-bis-(2-cyclohexyl-4-(4'-ethylphenyl)-indenyl)-zirkoniumdichlorid
1,2-Ethandiyl-bis-(2-cyclohexyl-4-(4'-propylphenyl)-indenyl)-zirkoniumdichlorid
1,2-Ethandiyl-bis-(2-cyclohexyl-4-(4-isopropylphenyl)-indenyl) -zirkoniumdichlorid
1,2-Ethandiyl-bis-(2-cyclohexyl-4-(4'-tert-butylphenyl)-indenyl)-zirkoniumdichlorid
1,2-Ethandiyl-bis-(2-cyclohexyl-4-(4'-methoxyphenyl)-indenyl)-zir koniumdichlorid
1,2-Ethandiyl-bis-(2-cyclohexyl-4-(1'-naphthyl)-indenyl)-zirkoniumdichlorid
1,2-Ethandiyl-bis-(2-cyclohexyl-4-(9'-anthracenyl)-indenyl)-zirkoniumdichlorid
1,2-Ethandiyl-bis-(2-cyclohexyl-4-(3',5'-di-tert-butylphenyl)-indenyl)-zirkoniumdichlorid
1,2-Ethandiyl-bis-(2-cyclohexyl-4-(4'-trifluormethylphenyl)-indenyl)-zirkoniumdichlorid
1,2-Ethandiyl-bis-(2-methylindenyl)-titandichlorid
1,2-Ethandiyl-bis-(2-methyl-4,5-benzindenyl)-titandichlorid
1,2-Ethandiyl-bis-(2-methyl-4-phenylindenyl)-titandichlorid
1,2-Ethandiyl-bis-(2-methyl-4-(4'-methylphenyl)-indenyl)-titandichlorid
1,2-Ethandiyl-bis-(2-methyl-4-(4'-ethylphenyl)-indenyl)-titandichlorid
1,2-Ethandiyl-bis-(2-methyl-4-(4'-propylphenyl)-indenyl)-titandichlorid
1,2-Ethandiyl-bis-(2-methyl-4-(4'-isopropylphenyl)-indenyl)-titandichlorid
1,2-Ethandiyl-bis-(2-methyl-4-(4'-tert-butylphenyl)-indenyl)-titandichlorid
1,2-Ethandiyl-bis-(2-methyl-4-(4'-methoxyphenyl)-indenyl)-titandichlorid
1,2-Ethandiyl-bis-(2-methyl-4-(1'-naphthyl)-indenyl)-titandichlorid
1,2-Ethandiyl-bis-(2-methyl-4-(9'-anthracenyl)-indenyl)-titandichlorid
1,2-Ethandiyl-bis-(2-methyl-4-(3',5'-di-tert-butylphenyl)-indenyl)-titandichlorid
1,2-Ethandiyl-bis-(2-methyl-4-(4'-trifluormethylphenyl)-indenyl)-titandichlorid
1,2-Ethandiyl-bis-(9'-fluorenyl)-titandichlorid
1,2-Ethandiyl-bis-(2-ethylindenyl)-titandichlorid
1,2-Ethandiyl-bis-(2-ethyl-4,5-benzindenyl)-titandichlorid
1,2-Ethandiyl-bis-(2-ethyl-4-phenylindenyl)-titandichlorid
1,2-Ethandiyl-bis-(2-ethyl-4-(4'-methylphenyl)-indenyl)-titandichlorid
1,2-Ethandiyl-bis-(2-ethyl-4-(4'-ethylphenyl)-indenyl)-titandichlorid
1,2-Ethandiyl-bis-(2-ethyl-4-(4'-propylphenyl)-indenyl)-titandichlorid
1,2-Ethandiyl-bis-(2-ethyl-4-(4'-isopropylphenyl)-indenyl)-titandichlorid
1,2-Ethandiyl-bis-(2-ethyl-4-(4'-tert-butylphenyl)-indenyl)-titandichlorid
1,2-Ethandiyl-bis-(2-ethyl-4-(4'-methoxyphenyl)-indenyl)-titandichlorid
1,2-Ethandiyl-bis-(2-ethyl-4-(1'-naphthyl)-indenyl)-titandichlorid
1,2-Ethandiyl-bis-(2-ethyl-4-(9'-anthracenyl)-indenyl)-titandichlorid
1,2-Ethandiyl-bis-(2-ethyl-4-(3',5'-di-tert-butylphenyl)-indenyl) -titandichlorid
1,2-Ethandiyl-bis-(2-ethyl-4-(4'-trifluormethylphenyl)-indenyl) -titandichlorid
1,2-Ethandiyl-bis-(2-propylindenyl)-titandichlorid
1,2-Ethandiyl-bis-(2-propyl-4,5-benzindenyl)-titandichlorid
1,2-Ethandiyl-bis-(2-propyl-4-phenylindenyl)-titandichlorid
1,2-Ethandiyl-bis-(2-propyl-4-(4'-methylphenyl)-indenyl)-titandichlorid
1,2-Ethandiyl-bis-(2-propyl-4-(4'-ethylphenyl)-indenyl)-titandichlorid
1,2-Ethandiyl-bis-(2-propyl-4-(4'-propylphenyl)-indenyl)-titandichlorid
1,2-Ethandiyl-bis-(2-propyl-4-(4'-isopropylphenyl)-indenyl)-titandichlorid
1,2-Ethandiyl-bis-(2-propyl-4-(4'-tert-butylphenyl)-indenyl)-titandichlorid
1,2-Ethandiyl-bis-(2-propyl-4-(4'-methoxyphenyl)-indenyl)-titandichlorid
1,2-Ethandiyl-bis-(2-propyl-4-(1'-naphthyl)-indenyl)-titandichlorid
1,2-Ethandiyl-bis-(2-propyl-4-(9'-anthracenyl)-indenyl)-titandichlorid
1,2-Ethandiyl-bis-(2-propyl-4-(3',5'-di-tert-butylphenyl)-indenyl)-titandichlorid
1,2-Ethandiyl-bis-(2-propyl-4-(4'-trifluormethylphenyl)-indenyl)-titandichlorid
1,2-Ethandiyl-bis-(2-isopropylindenyl)-titandichlorid
1,2-Ethandiyl-bis-(2-isopropyl-4,5-benzindenyl)-titandichlorid
1,2-Ethandiyl-bis-(2-isopropyl-4-phenylindenyl)-titandichlorid
1,2-Ethandiyl-bis-(2-isopropyl-4-(4'-methylphenyl)-indenyl)-titandichlorid
1,2-Ethandiyl-bis-(2-isopropyl-4-(4'-ethylphenyl)-indenyl)-titandichlorid
1,2-Ethandiyl-bis-(2-isopropyl-4-(4'-propylphenyl)-indenyl)-titandichlorid
1,2-Ethandiyl-bis-(2-isopropyl-4-(4'-isopropylphenyl)-indenyl)-titandichlorid
1,2-Ethandiyl-bis-(2-isopropyl-4-(4'-tert-butylphenyl)-indenyl)-titandichlorid
1,2-Ethandiyl-bis-(2-isopropyl-4-(4'-methoxyphenyl)-indenyl)-titandichlorid
1,2-Ethandiyl-bis-(2-isopropyl-4-(1'-naphthyl)-indenyl)-titandichlorid
1,2-Ethandiyl-bis-(2-isopropyl-4-(9'-anthracenyl)-indenyl)-titandichlorid
1,2-Ethandiyl-bis-(2-isopropyl-4-(3',5'-di-tert-butylphenyl)-inde nyl)-titandichlorid
1,2-Ethandiyl-bis-(2-isopropyl-4-(4'-trifluormethylphenyl)-indenyl)-titandichlorid
1,2-Ethandiyl-bis-(2-isobutylindenyl)-titandichlorid
1,2-Ethandiyl-bis-(2-isobutyl-4,5-benzindenyl)-titandichlorid
1,2-Ethandiyl-bis-(2-isobutyl-4-phenylindenyl)-titandichlorid
1,2-Ethandiyl-bis-(2-isobutyl-4-(4'-methylphenyl)-indenyl)-titandichlorid
1,2-Ethandiyl-bis-(2-isobutyl-4-(4'-ethylphenyl)-indenyl)-titandichlorid
1,2-Ethandiyl-bis-(2-isobutyl-4-(4'-propylphenyl)-indenyl)-titandichlorid
1,2-Ethandiyl-bis-(2-isobutyl-4-(4'-isopropylphenyl)-indenyl)-titandichlorid
1,2-Ethandiyl-bis-(2-isobutyl-4-(4'-tert-butylphenyl)-indenyl)-titandichlorid
1,2-Ethandiyl-bis-(2-isobutyl-4-(4'-methoxyphenyl)-indenyl)-titandichlorid
1,2-Ethandiyl-bis-(2-isobuty1-4-(1'-naphthyl)-indenyl)-titandichlorid
1,2-Ethandiyl-bis-(2-isobutyl-4-(9'-anthracenyl)-indenyl)-titandichlorid
1,2-Ethandiyl-bis-(2-isobutyl-4-(3',5'-di-tert-butylphenyl)-indenyl)-titandichlorid
1,2-Ethandiyl-bis-(2-isobutyl-4-(4'-trifluormethylphenyl)-indenyl)-titandichlorid
1,2-Ethandiyl-bis-(2-butylindenyl)-titandichlorid
1,2-Ethandiyl-bis-(2-butyl-4,5-benzindenyl)-titandichlorid
1,2-Ethandiyl-bis-(2-butyl-4-phenylindenyl)-titandichlorid
1,2-Ethandiyl-bis-(2-butyl-4-(4'-methylphenyl)-indenyl)-titandichlorid
1,2-Ethandiyl-bis-(2-butyl-4-(4'-ethylphenyl)-indenyl)-titandichlorid
1,2-Ethandiyl-bis-(2-butyl-4-(4'-propylphenyl)-indenyl)-titandichlorid
1,2-Ethandiyl-bis-(2-butyl-4-(4'-isopropylphenyl)-indenyl)-titandichlorid
1,2-Ethandiyl-bis-(2-butyl-4-(4'-tert-butylphenyl)-indenyl)-titandichlorid
1,2-Ethandiyl-bis-(2-butyl-4-(4'-methoxyphenyl)-indenyl)-titandichlorid
1,2-Ethandiyl-bis-(2-butyl-4-(1'-naphthyl)-indenyl)-titandichlorid
1,2-Ethandiyl-bis-(2-butyl-4-(9'-anthracenyl)-indenyl)-titandichlorid
1,2-Ethandiyl-bis-(2-butyl-4-(3',5'-di-tert-butylphenyl)-indenyl) -titandichlorid
1,2-Ethandiyl-bis-(2-butyl-4-(4'-trifluormethylphenyl)-indenyl)-titandichlorid
1,2-Ethandiyl-bis-(2-tert-butylindenyl)-titandichlorid
1,2-Ethandiyl-bis-(2-tert-butyl-4,5-benzindenyl)-titandichlorid
1,2-Ethandiyl-bis-(2-tert-butyl-4-phenylindenyl)-titandichlorid
1,2-Ethandiyl-bis-(2-tert-butyl-4-(4'-methylphenyl)-indenyl)-titandichlorid
1,2-Ethandiyl-bis-(2-tert-butyl-4-(4'-ethylphenyl)-indenyl)-titandichlorid
1,2-Ethandiyl-bis-(2-tert-butyl-4-(4'-propylphenyl)-indenyl)-titandichlorid
1,2-Ethandiyl-bis-(2-tert-butyl-4-(4'-isopropylphenyl)-indenyl) -titandichlorid
1,2-Ethandiyl-bis-(2-tert-butyl-4-(4'-tert-butylphenyl)-indenyl) -titandichlorid
1,2-Ethandiyl-bis-(2-tert-butyl-4-(4'-methoxyphenyl)-indenyl) -titandichlorid
1,2-Ethandiyl-bis-(2-tert-butyl-4-(1'-naphthyl)-indenyl)-titandichlorid
1,2-Ethandiyl-bis-(2-tert-butyl-4-(9'-anthracenyl)-indenyl)-titandichlorid
1,2-Ethandiyl-bis-(2-tert-butyl-4-(3',5'-di-tert-butylphenyl)-indenyl)-titandichlorid
1,2-Ethandiyl-bis-(2-tert-butyl-4-(4'-trifluormethylphenyl)-indenyl)-titandichlorid
1,2-Ethandiyl-bis-(2-cyclopentylindenyl)-titandichlorid
1,2-Ethandiyl-bis-(2-cyclopentyl-4,5-benzindenyl)-titandichlorid
1,2-Ethandiyl-bis-(2-cyclopentyl-4-phenylindenyl)-titandichlorid
1,2-Ethandiyl-bis-(2-cyclopentyl-4-(4'-methylphenyl)-indenyl)-titandichlorid
1,2-Ethandiyl-bis-(2-cyclopentyl-4-(4'-ethylphenyl)-indenyl)-titandichlorid
1,2-Ethandiyl-bis-(2-cyclopentyl-4-(4'-propylphenyl)-indenyl)-titandichlorid
1,2-Ethandiyl-bis-(2-cyclopentyl-4-(4'-isopropylphenyl)-indenyl)-titandichlorid
1,2-Ethandiyl-bis-(2-cyclopentyl-4-(4'-tert-butylphenyl)-indenyl) -titandichlorid
1,2-Ethandiyl-bis-(2-cyclopentyl-4-(4'-methoxyphenyl)-indenyl)-ti tandichlorid
1,2-Ethandiyl-bis-(2-cyclopentyl-4-(1'-naphthyl)-indenyl)-titandi chlorid
1,2-Ethandiyl-bis-(2-cyclopentyl-4-(9'-anthracenyl)-indenyl)-tita ndichlorid
1,2-Ethandiyl-bis-(2-cyclopentyl-4-(3',5'-di-tert-butylphenyl)-in denyl)-titandichlorid
1,2-Ethandiyl-bis-(2-cyclopentyl-4-(4'-trifluormethylphenyl)-inde nyl)-titandichlorid
1,2-Ethandiyl-bis-(2-cyclohexylindenyl)-titandichlorid
1,2-Ethandiyl-bis-(2-cyclohexyl-4,5-benzindenyl)-titandichlorid
1,2-Ethandiyl-bis-(2-cyclohexyl-4-phenylindenyl)-titandichlorid
1,2-Ethandiyl-bis-(2-cyclohexyl-4-(4'-methylphenyl)-indenyl)-titandichlorid
1,2-Ethandiyl-bis-(2-cyclohexyl-4-(4'-ethylphenyl)-indenyl)-titandichlorid
1,2-Ethandiyl-bis-(2-cyclohexyl-4-(4'-propylphenyl)-indenyl)-tita ndichlorid
1,2-Ethandiyl-bis-(2-cyclohexyl-4-(4'-isopropylphenyl)-indenyl) -titandichlorid
1,2-Ethandiyl-bis-(2-cyclohexyl-4-(4'-tert-butylphenyl)-indenyl).titandichlorid
1,2-Ethandiyl-bis-(2-cyclohexyl-4-(4'-methoxyphenyl)-indenyl) -titandichlorid
1,2-Ethandiyl-bis-(2-cyclohexyl-4-(1'-naphthyl)-indenyl)-titandichlorid
1,2-Ethandiyl-bis-(2-cyclohexyl-4-(9'-anthracenyl)-indenyl)-titandichlorid
1,2-Ethandiyl-bis-(2-cyclohexyl-4-(3',5'-di-tert-butylphenyl)-ind enyl)-titandichlorid
1,2-Ethandiyl-bis-(2-cyclohexyl-4-(4'-trifluormethylphenyl)-inden yl)-titandichlorid
1,2-Ethandiyl-bis-(2-methylindenyl)-hafniumdichlorid
1,2-Ethandiyl-bis-(2-methyl-4,5-benzindenyl)-hafniumdichlorid
1,2-Ethandiyl-bis-(2-methyl-4-phenylindenyl)-hafniumdichlorid
1,2-Ethandiyl-bis-(2-methyl-4-(4'-methylphenyl)-indenyl)-hafniumdichlorid
1,2-Ethandiyl-bis-(2-methyl-4-(4'-ethylphenyl)-indenyl)-hafniumdichlorid
1,2-Ethandiyl-bis-(2-methyl-4-(4'-propylphenyl)-indenyl)-hafniumdichlorid
1,2-Ethandiyl-bis-(2-methyl-4-(4'-isopropylphenyl)-indenyl)-hafniumdichlorid
1,2-Ethandiyl-bis-(2-znethyl-4-(4'-tert-butylphenyl)-indenyl)-hafniumdichlorid
1,2-Ethandiyl-bis-(2-methyl-4-(4'-methoxyphenyl)-indenyl)-hafnium dichlorid
1,2 -Ethandiyl-bis-(2-methyl-4-(1'-naphthyl)-indenyl)-hafniumdichl orid
1,2-Ethandiyl-bis-(2-methyl-4-(9'-anthracenyl)-indenyl)-hafniumdichlorid
1,2-Ethandiyl-bis-(2-methyl-4-(3',5'-di-tert-butylphenyl)-indenyl )-hafniumdichlorid
1,2-Ethandiyl-bis-(2-methyl-4-(4'-trifluormethylphenyl)-indenyl)-hafniumdichlorid
1,2-Ethandiyl-bis-(9'-fluorenyl)-hafniumdichlorid
1,2-Ethandiyl-bis-(2-ethylindenyl)-hafniumdichlorid
1,2-Ethandiyl-bis-(2-ethyl-4,5-benzindenyl)-hafniumdichlorid
1,2-Ethandiyl-bis-(2-ethyl-4-phenylindenyl)-hafniumdichlorid
1,2-Ethandiyl-bis-(2-ethyl-4-(4'-methylphenyl)-indenyl)-hafniumdi chlorid
1,2 -Ethandiyl-bis-(2-ethyl-4-(4'-ethylphenyl)-indenyl)-hafniumdichlorid
1,2-Ethandiyl-bis-(2-ethyl-4-(4'-propylphenyl)-indenyl)-hafniumdi chlorid
1,2-Ethandiyl-bis-(2-ethyl-4-(4'-isopropylphenyl)-indenyl)-hafniumdichlorid
1,2-Ethandiyl-bis-(2-ethyl-4-(4'-tert-butylphenyl)-indenyl)-hafniumdichlorid
1,2-Ethandiyl-bis-(2-ethyl-4-(4'-methoxyphenyl)-indenyl)-hafniumdichlorid
1,2-Ethandiyl-bis-(2-ethyl-4-(1'-naphthyl)-indenyl)-hafniumdichlorid
1,2-Ethandiyl-bis-(2-ethyl-4-(9'-anthracenyl)-indenyl)-hafniumdichlorid
1,2-Ethandiyl-bis-(2-ethyl-4-(3',5'-di-tert-butylphenyl)-indenyl) -hafniumdichlorid
1,2-Ethandiyl-bis-(2-ethyl-4-(4'-trifluormethylphenyl)-indenyl) -hafniumdichlorid
1,2-Ethandiyl-bis-(2-propylindenyl)-hafniumdichlorid
1,2-Ethandiyl-bis-(2-propyl-4,5-benzindenyl)-hafniumdichlorid
1,2-Ethandiyl-bis-(2-propyl-4-phenylindenyl)-hafniumdichlorid
1,2-Ethandiyl-bis-(2-propyl-4-(4'-methylphenyl)-indenyl)-hafniumdichlorid
1,2-Ethandiyl-bis-(2-propyl-4-(4'-ethylphenyl)-indenyl)-hafniumdichlorid
1,2-Ethandiyl-bis-(2-propyl-4-(4'-propylphenyl)-indenyl)-hafniumdichlorid
1,2-Ethandiyl-bis-(2-propyl-4-(4'-isopropylphenyl)-indenyl)-hafniumdichlorid
1,2-Ethandiyl-bis-(2-propyl-4-(4'-tert-butylphenyl)-indenyl)-hafniumdichlorid
1,2-Ethandiyl-bis-(2-propyl-4-(4'-methoxyphenyl)-indenyl)-hafniumdichlorid
1,2-Ethandiyl-bis-(2-propyl-4-(1'-naphthyl)-indenyl)-hafniumdichl orid
1,2-Ethandiyl-bis-(2-propyl-4-(9'-anthracenyl)-indenyl)-hafniumdichlorid
1,2-Ethandiyl-bis-(2-propyl-4-(3',5'-di-tert-butylphenyl)-indenyl )-hafniumdichlorid
1,2-Ethandiyl-bis-(2-propyl-4-(4'-trifluormethylphenyl)-indenyl)-hafniumdichlorid
1,2-Ethandiyl-bis-(2-isopropylindenyl)-hafniumdichlorid
1,2-Ethandiyl-bis-(2-isopropyl-4,5-benzindenyl)-hafniumdichlorid
1,2-Ethandiyl-bis-(2-isopropyl-4-phenylindenyl)-hafniumdichlorid
1,2-Ethandiyl-bis-(2-isopropyl-4-(4'-methylphenyl)-indenyl)-hafniumdichlorid
1,2-Ethandiyl-bis-(2-isopropyl-4-(4'-ethylphenyl)-indenyl)-hafniumdichlorid
1,2-Ethandiyl-bis-(2-isopropyl-4-(4'-propylphenyl)-indenyl)-hafniumdichlorid
1,2-Ethandiyl-bis-(2-isopropyl-4-(4'-isopropylphenyl)-indenyl)-ha fniumdichlorid
1,2-Ethandiyl-bis-(2-isopropyl-4-(4'-tert-butylphenyl)-indenyl) -hafniumdichlorid
1,2-Ethandiyl-bis-(2-isopropyl-4-(4'-methoxyphenyl)-indenyl)-hafniumdichlorid
1,2-Ethandiyl-bis-(2-isopropyl-4-(1'-naphthyl)-indenyl)-hafniumdichlorid
1,2-Ethandiyl-bis-(2-isopropyl-4-(9'-anthracenyl)-indenyl)-hafniumdichlorid
1,2-Ethandiyl-bis-(2-isopropyl-4-(3',5'-di-tert-butylphenyl)-indenyl)-hafniumdichlorid
1,2-Ethandiyl-bis-(2-isopropyl-4-(4'-trifluormethylphenyl)-indenyl)-hafniumdichlorid
1,2-Ethandiyl-bis-(2-isobutylindenyl)-hafniumdichlorid
1,2-Ethandiyl-bis-(2-isobutyl-4,5-benzindenyl)-hafniumdichlorid
1,2-Ethandiyl-bis-(2-isobutyl-4-phenylindenyl)-hafniumdichlorid
1,2-Ethandiyl-bis-(2-isobutyl-4-(4'-methylphenyl)-indenyl)-hafniumdichlorid
1,2-Ethandiyl-bis-(2-isobutyl-4-(4'-ethylphenyl)-indenyl)-hafniumdichlorid
1,2-Ethandiyl-bis-(2-isobutyl-4-(4'-propylphenyl)-indenyl)-hafniumdichlorid
1,2-Ethandiyl-bis-(2-isobutyl-4-(4'-isopropylphenyl)-indenyl)-haf niumdichlorid
1,2-Ethandiyl-bis-(2-isobutyl-4-(4'-tert-butylphenyl)-indenyl) -hafniumdichlorid
1,2-Ethandiyl-bis-(2-isobutyl-4-(4'-methoxyphenyl)-indenyl)-hafniumdichlorid
1,2-Ethandiyl-bis-(2-isobutyl-4-(1'-naphthyl)-indenyl)-hafniumdichlorid
1,2-Ethandiyl-bis-(2-isobutyl-4-(9'-anthracenyl)-indenyl)-hafnium dichlorid
1,2-Ethandiyl-bis-(2-isobutyl-4-(3',5'-di-tert-butylphenyl)-inden yl)-hafniumdichlorid
1,2-Ethandiyl-bis-(2-isobutyl-4-(4'-trifluormethylphenyl)-indenyl)-hafniumdichlorid
1,2-Ethandiyl-bis-(2-butylindenyl)-hafniumdichlorid
1,2-Ethandiyl-bis-(2-butyl-4,5-benzindenyl)-hafniumdichlorid
1,2-Ethandiyl-bis-(2-butyl-4-phenylindenyl)-hafniumdichlorid
1,2-Ethandiyl-bis-(2-butyl-4-(4'-methylphenyl)-indenyl)-hafniumdichlorid
1,2-Ethandiyl-bis-(2-butyl-4-(4'-ethylphenyl)-indenyl)-hafniumdichlorid
1,2-Ethandiyl-bis-(2-butyl-4-(4'-propylphenyl)-indenyl)-hafniumdichlorid
1,2-Ethandiyl-bis-(2-butyl-4-(4'-isopropylphenyl)-indenyl)-hafniumdichlorid
1,2-Ethandiyl-bis-(2-butyl-4-(4'-tert-butylphenyl)-indenyl)-hafniumdichlorid
1,2-Ethandiyl-bis-(2-butyl-4-(4'-methoxyphenyl)-indenyl)-hafniumdichlorid
1,2-Ethandiyl-bis-(2-butyl-4-(1'-naphthyl)-indenyl)-hafniumdichlorid
1,2-Ethandiyl-bis-(2-butyl-4-(9'-anthracenyl)-indenyl)-hafniumdichlorid
1,2-Ethandiyl-bis-(2-butyl-4-(3',5'-di-tert-butylphenyl)-indenyl) -hafniumdichlorid
1,2-Ethandiyl-bis-(2-butyl-4-(4'-trifluormethylphenyl)-indenyl) -hafniumdichlorid
1,2-Ethandiyl-bis-(2-tert-butylindenyl)-hafniumdichlorid
1,2-Ethandiyl-bis-(2-tert-butyl-4,5-benzindenyl)-hafniumdichlorid
1,2-Ethandiyl-bis-(2-tert-butyl-4-phenylindenyl)-hafniumdichlorid
1,2-Ethandiyl-bis-(2-tert-butyl-4-(4'-methylphenyl)-indenyl)-hafniumdichlorid
1,2-Ethandiyl-bis-(2-tert-butyl-4-(4'-ethylphenyl)-indenyl)-hafniumdichlorid
1,2-Ethandiyl-bis-(2-tert-butyl-4-(4'-propylphenyl)-indenyl)-hafniumdichlorid
1,2-Ethandiyl-bis-(2-tert-butyl-4-(4'-isopropylphenyl)-indenyl) -hafniumdichlorid
1,2-Ethandiyl-bis-(2-tert-butyl-4-(4'-tert-butylphenyl)-indenyl)-hafniumdichlorid
1,2-Ethandiyl-bis-(2-tert-butyl-4-(4'-methoxyphenyl)-indenyl)-haf niumdichlorid
1,2-Ethandiyl-bis-(2-tert-butyl-4-(1'-naphthyl)-indenyl)-hafniumdichlorid
1,2-Ethandiyl-bis-(2-tert-butyl-4-(9'-anthracenyl)-indenyl)-hafniumdichlorid
1,2-Ethandiyl-bis-(2-tert-butyl-4-(3',5'-di-tert-butylphenyl)-ind enyl)-hafniumdichlorid
1,2-Ethandiyl-bis-(2-tert-butyl-4-(4'-trifluormethylphenyl)-inden yl)-hafniumdichlorid
1,2-Ethandiyl-bis-(2-cyclopentylindenyl)-hafniumdichlorid
1,2-Ethandiyl-bis-(2-cyclopentyl-4,5-benzindenyl)-hafniumdichlorid
1,2-Ethandiyl-bis-(2-cyclopentyl-4-phenylindenyl)-hafniumdichlorid
1,2-Ethandiyl-bis-(2-cyclopentyl-4-(4'-methylphenyl)-indenyl)-haf niumdichlorid
1,2-Ethandiyl-bis-(2-cyclopentyl-4-(4'-ethylphenyl)-indenyl)-hafniumdichlorid
1,2-Ethandiyl-bis-(2-cyclopentyl-4-(4'-propylphenyl)-indenyl)-haf niumdichlorid
1,2-Ethandiyl-bis-(2-cyclopentyl-4-(4'-isopropylphenyl)-indenyl)-hafniumdichlorid
1,2-Ethandiyl-bis-(2-cyclopentyl-4-(4'-tert-butylphenyl)-indenyl) -hafniumdichlorid
1,2-Ethandiyl-bis-(2-cyclopentyl-4-(4'-methoxyphenyl)-indenyl)-ha fniumdichlorid
1,2-Ethandiyl-bis-(2-cyclopentyl-4-(1'-naphthyl)-indenyl)-hafniumdichlorid
1,2-Ethandiyl-bis-(2-cyclopentyl-4-(9'-anthracenyl)-indenyl)-hafniumdichlorid
1,2-Ethandiyl-bis-(2-cyclopentyl-4-(3',5'-di-tert-butylphenyl)-in denyl)-hafniumdichlorid
1,2-Ethandiyl-bis-(2-cyclopentyl-4-(4'-trifluormethylphenyl)-inde nyl)-hafniumdichlorid
1,2-Ethandiyl-bis-(2-cyclohexylindenyl)-hafniumdichlorid
1,2-Ethandiyl-bis-(2-cyclohexyl-4,5-benzindenyl)-hafniumdichlorid
1,2-Ethandiyl-bis-(2-cyclohexyl-4-phenylindenyl)-hafniumdichlorid
1,2-Ethandiyl-bis-(2-cyclohexyl-4-(4'-methylphenyl)-indenyl)-hafniumdichlorid
1,2-Ethandiyl-bis-(2-cyclohexyl-4-(4'-ethylphenyl)-indenyl)-hafniumdichlorid
1,2-Ethandiyl-bis-(2-cyclohexyl-4-(4'-propylphenyl)-indenyl)-hafniumdichlorid
1,2-Ethandiyl-bis-(2-cyclohexyl-4-(4'-isopropylphenyl)-indenyl) -hafniumdichlorid
1,2-Ethandiyl-bis-(2-cyclohexyl-4-(4'-tert-butylphenyl)-indenyl)-hafniumdichlorid
1,2-Ethandiyl-bis-(2-cyclohexyl-4-(4'-methoxyphenyl)-indenyl)-haf niumdichlorid
1,2-Ethandiyl-bis-(2-cyclohexyl-4-(1'-naphthyl)-indenyl)-hafniumdichlorid
1,2-Ethandiyl-bis-(2-cyclohexyl-4-(9'-anthracenyl)-indenyl)-hafni umdichlorid
1,2-Ethandiyl-bis-(2-cyclohexyl-4-(3',5'-di-tert-butylphenyl)-ind enyl)-hafniumdichlorid
1,2-Ethandiyl-bis-(2-cyclohexyl-4-(4'-trifluormethylphenyl)-inden yl)-hafniumdichlorid
1,2-Cyclohexandiyl-bis-(2-methylindenyl)-zirkoniumdichlorid
1,2-Cyclohexandiyl-bis-(2-methyl-4,5-benzindenyl)-zirkoniumdichlorid
1,2-Cyclohexandiyl-bis-(2-methyl-4-phenylindenyl)-zirkoniumdichlorid
1,2-Cyclohexandiyl-bis-(2-methyl-4-(4'-methylphenyl)-indenyl)-zir koniumdichlorid
1,2-Cyclohexandiyl-bis-(2-methyl-4-(4'-ethylphenyl)-indenyl)-zirkoniumdichlorid
1,2-Cyclohexandiyl-bis-(2-methyl-4-(4'-propylphenyl)-indenyl)-zir koniumdichlorid
1,2-Cyclohexandiyl-bis-(2-methyl-4-(9'-isopropylphenyl)-indenyl)-zirkoniumdichlorid
1,2-Cyclohexandiyl-bis-(2-methyl-4-(4'-tert-butylphenyl)-indenyl) -zirkoniumdichlorid
1,2-Cyclohexandiyl-bis-(2-methyl-4-(4'-methoxyphenyl)-indenyl) -zirkoniumdichlorid
1,2-Cyclohexandiyl-bis-(2-methyl-4-(1'-naphthyl)-indenyl)-zirkoniumdichlorid
1,2-Cyclohexandiyl-bis-(2-methyl-4-(9'-anthracenyl)-indenyl)-zirk oniumdichlorid
1,2-Cyclohexandiyl-bis-(2-methyl-4-(3',5'-di-tert-butylphenyl)-in denyl)-zirkoniumdichlorid
1,2-Cyclohexandiyl-bis-(2-methyl-4-(4'-trifluormethylphenyl)-indenyl)-zirkoniumdichlorid
1,2-Cyclohexandiyl-bis-(2-ethylindenyl)-zirkoniumdichlorid
1,2-Cyclohexandiyl-bis-(2-ethyl-4,5-benzindenyl)-zirkoniumdichlorid
1,2-Cyclohexandiyl-bis-(2-ethyl-4-phenylindenyl)-zirkoniumdichlorid
1,2-Cyclohexandiyl-bis-(2-ethyl-4-(4'-methylphenyl)-indenyl)-zixkoniumdichlorid
1,2-Cyclohexandiyl-bis-(2-ethyl-4-(4'-ethylphenyl)-indenyl)-zirkoniumdichlorid
1,2-Cyclohexandiyl-bis-(2-ethyl-4-(4'-propylphenyl)-indenyl)-zirkoniumdichlorid
1,2-Cyclohexandiyl-bis-(2-ethyl-4-(4'-isopropylphenyl)-indenyl) -zirkoniumdichlorid
1,2-Cyclohexandiyl-bis-(2-ethyl-4-(4'-tert-butylphenyl)-indenyl)-zirkoniumdichlorid
1,2-Cyclohexandiyl-bis-(2-ethyl-4-(4'-methoxyphenyl)-indenyl)-zir koniumdichlorid
1,2-Cyclohexandiyl-bis-(2-ethyl-4-(1'-naphthyl)-indenyl)-zirkoniumdichlorid
1,2-Cyclohexandiyl-bis-(2-ethyl-4-(9'-anthracenyl)-indenyl)-zirko niumdichlorid
1,2-Cyclohexandiyl-bis-(2-ethyl-4-(3',5'-di-tert-butylphenyl)-ind enyl)-zirkoniumdichlorid
1,2-Cyclohexandiyl-bis-(2-ethyl-4-(4'-trifluormethylphenyl)-inden yl)-zirkoniumdichlorid
1,2-Cyclohexandiyl-bis-(2-propylindenyl)-zirkoniumdichlorid
1,2-Cyclohexandiyl-bis-(2-propyl-4,5-benzindenyl)-zirkoniumdichlorid
1,2-Cyclohexandiyl-bis-(2-propyl-4-phenylindenyl)-zirkoniumdichlorid
1,2-Cyclohexandiyl-bis-(2-propyl-4-(4'-methylphenyl)-indenyl)-zir koniumdichlorid
1,2-Cyclohexandiyl-bis-(2-propyl-4-(4'-ethylphenyl)-indenyl)-zirk oniumdichlorid
1,2-Cyclohexandiyl-bis-(2-propyl-4-(4'-propylphenyl)-indenyl)-zir koniumdichlorid
1,2-Cyclohexandiyl-bis-(2-propyl-4-(4'-isopropylphenyl)-indenyl)-zirkoniumdichlorid
1,2-Cyclohexandiyl-bis-(2-propyl-4-(4'-tert-butylphenyl)-indenyl) -zirkoniumdichlorid
1,2-Cyclohexandiyl-bis-(2-propyl-4-(4'-methoxyphenyl)-indenyl) -zirkoniumdichlorid
1,2-Cyclohexandiyl-bis-(2-propyl-4-(1'-naphthyl)-indenyl)-zirkoniumdichlorid
1,2-Cyclohexandiyl-bis-(2-propyl-4-(9'-anthracenyl)-indenyl)-zirkoniumdichlorid
1,2-Cyclohexandiyl-bis-(2-propyl-4-(3',5'-di-tert-butylphenyl)-in denyl)-zirkoniumdichlorid
1,2-Cyclohexandiyl-bis-(2-propyl-4-(4'-trifluormethylphenyl)-indenyl)-zirkoniumdichlorid
1,2-Cyclohexandiyl-bis-(2-isopropylindenyl)-zirkoniumdichlorid
1,2-Cyclohexandiyl-bis-(2-isopropyl-4,5-benzindenyl)-zirkoniumdichlorid
1,2-Cyclohexandiyl-bis-(2-isopropyl-4-phenylindenyl)-zirkoniumdichlorid
1,2-Cyclohexandiyl-bis-(2-isopropyl-4-(4'-methylphenyl)-indenyl)-zirkoniumdichlorid
1,2-Cyclohexandiyl-bis-(2-isopropyl-4-(4'-ethylphenyl)-indenyl) -zirkoniumdichlorid
1,2-Cyclohexandiyl-bis-(2-isopropyl-4-(4'-propylphenyl)-indenyl)-zirkoniumdichlorid
1,2-Cyclohexandiyl-bis-(2-isopropyl-4-(4'-isopropylphenyl)-indenyl)-zirkoniumdichlorid
1,2-Cyclohexandiyl-bis-(2-isopropyl-4-(4'-tert-butylphenyl)-indenyl)-zirkoniumdichlorid
1,2-Cyclohexandiyl-bis-(2-isopropyl-4-(4'-methoxyphenyl)-indenyl) -zirkoniumdichlorid
1,2-Cyclohexandiyl-bis-(2-isopropyl-4-(1'-naphthyl)-indenyl)-zirk oniumdichlorid
1,2-Cyclohexandiyl-bis-(2-isopropyl-4-(9'-anthracenyl)-indenyl) -zirkoniumdichlorid
1,2-Cyclohexandiyl-bis-(2-isopropyl-4-(3',5'-di-tert-butylphenyl) -indenyl)-zirkoniumdichlorid
1,2-Cyclohexandiyl-bis-(2-isopropyl-4-(4'-trifluormethylphenyl) -indenyl)-zirkoniumdichlorid
1,2-Cyclohexandiyl-bis-(2-isobutylindenyl)-zirkoniumdichlorid
1,2-Cyclohexandiyl-bis-(2-isobutyl-4,5-benzindenyl)-zirkoniumdichlorid
1,2-Cyclohexandiyl-bis-(2-isobutyl-4-phenylindenyl)-zirkoniumdichlorid
1,2-Cyclohexandiyl-bis-(2-isobutyl-4-(4'-methylphenyl)-indenyl) -zirkoniumdichlorid
1,2-Cyclohexandiyl-bis-(2-isobutyl-4-(4'-ethylphenyl)-indenyl) -zirkoniumdichlorid
1,2-Cyclohexandiyl-bis-(2-isobutyl-4-(4'-propylphenyl)-indenyl) -zirkoniumdichlorid
1,2-Cyclohexandiyl-bis-(2-isobutyl-4-(4'-isopropylphenyl)-indenyl)-zirkoniumdichlorid
1,2-Cyclohexandiyl-bis-(2-isobutyl-4-(4'-tert-butylphenyl)-indenyl)-zirkoniumdichlorid
1,2-Cyclohexandiyl-bis-(2-isobutyl-4-(4'-methoxyphenyl)-indenyl)-zirkoniumdichlorid
1,2-Cyclohexandiyl-bis-(2-isobutyl-4-(1'-naphthyl)-indenyl)-zirkoniumdichlorid
1,2-Cyclohexandiyl-bis-(2-isobutyl-4-(9'-anthracenyl)-indenyl) -zirkoniumdichlorid
1,2-Cyclohexandiyl-bis-(2-isobutyl-4-(3',5'-di-tert-butylphenyl)-indenyl)-zirkoniumdichlorid
1,2-Cyclohexandiyl-bis-(2-isobutyl-4-(4'-trifluormethylphenyl)-in denyl)-zirkoniumdichlorid
1,2-Cyclohexandiyl-bis-(2-butylindenyl)-zirkoniumdichlorid
1,2-Cyclohexandiyl-bis-(2-butyl-4,5-benzindenyl)-zirkoniumdichlorid
1,2-Cyclohexandiyl-bis-(2-butyl-4-phenylindenyl)-zirkoniumdichlorid
1,2-Cyclohexandiyl-bis-(2-butyl-4-(4'-methylphenyl)-indenyl)-zirk oniumdichlorid
1,2-Cyclohexandiyl-bis-(2-butyl-4-(4'-ethylphenyl)-indenyl)-zirko niumdichlorid
1,2-Cyclohexandiyl-bis-(2-butyl-4-(4'-propylphenyl)-indenyl)-zirk oniumdichlorid
1,2-Cyclohexandiyl-bis-(2-butyl-4-(4'-isopropylphenyl)-indenyl) -zirkoniumdichlorid
1,2-Cyclohexandiyl-bis-(2-butyl-4-(4'-tert-butylphenyl)-indenyl)-zirkoniumdichlorid
1,2-Cyclohexandiyl-bis-(2-butyl-4-(4'-methoxyphenyl)-indenyl)-zir koniumdichlorid
1,2-Cyclohexandiyl-bis-(2-butyl-4-(1'-naphthyl)-indenyl)-zirkoniumdichlorid
1,2-Cyclohexandiyl-bis-(2-butyl-4-(9'-anthracenyl)-indenyl)-zirkoniumdichlorid
1,2-Cyclohexandiyl-bis-(2-butyl-4-(3',5'-di-tert-butylphenyl)-ind enyl)-zirkoniumdichlorid
1,2-Cyclohexandiyl-bis-(2-butyl-4-(4'-trifluormethylphenyl)-inden yl)-zirkoniumdichlorid
1,2-Cyclohexandiyl-bis-(2-tert-butylindenyl)-zirkoniumdichlorid
1,2-Cyclohexandiyl-bis-(2-tert-butyl-4,5-benzindenyl)-zirkoniumdichlorid
1,2-Cyclohexandiyl-bis-(2-tert-butyl-4-phenylindenyl)-zirkoniumdichlorid
1,2-Cyclohexandiyl-bis-(2-tert-butyl-4-(4'-methylphenyl)-indenyl) -zirkoniumdichlorid
1,2-Cyclohexandiyl-bis-(2-tert-butyl-4-(4'-ethylphenyl)-indenyl)-zirkoniumdichlorid
1,2-Cyclohexandiyl-bis-(2-tert-butyl-4-(4'-propylphenyl)-indenyl) -zirkoniumdichlorid
1,2-Cyclohexandiyl-bis-(2-tert-butyl-4-(4'-isopropylphenyl)-inden yl)-zirkoniumdichlorid
1,2-Cyclohexandiyl-bis-(2-tert-butyl-4-(4'-tert-butylphenyl)-inde nyl)-zirkoniumdichlorid
1,2-Cyclohexandiyl-bis-(2-tert-butyl-4-(4'-methoxyphenyl)-indenyl )-zirkoniumdichlorid
1,2-Cyclohexandiyl-bis-(2-tert-butyl-4-(1'-naphthyl)-indenyl)-zir koniumdichlorid
1,2-Cyclohexandiyl-bis-(2-tert-butyl-4-(9'-anthracenyl)-indenyl)-zirkoniumdichlorid
1,2-Cyclohexandiyl-bis-(2-tert-butyl-4-(3',5'-di-tert-butylphenyl )-indenyl)-zirkoniumdichlorid
1,2-Cyclohexandiyl-bis-(2-tert-butyl-4-(4'-trifluormethylphenyl)-indenyl)-zirkoniumdichlorid
1,2-Cyclohexandiyl-bis-(2-cyclopentylindenyl)-zirkoniumdichlorid
1,2-Cyclohexandiyl-bis-(2-cyclopentyl-4,5-benzindenyl)-zirkoniumdichlorid
1,2-Cyclohexandiyl-bis-(2-cyclopentyl-4-phenylindenyl)-zirkoniumdichlorid
1,2-Cyclohexandiyl-bis-(2-cyclopentyl-4-(4'-methylphenyl)-indenyl )-zirkoniumdichlorid
1,2-Cyclohexandiyl-bis-(2-cyclopentyl-4-(4'-ethylphenyl)-indenyl) -zirkoniumdichlorid
1,2-Cyclohexandiyl-bis-(2-cyclopentyl-4-(4'-propylphenyl)-indenyl )-zirkoniumdichlorid
1,2-Cyclohexandiyl-bis-(2-cyclopentyl-4-(4'-isopropylphenyl)-indenyl)-zirkoniumdichlorid
1,2-Cyclohexandiyl-bis-(2-cyclopentyl-4-(4'-tert-butylphenyl)-indenyl)-zirkoniumdichlorid
1,2-Cyclohexandiyl-bis-(2-cyclopentyl-4-(4'-methoxyphenyl)-indenyl)-zirkoniumdichlorid
1,2-Cyclohexandiyl-bis-(2-cyclopentyl-4-(1'-naphthyl)-indenyl) -zirkoniumdichlorid
1,2-Cyclohexandiyl-bis-(2-cyclopentyl-4-(9'-anthracenyl)-indenyl) -zirkoniumdichlorid
1,2-Cyclohexandiyl-bis-(2-cyclopentyl-4-(3',5'-di-tert-butylphenyl)-indenyl)-zirkoniumdichlorid
1,2-Cyclohexandiyl-bis-(2-cyclopentyl-4-(4'-trifluonnethylphenyl) -indenyl)-zirkoniumdichlorid
1,2-Cyclohexandiyl-bis-(2-cyclohexylindenyl)-zirkoniumdichlorid 1,2-Cyclohexandiyl-bis-(2-cyclohexyl-4,5-benzindenyl)-zirkoniumdichlorid
1,2-Cyclohexandiyl-bis-(2-cyclohexyl-4-phenylindenyl)-zirkoniumdichlorid
1,2-Cyclohexandiyl-bis-(2-cyclohexyl-4-(4'-methylphenyl)-indenyl) -zirkoniumdichlorid
1,2-Cyclohexandiyl-bis-(2-cyclohexyl-4-(4'-ethylphenyl)-indenyl)-zirkoniumdichlorid
1,2-Cyclohexandiyl-bis-(2-cyclohexyl-4-(4'-propylphenyl)-indenyl) -zirkoniumdichlorid
1,2-Cyclohexandiyl-bis-(2-cyclohexyl-4-(4'-isopropylphenyl)-indenyl)-zirkoniumdichlorid
1,2-Cyclohexandiyl-bis-(2-cyclohexyl-4-(4'-tert-butylphenyl)-indenyl)-zirkoniumdichlorid
1,2-Cyclohexandiyl-bis-(2-cyclohexyl-4-(4'-methoxyphenyl)-indenyl)-zirkoniumdichlorid
1,2-Cyclohexandiyl-bis-(2-cyclohexyl-4-(1'-naphthyl)-indenyl) -zirkoniumdichlorid
1,2-Cyclohexandiyl-bis-(2-cyclohexyl-4-(9'-anthracenyl)-indenyl)-zirkoniumdichlorid
1,2-Cyclohexandiyl-bis-(2-cyclohexyl-4-(3',5'-di-tert-butylphenyl)-indenyl)-zirkoniumdichlorid
1,2-Cyclohexandiyl-bis-(2-cyclohexyl-4-(4'-trifluormethylphenyl)-indenyl)-zirkoniumdichlorid
1,2-Cyclohexandiyl-bis-(2-methylindenyl)-titandichlorid
1,2-Cyclohexandiyl-bis-(2-methyl-4,5-benzindenyl)-titandichlorid
1,2-Cyclohexandiyl-bis-(2-methyl-4-phenylindenyl)-titandichlorid
1,2-Cyclohexandiyl-bis-(2-methyl-4-(4'-methylphenyl)-indenyl)-titandichlorid
1,2-Cyclohexandiyl-bis-(2-methyl-4-(4'-ethylphenyl)-indenyl)-titandichlorid
1,2-Cyclohexandiyl-bis-(2-methyl-4-(4'-propylphenyl)-indenyl)-titandichlorid
1,2-Cyclohexandiyl-bis-(2-methyl-4-(4'-isopropylphenyl)-indenyl)-titandichlorid
1,2-Cyclohexandiyl-bis-(2-methyl-4-(4'-tert-butylphenyl)-indenyl) -titandichlorid
1,2-Cyclohexandiyl-bis-(2-methyl-4-(4'-methoxyphenyl)-indenyl)-titandichlorid
1,2-Cyclohexandiyl-bis-(2-methyl-4-(1'-naphthyl)-indenyl)-titandichlorid
1,2-Cyclohexandiyl-bis-(2-methyl-4-(9'-anthracenyl)-indenyl)-titandichlorid
1,2-Cyclohexandiyl-bis-(2-methyl-4-(3',5'-di-tert-butylphenyl)-in denyl)-titandichlorid
1,2-Cyclohexandiyl-bis-(2-methyl-4-(4'-trifluormethylphenyl)-inde nyl)-titandichlorid
1,2-Cyclohexandiyl-bis-(2-ethylindenyl)-titandichlorid
1,2-Cyclohexandiyl-bis-(2-ethyl-4,5-benzindenyl)-titandichlorid
1,2-Cyclohexandiyl-bis-(2-ethyl-4-phenylindenyl)-titandichlorid
1,2-Cyclohexandiyl-bis-(2-ethyl-4-(4'-methylphenyl)-indenyl)-titandichlorid
1,2-Cyclohexandiyl-bis-(2-ethyl-4-(4'-ethylphenyl)-indenyl)-titandichlorid
1,2-Cyclohexandiyl-bis-(2-ethyl-4-(4'-propylphenyl)-indenyl)-titandichlorid
1,2-Cyclohexandiyl-bis-(2-ethyl-4-(4'-isopropylphenyl)-indenyl) -titandichlorid
1,2-Cyclohexandiyl-bis-(2-ethyl-4-(4'-tert-butylphenyl)-indenyl) -titandichlorid
1,2-Cyclohexandiyl-bis-(2-ethyl-4-(4'-methoxyphenyl)-indenyl)-tit andichlorid
1,2-Cyclohexandiyl-bis-(2-ethyl-4-(1'-naphthyl)-indenyl)-titandichlorid
1,2-Cyclohexandiyl-bis-(2-ethyl-4-(9'-anthracenyl)-indenyl)-titandichlorid
1,2-Cyclohexandiyl-bis-(2-ethyl-4-(3',5'-di-tert-butylphenyl)-ind enyl)-titandichlorid
1,2-Cyclohexandiyl-bis-(2-ethyl-4-(4'-trifluormethylphenyl)-inden yl)-titandichlorid
1,2-Cyclohexandiyl-bis-(2-propylindenyl)-titandichlorid
1,2-Cyclohexandiyl-bis-(2-propyl-4,5-benzindenyl)-titandichlorid
1,2-Cyclohexandiyl-bis-(2-propyl-4-phenylindenyl)-titandichlorid
1,2-Cyclohexandiyl-bis-(2-propyl-4-(4'-methylphenyl)-indenyl)-titandichlorid
1,2-Cyclohexandiyl-bis-(2-propyl-4-(4'-ethylphenyl)-indenyl)-titandichlorid
1,2-Cyclohexandiyl-bis-(2-propyl-4-(4'-propylphenyl)-indenyl)-titandichlorid
1,2-Cyclohexandiyl-bis-(2-propyl-4-(4'-isopropylphenyl)-indenyl)-titandichlorid
1,2-Cyclohexandiyl-bis-(2-propyl-4-(4'-tert-butylphenyl)-indenyl) -titandichlorid
1,2-Cyclohexandiyl-bis-(2-propyl-4-(4'-methoxyphenyl)-indenyl)-titandichlorid
1,2-Cyclohexandiyl-bis-(2-propyl-4-(1'-naphthyl)-indenyl)-titandichlorid
1,2-Cyclohexandiyl-bis-(2-propyl-4-(9'-anthracenyl)-indenyl)-titandichlorid
1,2-Cyclohexandiyl-bis-(2-propyl-4-(3',5'-di-tert-butylphenyl)-in denyl)-titandichlorid
1,2-Cyclohexandiyl-bis-(2-propyl-4-(4'-trifluormethylphenyl)-inde nyl)-titandichlorid
1,2-Cyclohexandiyl-bis-(2-isopropylindenyl)-titandichlorid
1,2-Cyclohexandiyl-bis-(2-isopropyl-4,5-benzindenyl)-titandichlorid
1,2-Cyclohexandiyl-bis-(2-isopropyl-4-phenylindenyl)-titandichlorid
1,2-Cyclohexandiyl-bis-(2-isopropyl-4-(4'-methylphenyl)-indenyl)-titandichlorid
1,2-Cyclohexandiyl-bis-(2-isopropyl-4-(4'-ethylphenyl)-indenyl) -titandichlorid
1,2-Cyclohexandiyl-bis-(2-isopropyl-4-(4'-propylphenyl)-indenyl)-titandichlorid
1,2-Cyclohexandiyl-bis-(2-isopropyl-4-(4'-isopropylphenyl)-indeny 1)-titandichlorid
1,2-Cyclohexandiyl-bis-(2-isopropyl-4-(4'-tert-butylphenyl)-inden yl)-titandichlorid
1,2-Cyclohexandiyl-bis-(2-isopropyl-4-(4'-methoxyphenyl)-indenyl) -titandichlorid
1,2-Cyclohexandiyl-bis-(2-isopropyl-4-(1'-naphthyl)-indenyl)-titandichlorid
1,2-Cyclohexandiyl-bis-(2-isopropyl-4-(9'-anthracenyl)-indenyl) -titandichlorid
1,2-Cyclohexandiyl-bis-(2-isopropyl-4-(3',5'-di-tert-butylphenyl) -indenyl)-titandichlorid
1,2-Cyclohexandiyl-bis-(2-isopropyl-4-(4'-trifluormethylphenyl) -indenyl)-titandichlorid
1,2-Cyclohexandiyl-bis-(2-isobutylindenyl)-titandichlorid
1,2-Cyclohexandiyl-bis-(2-isobutyl-4,5-benzindenyl)-titandichlorid
1,2-Cyclohexandiyl-bis-(2-isobutyl-4-phenylindenyl)-titandichlorid
1,2-Cyclohexandiyl-bis-(2-isobutyl-4-(4'-methylphenyl)-indenyl) -titandichlorid
1,2-Cyclohexandiyl-bis-(2-isobutyl-4-(4'-ethylphenyl)-indenyl)-titandichlorid
1,2-Cyclohexandiyl-bis-(2-isobutyl-4-(4'-propylphenyl)-indenyl) -titandichlorid
1,2-Cyclohexandiyl-bis-(2-isobutyl-4-(4'-isopropylphenyl)-indenyl )-titandichlorid
1,2-Cyclohexandiyl-bis-(2-isobutyl-4-(4'-tert-butylphenyl)-indeny 1)-titandichlorid
1,2-Cyclohexandiyl-bis-(2-isobutyl-4-(4'-methoxyphenyl)-indenyl)-titandichlorid
1,2-Cyclohexandiyl-bis-(2-isobutyl-4-(1'-naphthyl)-indenyl)-titandichlorid
1,2-Cyclohexandiyl-bis-(2-isobutyl-4-(9'-anthracenyl)-indenyl)-titandichlorid
1,2-Cyclohexandiyl-bis-(2-isobutyl-4-(3',5'-di-tert-butylphenyl)-indenyl)-titandichlorid
1,2-Cyclohexandiyl-bis-(2-isobutyl-4-(4'-trifluormethylphenyl)-in denyl)-titandichlorid
1,2-Cyclohexandiyl-bis-(2-butylindenyl)-titandichlorid
1,2-Cyclohexandiyl-bis-(2-butyl-4,5-benzindenyl)-titandichlorid
1,2-Cyclohexandiyl-bis-(2-butyl-4-phenylindenyl)-titandichlorid
1,2-Cyclohexandiyl-bis-(2-butyl-4-(4'-methylphenyl)-indenyl)-titandichlorid
1,2-Cyclohexandiyl-bis-(2-butyl-4-(4'-ethylphenyl)-indenyl)-titandichlorid
1,2-Cyclohexandiyl-bis-(2-butyl-4-(4'-propylphenyl)-indenyl)-titandichlorid
1,2-Cyclohexandiyl-bis-(2-butyl-4-(4'-isopropylphenyl)-indenyl) -titandichlorid
1,2-Cyclohexandiyl-bis-(2-butyl-4-(4'-tert-butylphenyl)-indenyl) -titandichlorid
1,2-Cyclohexandiyl-bis-(2-butyl-4-(4'-methoxyphenyl)-indenyl)-titandichlorid
1,2-Cyclohexandiyl-bis-(2-butyl-4-(1'-naphthyl)-indenyl)-titandichlorid
1,2-Cyclohexandiyl-bis-(2-butyl-4-(9'-anthracenyl)-indenyl)-titandichlorid
1,2-Cyclohexandiyl-bis-(2-butyl-4-(3',5'-di-tert-butylphenyl)-ind enyl)-titandichlorid
1,2-Cyclohexandiyl-bis-(2-butyl-4-(4'-trifluormethylphenyl)-inden yl)-titandichlorid
1,2-Cyclohexandiyl-bis-(2-tert-butylindenyl)-titandichlorid
1,2-Cyclohexandiyl-bis-(2-tert-butyl-4,5-benzindenyl)-titandichlorid
1,2-Cyclohexandiyl-bis-(2-tert-butyl-4-phenylindenyl)-titandichlorid
1,2-Cyclohexandiyl-bis-(2-tert-butyl-4-(4'-methylphenyl)-indenyl) -titandichlorid
1,2-Cyclohexandiyl-bis-(2-tert-butyl-4-(4'-ethylphenyl)-indenyl)-titandichlorid
1,2-Cyclohexandiyl-bis-(2-tert-butyl-4-(4'-propylphenyl)-indenyl) -titandichlorid
1,2-Cyclohexandiyl-bis-(2-tert-butyl-4-(4'-isopropylphenyl)-inden yl)-titandichlorid
1,2-Cyclohexandiyl-bis-(2-tert-butyl-4-(4'-tert-butylphenyl)-inde nyl)-titandichlorid
1,2-Cyclohexandiyl-bis-(2-tert-butyl-4-(4'-methoxyphenyl)-indenyl )-titandichlorid
1,2-Cyclohexandiyl-bis-(2-tert-butyl-4-(1'-naphthyl)-indenyl)-titandichlorid
1,2-Cyclohexandiyl-bis-(2-tert-butyl-4-(9'-anthracenyl)-indenyl)-titandichlorid
1,2-Cyclohexandiyl-bis-(2-tert-butyl-4-(3',5'-di-tert-butylphenyl )-indenyl)-titandichlorid
1,2-Cyclohexandiyl-bis-(2-tert-butyl-4-(4'-trifluormethylphenyl)-indenyl)-titandichlorid
1,2-Cyclohexandiyl-bis-(2-cyclopentylindenyl)-titandichlorid
1,2-Cyclohexandiyl-bis-(2-cyclopentyl-4,5-benzindenyl)-titandichlorid
1,2-Cyclohexandiyl-bis-(2-cyclopentyl-4-phenylindenyl)-titandichlorid
1,2-Cyclohexandiyl-bis-(2-cyclopentyl-4-(4'-methylphenyl)-indenyl )-titandichlorid
1,2-Cyclohexandiyl-bis-(2-cyclopentyl-4-(4'-ethylphenyl)-indenyl) -titandichlorid
1,2-Cyclohexandiyl-bis-(2-cyclopentyl-4-(4'-propylphenyl)-indenyl )-titandichlorid
1,2-Cyclohexandiyl-bis-(2-cyclopentyl-4-(4'-isopropylphenyl)-indenyl)-titandichlorid
1,2-Cyclohexandiyl-bis-(2-cyclopentyl-4-(4'-tert-butylphenyl)-indenyl)-titandichlorid
1,2-Cyclohexandiyl-bis-(2-cyclopentyl-4-(4'-methoxyphenyl)-indeny 1)-titandichlorid
1,2-Cyclohexandiyl-bis-(2-cyclopentyl-4-(1'-naphthyl)-indenyl)-titandichlorid
1,2-Cyclohexandiyl-bis-(2-cyclopentyl-4-(9'-anthracenyl)-indenyl) -titandichlorid
1,2-Cyclohexandiyl-bis-(2-cyclopentyl-4-(3',5'-di-tert-butylpheny 1)-indenyl)-titandichlorid
1,2-Cyclohexandiyl-bis-(2-cyclopentyl-4-(4'-trifluormethylphenyl) -indenyl)-titandichlorid
1,2-Cyclohexandiyl-bis-(2-cyclohexylindenyl)-titandichlorid
1,2-Cyclohexandiyl-bis-(2-cyclohexyl-4,5-benzindenyl)-titandichlorid
1,2-Cyclohexandiyl-bis-(2-cyclohexyl-4-phenylindenyl)-titandichlorid
1,2-Cyclohexandiyl-bis-(2-cyclohexyl-4-(4'-methylphenyl)-indenyl) -titandichlorid
1,2-Cyclohexandiyl-bis-(2-cyclohexyl-4-(4'-ethylphenyl)-indenyl)-titandichlorid
1,2-Cyclohexandiyl-bis-(2-cyclohexyl-4-(4'-propylphenyl)-indenyl) -titandichlorid
1,2-Cyclohexandiyl-bis-(2-cyclohexyl-4-(4'-isopropylphenyl)-indenyl)-titandichlorid
1,2-Cyclohexandiyl-bis-(2-cyclohexyl-4-(4'-tert-butylphenyl)-indenyl)-titandichlorid
1,2-Cyclohexandiyl-bis-(2-cyclohexyl-4-(4'-methoxyphenyl)-indenyl )-titandichlorid
1,2-Cyclohexandiyl-bis-(2-cyclohexyl-4-(1'-naphthyl)-indenyl)-titandichlorid
1,2-Cyclohexandiyl-bis-(2-cyclohexyl-4-(9'-anthracenyl)-indenyl)-titandichlorid
1,2-Cyclohexandiyl-bis-(2-cyclohexyl-4-(3',5'-di-tert-butylphenyl)-indenyl)-titandichlorid
1,2-Cyclohexandiyl-bis-(2-cyclohexyl-4-(4'-trifluormethylphenyl)-indenyl)-titandichlorid
1,2-Cyclohexandiyl-bis-(2-methylindenyl)-hafniumdichlorid
1,2-Cyclohexandiyl-bis-(2-methyl-4,5-benzindenyl)-hafniumdichlorid
1,2-Cyclohexandiyl-bis-(2-methyl-4-phenylindenyl)-hafniumdichlorid
1,2-Cyclohexandiyl-bis-(2-methyl-4-(4'-methylphenyl)-indenyl)-haf niumdichlorid
1,2-Cyclohexandiyl-bis-(2-methyl-4-(4'-ethylphenyl)-indenyl)-hafniumdichlorid
1,2-Cyclohexandiyl-bis-(2-methyl-4-(4'-propylphenyl)-indenyl)-haf niumdichlorid
1,2-Cyclohexandiyl-bis-(2-methyl-4-(4'-isopropylphenyl)-indenyl)-hafniumdichlorid
1,2-Cyclohexandiyl-bis-(2-methyl-4-(4'-tert-butylphenyl)-indenyl) -hafniumdichlorid
1,2-Cyclohexandiyl-bis-(2-methyl-4-(4'-methoxyphenyl)-indenyl) -hafniumdichlorid
1,2-Cyclohexandiyl-bis-(2-methyl-4-(1'-naphthyl)-indenyl)-hafniumdichlorid
1,2-Cyclohexandiyl-bis-(2-methyl-4-(9'-anthracenyl)-indenyl)-hafniumdichlorid
1,2-Cyclohexandiyl-bis-(2-methyl-4-(3',5'-di-tert-butylphenyl)-in denyl)-hafniumdichlorid
1,2-Cyclohexandiyl-bis-(2-methyl-4-(4'-trifluormethylphenyl)-inde nyl)-hafniumdichlorid
1,2-Cyclohexandiyl-bis-(2-ethylindenyl)-hafniumdichlorid
1,2-Cyclohexandiyl-bis-(2-ethyl-4,5-benzindenyl)-hafniumdichlorid
1,2-Cyclohexandiyl-bis-(2-ethyl-4-phenylindenyl)-hafniumdichlorid
1,2-Cyclohexandiyl-bis-(2-ethyl-4-(4'-methylphenyl)-indenyl)-hafniumdichlorid
1,2-Cyclohexandiyl-bis-(2-ethyl-4-(4'-ethylphenyl)-indenyl)-hafniumdichlorid
1,2-Cyclohexandiyl-bis-(2-ethyl-4-(4'-propylphenyl)-indenyl)-hafniumdichlorid
1,2-Cyclohexandiyl-bis-(2-ethyl-4-(4'-isopropylphenyl)-indenyl) -hafniumdichlorid
1,2-Cyclohexandiyl-bis-(2-ethyl-4-(4'-tert-butylphenyl)-indenyl)-hafniumdichlorid
1,2-Cyclohexandiyl-bis-(2-ethyl-4-(4'-methoxyphenyl)-indenyl)-haf niumdichlorid
1,2-Cyclohexandiyl-bis-(2-ethyl-4-(1'-naphthyl)-indenyl)-hafniumdichlorid
1,2-Cyclohexandiyl-bis-(2-ethyl-4-(9'-anthracenyl)-indenyl)-hafniumdichlorid
1,2-Cyclohexandiyl-bis-(2-ethyl-4-(3',5'-di-tert-butylphenyl)-ind enyl)-hafniumdichlorid
1,2-Cyclohexandiyl-bis-(2-ethyl-4-(4'-trifluormethylphenyl)-inden yl)-hafniumdichlorid
1,2-Cyclohexandiyl-bis-(2-propylindenyl)-hafniumdichlorid
1,2-Cyclohexandiyl-bis-(2-propyl-4,5-benzindenyl)-hafniumdichlorid
1,2-Cyclohexandiyl-bis-(2-propyl-4-phenylindenyl)-hafniumdichlorid
1,2-Cyclohexandiyl-bis-(2-propyl-4-(4'-methylphenyl)-indenyl)-haf niumdichlorid
1,2-Cyclohexandiyl-bis-(2-propyl-4-(4'-ethylphenyl)-indenyl)-hafniumdichlorid
1,2-Cyclohexandiyl-bis-(2-propyl-4-(4'-propylphenyl)-indenyl)-haf niumdichlorid
1,2-Cyclohexandiyl-bis-(2-propyl-4-(4'-isopropylphenyl)-indenyl)-hafniumdichlorid
1,2-Cyclohexandiyl-bis-(2-propyl-4-(4'-tert-butylphenyl)-indenyl) -hafniumdichlorid
1,2-Cyclohexandiyl-bis-(2-propyl-4-(4'-methoxyphenyl)-indenyl) -hafniumdichlorid
1,2-Cyclohexandiyl-bis-(2-propyl-4-(1'-naphthyl)-indenyl)-hafniumdichlorid
1,2-Cyclohexandiyl-bis-(2-propyl-4-(9'-anthracenyl)-indenyl)-hafniumdichlorid
1,2-Cyclohexandiyl-bis-(2-propyl-4-(3',5'-di-tert-butylphenyl)-in denyl)-hafniumdichlorid
1,2-Cyclohexandiyl-bis-(2-propyl-4-(4'-trifluormethylphenyl)-inde nyl)-hafniumdichlorid
1,2-Cyclohexandiyl-bis-(2-isopropylindenyl)-hafniumdichlorid
1,2-Cyclohexandiyl-bis-(2-isopropyl-4,5-benzindenyl)-hafniumdichlorid
1,2-Cyclohexandiyl-bis-(2-isopropyl-4-phenylindenyl)-hafniumdichlorid
1,2-Cyclohexandiyl-bis-(2-isopropyl-4-(4'-methylphenyl)-indenyl)-hafniumdichlorid
1,2-Cyclohexandiyl-bis-(2-isopropyl-4-(4'-ethylphenyl)-indenyl) -hafniumdichlorid
1,2-Cyclohexandiyl-bis-(2-isopropyl-4-(4'-propylphenyl)-indenyl)-hafniumdichlorid
1,2-Cyclohexandiyl-bis-(2-isopropyl-4-(4'-isopropylphenyl)-indenyl)-hafniumdichlorid
1,2-Cyclohexandiyl-bis-(2-isopropyl-4-(4'-tert-butylphenyl)-indenyl)-hafniumdichlorid
1,2-Cyclohexandiyl-bis-(2-isopropyl-4-(4'-methoxyphenyl)-indenyl)-hafniumdichlorid
1,2-Cyclohexandiyl-bis-(2-isopropyl-4-(1'-naphthyl)-indenyl)-hafniumdichlorid
1,2-Cyclohexandiyl-bis-(2-isopropyl-4-(9'-anthracenyl)-indenyl) -hafniumdichlorid
1,2-Cyclohexandiyl-bis-(2-isopropyl-4-(3',5'-di-tert-butylphenyl) -indenyl)-hafniumdichlorid
1,2-Cyclohexandiyl-bis-(2-isopropyl-4-(4'-trifluormethylphenyl) -indenyl)-hafniumdichlorid
1,2-Cyclohexandiyl-bis-(2-isobutylindenyl)-hafniumdichlorid
1,2-Cyclohexandiyl-bis-(2-isobutyl-4,5-benzindenyl)-hafniumdichlorid
1,2-Cyclohexandiyl-bis-(2-isobutyl-4-phenylindenyl)-hafniumdichlorid
1,2-Cyclohexandiyl-bis-(2-isobutyl-4-(4'-methylphenyl)-indenyl) -hafniumdichlorid
1,2-Cyclohexandiyl-bis-(2-isobutyl-4-(4'-ethylphenyl)-indenyl) -hafniumdichlorid
1,2-Cyclohexandiyl-bis-(2-isobutyl-4-(4'-propylphenyl)-indenyl) -hafniumdichlorid
1,2-Cyclohexandiyl-bis-(2-isobutyl-4-(4'-isopropylphenyl)-indenyl )-hafniumdichlorid
1,2-Cyclohexandiyl-bis-(2-isobutyl-4-(4'-tert-butylphenyl)-indenyl)-hafniumdichlorid
1,2-Cyclohexandiyl-bis-(2-isobutyl-4-(4'-methoxyphenyl)-indenyl)-hafniumdichlorid
1,2-Cyclohexandiyl-bis-(2-isobutyl-4-(1'-naphthyl)-indenyl)-hafniumdichlorid
1,2-Cyclohexandiyl-bis-(2-isobutyl-4-(9'-anthracenyl)-indenyl) -hafniumdichlorid
1,2-Cyclohexandiyl-bis-(2-isobutyl-4-(3',5'-di-tert-butylphenyl)-indenyl)-hafniumdichlorid
1,2-Cyclohexandiyl-bis-(2-isobutyl-4-(4'-trifluormethylphenyl)-in denyl)-hafniumdichlorid
1,2-Cyclohexandiyl-bis-(2-butylindenyl)-hafniumdichlorid
1,2-Cyclohexandiyl-bis-(2-butyl-4,5-benzindenyl)-hafniumdichlorid
1,2-Cyclohexandiyl-bis-(2-butyl-4-phenylindenyl)-hafniumdichlorid
1,2-Cyclohexandiyl-bis-(2-butyl-4-(4'-methylphenyl)-indenyl)-hafn iumdichlorid
1,2-Cyclohexandiyl-bis-(2-butyl-4-(4'-ethylphenyl)-indenyl)-hafniumdichlorid
1,2-Cyclohexandiyl-bis-(2-butyl-4-(4'-propylphenyl)-indenyl)-hafniumdichlorid
1,2-Cyclohexandiyl-bis-(2-butyl-4-(4'-isopropylphenyl)-indenyl) -hafniumdichlorid
1,2-Cyclohexandiyl-bis-(2-butyl-4-(4'-tert-butylphenyl)-indenyl)-hafniumdichlorid
1,2-Cyclohexandiyl-bis-(2-butyl-4-(4'-methoxyphenyl)-indenyl) -hafniumdichlorid
1,2-Cyclohexandiyl-bis-(2-butyl-4-(1'-naphthyl)-indenyl)-hafniumdichlorid
1,2-Cyclohexandiyl-bis-(2-butyl-4-(9'-anthracenyl)-indenyl)-hafniumdichlorid
1,2-Cyclohexandiyl-bis-(2-butyl-4-(3',5'-di-tert-butylphenyl)-ind enyl)-hafniumdichlorid
1,2-Cyclohexandiyl-bis-(2-butyl-4-(4'-trifluormethylphenyl)-inden yl)-hafniumdichlorid
1,2-Cyclohexandiyl-bis-(2-tert-butylindenyl)-hafniumdichlorid
1,2-Cyclohexandiyl-bis-(2-tert-butyl-4,5-benzindenyl)-hafniumdichlorid
1,2-Cyclohexandiyl-bis-(2-tert-butyl-4-phenylindenyl)-hafniumdichlorid
1,2-Cyclohexandiyl-bis-(2-tert-butyl-4-(4'-methylphenyl)-indenyl) -hafniumdichlorid
1,2-Cyclohexandiyl-bis-(2-tert-butyl-4-(4'-ethylphenyl)-indenyl)-hafniumdichlorid
1,2-Cyclohexandiyl-bis-(2-tert-butyl-4-(4'-propylphenyl)-indenyl) -hafniumdichlorid
1,2-Cyclohexandiyl-bis-(2-tert-butyl-4-(4'-isopropylphenyl)-indenyl)-hafniumdichlorid
1,2-Cyclohexandiyl-bis-(2-tert-butyl-4-(4'-tert-butylphenyl)-indenyl)-hafniumdichlorid
1,2-Cyclohexandiyl-bis-(2-tert-butyl-4-(4'-methoxyphenyl)-indenyl )-hafniumdichlorid
1,2-Cyclohexandiyl-bis-(2-tert-butyl-4-(1'-naphthyl)-indenyl)-haf niumdichlorid
1,2-Cyclohexandiyl-bis-(2-tert-butyl-4-(9'-anthracenyl)-indenyl)-hafniumdichlorid
1,2-Cyclohexandiyl-bis-(2-tert-butyl-4-(3',5'-di-tert-butylphenyl )-indenyl)-hafniumdichlorid
1,2-Cyclohexandiyl-bis-(2-tert-butyl-4-(4'-trifluormethylphenyl)-indenyl)-hafniumdichlorid
1,2-Cyclohexandiyl-bis-(2-cyclopentylindenyl)-hafniumdichlorid
1,2-Cyclohexandiyl-bis-(2-cyclopentyl-4,5-benzindenyl)-hafniumdichlorid
1,2-Cyclohexandiyl-bis-(2-cyclopentyl-4-phenylindenyl)-hafniumdichlorid
1,2-Cyclohexandiyl-bis-(2-cyclopentyl-4-(4'-methylphenyl)-indenyl )-hafniumdichlorid
1,2-Cyclohexandiyl-bis-(2-cyclopentyl-4-(4'-ethylphenyl)-indenyl) -hafniumdichlorid
1,2-Cyclohexandiyl-bis-(2-cyclopentyl-4-(4'-propylphenyl)-indenyl )-hafniumdichlorid
1,2-Cyclohexandiyl-bis-(2-cyclopentyl-4-(4'-isopropylphenyl)-inde nyl)-hafniumdichlorid
1,2-Cyclohexandiyl-bis-(2-cyclopentyl-4-(4'-tert-butylphenyl)-ind enyl)-hafniumdichlorid
1,2-Cyclohexandiyl-bis-(2-cyclopentyl-4-(4'-methoxyphenyl)-indeny 1)-hafniumdichlorid
1,2-Cyclohexandiyl-bis-(2-cyclopentyl-4-(1'-naphthyl)-indenyl) -hafniumdichlorid
1,2-Cyclohexandiyl-bis-(2-cyclopentyl-4-(9'-anthracenyl)-indenyl) -hafniumdichlorid
1,2-Cyclohexandiyl-bis-(2-cyclopentyl-4-(3',5'-di-tert-butylphenyl)-indenyl)-hafniumdichlorid
1,2-Cyclohexandiyl-bis-(2-cyclopentyl-4-(4'-trifluormethylphenyl) -indenyl)-hafniumdichlorid
1,2-Cyclohexandiyl-bis-(2-cyclohexylindenyl)-hafniumdichlorid
1,2-Cyclohexandiyl-bis-(2-cyclohexyl-4,5-benzindenyl)-hafniumdichlorid
1,2-Cyclohexandiyl-bis-(2-cyclohexyl-4-phenylindenyl)-hafniumdichlorid
1,2-Cyclohexandiyl-bis-(2-cyclohexyl-4-(4'-methylphenyl)-indenyl) -hafniumdichlorid
1,2-Cyclohexandiyl-bis-(2-cyclohexyl-4-(4'-ethylphenyl)-indenyl)-hafniumdichlorid
1,2-Cyclohexandiyl-bis-(2-cyclohexyl-4-(4'-propylphenyl)-indenyl) -hafniumdichlorid
1,2-Cyclohexandiyl-bis-(2-cyclohexyl-4-(4'-isopropylphenyl)-inden yl)-hafniumdichlorid
1,2-Cyclohexandiyl-bis-(2-cyclohexyl-4-(4'-tert-butylphenyl)-indenyl)-hafniumdichlorid
1,2-Cyclohexandiyl-bis-(2-cyclohexyl-4-(4'-methoxyphenyl)-indenyl )-hafniumdichlorid
1,2-Cyclohexandiyl-bis-(2-cyclohexyl-4-(1'-naphthyl)-indenyl)-haf niumdichlorid
1,2-Cyclohexandiyl-bis-(2-cyclohexyl-4-(9'-anthracenyl)-indenyl)-hafniumdichlorid
1,2-Cyclohexandiyl-bis-(2-cyclohexyl-4-(3',5'-di-tert-butylphenyl)-indenyl)-hafniumdichlorid
1,2-Cyclohexandiyl-bis-(2-cyclohexyl-4-(4'-trifluormethylphenyl)-indenyl)-hafniumdichlorid
1,3-Propandiyl-bis-(2-methylindenyl)-zirkoniumdichlorid
1,3-Propandiyl-bis-(2-methyl-4,5-benzindenyl)-zirkoniumdichlorid
1,3-Propandiyl-bis-(2-methyl-4-phenylindenyl)-zirkoniumdichlorid
1,3-Propandiyl-bis-(2-methyl-4-(4'-methylphenyl)-indenyl)-zirkoni umdichlorid
1,3-Propandiyl-bis-(2-methyl-4-(4'-ethylphenyl)-indenyl)-zirkoniumdichlorid
1,3-Propandiyl-bis-(2-methyl-4-(4'-propylphenyl)-indenyl)-zirkoniumdichlorid
1,3-Propandiyl-bis-(2-methyl-4-(4'-isopropylphenyl)-indenyl)-zirk oniumdichlorid
1,3-Propandiyl-bis-(2-methyl-4-(4'-tert-butylphenyl)-indenyl)-zir koniumdichlorid
1,3-Propandiyl-bis-(2-methyl-4-(4'-methoxyphenyl)-indenyl)-zirkon iumdichlorid
1,3-Propandiyl-bis-(2-methyl-4-(1'-naphthyl)-indenyl)-zirkoniumdichlorid
1,3-Propandiyl-bis-(2-methyl-4-(9'-anthracenyl)-indenyl)-zirkoniumdichlorid
1,3-Propandiyl-bis-(2-methyl-4-(3',5'-di-tert-butylphenyl)-indenyl)-zirkoniumdichlorid
1,3-Propandiyl-bis-(2-methyl-4-(4'-trifluormethylphenyl)-indenyl) -zirkoniumdichlorid
1,3-Propandiyl-bis-(2-ethylindenyl)-zirkoniumdichlorid
1,3-Propandiyl-bis-(2-ethyl-4,5-benzindenyl)-zirkoniumdichlorid
1,3-Propandiyl-bis-(2-ethyl-4-phenylindenyl)-zirkoniumdichlorid
1,3 -Propandiyl-bis-(2-ethyl-4-(4'-methylphenyl)-indenyl)-zirkoniumdichlorid
1,3-Propandiyl-bis-(2-ethyl-4-(4'-ethylphenyl)-indenyl)-zirkoniumdichlorid
1,3-Propandiyl-bis-(2-ethyl-4-(4'-propylphenyl)-indenyl)-zirkoniumdichlorid
1,3-Propandiyl-bis-(2-ethyl-4-(4'-isopropylphenyl)-indenyl)-zirko niumdichlorid
1,3-Propandiyl-bis-(2-ethyl-4-(4'-tert-butylphenyl)-indenyl)-zirk oniumdichlorid
1,3-Propandiyl-bis-(2-ethyl-4-(4'-methoxyphenyl)-indenyl)-zirkoni umdichlorid
1,3-Propandiyl-bis-(2-ethyl-4-(2'-naphthyl)-indenyl)-zirkoniumdichlorid
1,3-Propandiyl-bis-(2-ethyl-4-(9'-anthracenyl)-indenyl)-zirkonium dichlorid
1,3-Propandiyl-bis-(2-ethyl-4-(3',5'-di-tert-butylphenyl)-indenyl )-zirkoniumdichlorid
1,3-Propandiyl-bis-(2-ethyl-4-(4'-trifluormethylphenyl)-indenyl)-zirkoniumdichlorid
1,3-Propandiyl-bis-(2-propylindenyl)-zirkoniumdichlorid
1,3-Propandiyl-bis-(2-propyl-4,5-benzindenyl)-zirkoniumdichlorid
1,3-Propandiyl-bis-(2-propyl-4-phenylindenyl)-zirkoniumdichlorid
1,3-Propandiyl-bis-(2-propyl-4-(4'-methylphenyl)-indenyl)-zirkoni umdichlorid
1,3-Propandiyl-bis-(2-propyl-4-(4'-ethylphenyl)-indenyl)-zirkoniumdichlorid
1,3-Propandiyl-bis-(2-propyl-4-(4'-propylphenyl)-indenyl)-zirkoniumdichlorid
1,3-Propandiyl-bis-(2-propyl-4-(4'-isopropylphenyl)-indenyl)-zirk oniumdichlorid
1,3-Propandiyl-bis-(2-propyl-4-(4'-tert-butylphenyl)-indenyl)-zir koniumdichlorid
1,3-Propandiyl-bis-(2-propyl-4-(4'-methoxyphenyl)-indenyl)-zirkon iumdichlorid
1,3-Propandiyl-bis-(2-propyl-4-(1'-naphthyl)-indenyl)-zirkoniumdichlorid
1,3-Propandiyl-bis-(2-propyl-4-(9'-anthracenyl)-indenyl)-zirkoniumdichlorid
1,3-Propandiyl-bis-(2-propyl-4-(3',5'-di-tert-butylphenyl)-indenyl)-zirkoniumdichlorid
1,3-Propandiyl-bis-(2-propyl-4-(4'-trifluormethylphenyl)-indenyl) -zirkoniumdichlorid
1,3-Propandiyl-bis-(2-isopropylindenyl)-zirkoniumdichlorid
1,3-Propandiyl-bis-(2-isopropyl-4,5-benzindenyl)-zirkoniumdichlorid
1,3-Propandiyl-bis-(2-isopropyl-4-phenylindenyl)-zirkoniumdichlorid
1,3-Propandiyl-bis-(2-isopropyl-4-(4'-methylphenyl)-indenyl)-zirkoniumdichlorid
1,3-Propandiyl-bis-(2-isopropyl-4-(4'-ethylphenyl)-indenyl)-zirkoniumdichlorid
1,3-Propandiyl-bis-(2-isopropyl-4-(4'-propylphenyl)-indenyl)-zirkoniumdichlorid
1,3-Propandiyl-bis-(2-isopropyl-4-(4'-isopropylphenyl)-indenyl) -zirkoniumdichlorid
1,3-Propandiyl-bis-(2-isopropyl-4-(4'-tert-butylphenyl)-indenyl)-zirkoniumdichlorid
1,3-Propandiyl-bis-(2-isopropyl-4-(4'-methoxyphenyl)-indenyl)-zir koniumdichlorid
1,3-Propandiyl-bis-(2-isopropyl-4-(1'-naphthyl)-indenyl)-zirkoniumdichlorid
1,3-Propandiyl-bis-(2-isopropyl-4-(9'-anthracenyl)-indenyl)-zirkoniumdichlorid
1,3-Propandiyl-bis-(2-isopropyl-4-(3',5'-di-tert-butylphenyl)-indenyl)-zirkoniumdichlorid
1,3-Propandiyl-bis-(2-isopropyl-4-(4'-trifluormethylphenyl)-indenyl)-zirkoniumdichlorid
1,3-Propandiyl-bis-(2-isobutylindenyl)-zirkoniumdichlorid
1,3-Propandiyl-bis-(2-isobutyl-4,5-benzindenyl)-zirkoniumdichlorid
1,3-Propandiyl-bis-(2-isobutyl-4-phenylindenyl)-zirkoniumdichlorid
1,3-Propandiyl-bis-(2-isobutyl-4-(4'-methylphenyl)-indenyl)-zirkoniumdichlorid
1,3-Propandiyl-bis-(2-isobutyl-4-(4'-ethylphenyl)-indenyl)-zirkoniumdichlorid
1,3-Propandiyl-bis-(2-isobutyl-4-(4'-propylphenyl)-indenyl)-zirkoniumdichlorid
1,3-Propandiyl-bis-(2-isobutyl-4-(4'-isopropylphenyl)-indenyl) -zirkoniumdichlorid
1,3-Propandiyl-bis-(2-isobutyl-4-(4'-tert-butylphenyl)-indenyl) -zirkoniumdichlorid
1,3-Propandiyl-bis-(2-isobutyl-4-(4'-methoxyphenyl)-indenyl)-zirkoniumdichlorid
1,3-Propandiyl-bis-(2-isobutyl-4-(1'-naphthyl)-indenyl)-zirkoniumdichlorid
1,3-Propandiyl-bis-(2-isobutyl-4-(9'-anthracenyl)-indenyl)-zirkoniumdichlorid
1,3-Propandiyl-bis-(2-isobutyl-4-(3',5'-di-tert-butylphenyl)-inde nyl)-zirkoniumdichlorid
1,3-Propandiyl-bis-(2-isobutyl-4-(4'-trifluormethylphenyl)-indenyl)-zirkoniumdichlorid
1,3-Propandiyl-bis-(2-butylindenyl)-zirkoniumdichlorid
1,3-Propandiyl-bis-(2-butyl-4,5-benzindenyl)-zirkoniumdichlorid
1,3-Propandiyl-bis-(2-butyl-4-phenylindenyl)-zirkoniumdichlorid
1,3-Propandiyl-bis-(2-butyl-4-(4'-methylphenyl)-indenyl)-zirkoniumdichlorid
1,3-Propandiyl-bis-(2-butyl-4-(4'-ethylphenyl)-indenyl)-zirkoniumdichlorid
1,3-Propandiyl-bis-(2-butyl-4-(4'-propylphenyl)-indenyl)-zirkoniumdichlorid
1,3-Propandiyl-bis-(2-butyl-4-(4'-isopropylphenyl)-indenyl)-zirko niumdichlorid
1,3-Propandiyl-bis-(2-butyl-4-(4'-tert-butylphenyl)-indenyl)-zirkoniumdichlorid
1,3-Propandiyl-bis-(2-butyl-4-(4'-methoxyphenyl)-indenyl)-zirkoniumdichlorid
1,3-Propandiyl-bis-(2-butyl-4-(1'-naphthyl)-indenyl)-zirkoniumdichlorid
1,3-Propandiyl-bis-(2-butyl-9-(9'-anthracenyl)-indenyl)-zirkoniumdichlorid
1,3-Propandiyl-bis-(2-butyl-4-(3',5'-di-tert-butylphenyl)-indenyl)-zirkoniumdichlorid
1,3-Propandiyl-bis-(2-butyl-4-(4'-trifluormethylphenyl)-indenyl)-zirkoniumdichlorid
1,3-Propandiyl-bis-(2-tert-butylindenyl)-zirkoniumdichlorid
1,3-Propandiyl-bis-(2-tert-butyl-4,5-benzindenyl)-zirkoniumdichlorid
1,3-Propandiyl-bis-(2-tert-butyl-4-phenylindenyl)-zirkoniumdichlorid
1,3-Propandiyl-bis-(2-tert-butyl-4-(4'-methylphenyl)-indenyl)-zir koniumdichlorid
1,3-Propandiyl-bis-(2-tert-butyl-4-(4'-ethylphenyl)-indenyl)-zirkoniumdichlorid
1,3-Propandiyl-bis-(2-tert-butyl-4-(4'-propylphenyl)-indenyl)-zir koniumdichlorid
1,3-Propandiyl-bis-(2-tert-butyl-4-(4'-isopropylphenyl)-indenyl)-zirkoniumdichlorid
1,3-Propandiyl-bis-(2-tert-butyl-4-(4'-tert-butylphenyl)-indenyl) -zirkoniumdichlorid
1,3-Propandiyl-bis-(2-tert-butyl-4-(4'-methoxyphenyl)-indenyl) -zirkoniumdichlorid
1,3-Propandiyl-bis-(2-tert-butyl-4-(1'-naphthyl)-indenyl)-zirkoni umdichlorid
1,3-Propandiyl-bis-(2-tert-butyl-4-(9'-anthracenyl)-indenyl)-zirk oniumdichlorid
1,3-Propandiyl-bis-(2-tert-butyl-4-(3',5'-di-tert-butylphenyl)-in denyl)-zirkoniumdichlorid
1,3-Propandiyl-bis-(2-tert-butyl-4-(4'-trifluormethylphenyl)-inde nyl)-zirkoniumdichlorid
1,3-Propandiyl-bis-(2-cyclopentylindenyl)-zirkoniumdichlorid
1,3-Propandiyl-bis-(2-cyclopentyl-4,5-benzindenyl)-zirkoniumdichlorid
1,3-Propandiyl-bis-(2-cyclopentyl-4-phenylindenyl)-zirkoniumdichlorid
1,3-Propandiyl-bis-(2-cyclopentyl-4-(4'-methylphenyl)-indenyl) -zirkoniumdichlorid
1,3-Propandiyl-bis-(2-cyclopentyl-4-(4'-ethylphenyl)-indenyl)-zir koniumdichlorid
1,3-Propandiyl-bis-(2-cyclopentyl-4-(4'-propylphenyl)-indenyl) -zirkoniumdichlorid
1,3-Propandiyl-bis-(2-cyclopentyl-4-(4'-isopropylphenyl)-indenyl) -zirkoniumdichlorid
1,3-Propandiyl-bis-(2-cyclopentyl-4-(4'-tert-butylphenyl)-indenyl)-zirkoniumdichlorid
1,3-Propandiyl-bis-(2-cyclopentyl-4-(4'-methoxyphenyl)-indenyl) -zirkoniumdichlorid
1,3-Propandiyl-bis-(2-cyclopentyl-4-(1'-naphthyl)-indenyl)-zirkon iumdichlorid
1,3-Propandiyl-bis-(2-cyclopentyl-4-(9'-anthracenyl)-indenyl)-zir koniumdichlorid
1,3-Propandiyl-bis-(2-cyclopentyl-4-(3',5'-di-tert-butylphenyl) -indenyl)-zirkoniumdichlorid
1,3-Propandiyl-bis-(2-cyclopentyl-4-(4'-trifluormethylphenyl)-indenyl)-zirkoniumdichlorid
1,3-Propandiyl-bis-(2-cyclohexylindenyl)-zirkoniumdichlorid
1,3-Propandiyl-bis-(2-cyclohexyl-4,5-benzindenyl)-zirkoniumdichlorid
1,3-Propandiyl-bis-(2-cyclohexyl-4-phenylindenyl)-zirkoniumdichlorid
1,3-Propandiyl-bis-(2-cyclohexyl-4-(4'-methylphenyl)-indenyl)-zir koniumdichlorid
1,3-Propandiyl-bis-(2-cyclohexyl-4-(4'-ethylphenyl)-indenyl)-zirkoniumdichlorid
1,3-Propandiyl-bis-(2-cyclohexyl-4-(4'-propylphenyl)-indenyl)-zir koniumdichlorid
1,3-Propandiyl-bis-(2-cyclohexyl-4-(4'-isopropylphenyl)-indenyl)-zirkoniumdichlorid
1,3-Propandiyl-bis-(2-cyclohexyl-4-(4'-tert-butylphenyl)-indenyl) -zirkoniumdichlorid
1,3-Propandiyl-bis-(2-cyclohexyl-4-(4'-methoxyphenyl)-indenyl) -zirkoniumdichlorid
1,3-Propandiyl-bis-(2-cyclohexyl-4-(1'-naphthyl)-indenyl)-zirkoniumdichlorid
1,3-Propandiyl-bis-(2-cyclohexyl-4-(9'-anthracenyl)-indenyl)-zirk oniumdichlorid
1,3-Propandiyl-bis-(2-cyclohexyl-4-(3',5'-di-tert-butylphenyl)-in denyl)-zirkoniumdichlorid
1,3-Propandiyl-bis-(2-cyclohexyl-4-(4'-trifluormethylphenyl)-inde nyl)-zirkoniumdichlorid
1,3-Propandiyl-bis-(2-methylindenyl)-titandichlorid
1,3-Propandiyl-bis-(2-methyl-4,5-benzindenyl)-titandichlorid
1,3-Propandiyl-bis-(2-methyl-4-phenylindenyl)-titandichlorid
1,3-Propandiyl-bis-(2-methyl-4-(4'-methylphenyl)-indenyl)-titandichlorid
1,3-Propandiyl-bis-(2-methyl-4-(4'-ethylphenyl)-indenyl)-titandichlorid
1,3-Propandiyl-bis-(2-methyl-4-(4'-propylphenyl)-indenyl)-titandichlorid
1,3-Propandiyl-bis-(2-methyl-4-(4'-isopropylphenyl)-indenyl)-titandichlorid
1,3-Propandiyl-bis-(2-methyl-4-(4'-tert-butylphenyl)-indenyl)-titandichlorid
1,3-Propandiyl-bis-(2-methyl-4-(4'-methoxyphenyl)-indenyl)-titandichlorid
1,3-Propandiyl-bis-(2-methyl-4-(1'-naphthyl)-indenyl)-titandichlorid
1,3-Propandiyl-bis-(2-methyl-4-(9'-anthracenyl)-indenyl)-titandichlorid
1,3-Propandiyl-bis-(2-methyl-4-(3',5'-di-tert-butylphenyl)-indenyl)-titandichlorid
1,3-Propandiyl-bis-(2-methyl-4-(4'-trifluormethylphenyl)-indenyl) -titandichlorid
1,3-Propandiyl-bis-(2-ethylindenyl)-titandichlorid
1,3-Propandiyl-bis-(2-ethyl-4,5-benzindenyl)-titandichlorid
1,3-Propandiyl-bis-(2-ethyl-4-phenylindenyl)-titandichlorid
1,3-Propandiyl-bis-(2-ethyl-4-(4'-methylphenyl)-indenyl)-titandichlorid
1,3-Propandiyl-bis-(2-ethyl-4-(4'-ethylphenyl)-indenyl)-titandichlorid
1,3-Propandiyl-bis-(2-ethyl-4-(4'-propylphenyl)-indenyl)-titandichlorid
1,3-Propandiyl-bis-(2-ethyl-4-(4'-isopropylphenyl)-indenyl)-titandichlorid
1,3-Propandiyl-bis-(2-ethyl-4-(4'-tert-butylphenyl)-indenyl)-titandichlorid
1,3-Propandiyl-bis-(2-ethyl-4-(4'-methoxyphenyl)-indenyl)-titandichlorid
1,3-Propandiyl-bis-(2-ethyl-4-(1'-naphthyl)-indenyl)-titandichlorid
1,3-Propandiyl-bis-(2-ethyl-4-(9'-anthracenyl)-indenyl)-titandichlorid
1,3-Propandiyl-bis-(2-ethyl-4-(3',5'-di-tert-butylphenyl)-indenyl)-titandichlorid
1,3-Propandiyl-bis-(2-ethyl-4-(4'-trifluormethylphenyl)-indenyl)-titandichlorid
1,3-Propandiyl-bis-(2-propylindenyl)-titandichlorid
1,3-Propandiyl-bis-(2-propyl-4,5-benzindenyl)-titandichlorid
1,3-Propandiyl-bis-(2-propyl-4-phenylindenyl)-titandichlorid
1,3-Propandiyl-bis-(2-propyl-4-(4'-methylphenyl)-indenyl)-titandichlorid
1,3-Propandiyl-bis-(2-propyl-4-(4'-ethylphenyl)-indenyl)-titandichlorid
1,3-Propandiyl-bis-(2-propyl-4-(4'-propylphenyl)-indenyl)-titandichlorid
1,3-Propandiyl-bis-(2-propyl-4-(4'-isopropylphenyl)-indenyl)-titandichlorid
1,3-Propandiyl-bis-(2-propyl-4-(4'-tert-butylphenyl)-indenyl)-titandichlorid
1,3-Propandiyl-bis-(2-propyl-4-(4'-methoxyphenyl)-indenyl)-titandichlorid
1,3-Propandiyl-bis-(2-propyl-4-(1'-naphthyl)-indenyl)-titandichlorid
1,3-Propandiyl-bis-(2-propyl-4-(9'-anthracenyl)-indenyl)-titandichlorid
1,3-Propandiyl-bis-(2-propyl-4-(3',5'-di-tert-butylphenyl)-indenyl)-titandichlorid
1,3-Propandiyl-bis-(2-propyl-4-(4'-trifluormethylphenyl)-indenyl) -titandichlorid
1,3-Propandiyl-bis-(2-isopropylindenyl)-titandichlorid
1,3-Propandiyl-bis-(2-isopropyl-4,5-benzindenyl)-titandichlorid
1,3-Propandiyl-bis-(2-isopropyl-4-phenylindenyl)-titandichlorid
1,3-Propandiyl-bis-(2-isopropyl-4-(4'-methylphenyl)-indenyl)-titandichlorid
1,3-Propandiyl-bis-(2-isopropyl-4-(4'-ethylphenyl)-indenyl)-titandichlorid
1,3-Propandiyl-bis-(2-isopropyl-4-(4'-propylphenyl)-indenyl)-titandichlorid
1,3-Propandiyl-bis-(2-isopropyl-4-(4'-isopropylphenyl)-indenyl) -titandichlorid
1,3-Propandiyl-bis-(2-isopropyl-4-(4'-tert-butylphenyl)-indenyl)-titandichlorid
1,3-Propandiyl-bis-(2-isopropyl-4-(4'-methoxyphenyl)-indenyl)-titandichlorid
1,3-Propandiyl-bis-(2-isopropyl-4-(1'-naphthyl)-indenyl)-titandichlorid
1,3-Propandiyl-bis-(2-isopropyl-4-(9'-anthracenyl)-indenyl)-titandichlorid
1,3-Propandiyl-bis-(2-isopropyl-4-(3',5'-di-tert-butylphenyl)-indenyl)-titandichlorid .
1,3-Propandiyl-bis-(2-isopropyl-4-(4'-trifluormethylphenyl)-inden yl)-titandichlorid
1,3-Propandiyl-bis-(2-isobutylindenyl)-titandichlorid
1,3-Propandiyl-bis-(2-isobutyl-4,5-benzindenyl)-titandichlorid
1,3-Propandiyl-bis-(2-isobutyl-4-phenylindenyl)-titandichlorid
1,3-Propandiyl-bis-(2-isobutyl-4-(4'-methylphenyl)-indenyl)-titandichlorid
1,3-Propandiyl-bis-(2-isobutyl-4-(4'-ethylphenyl)-indenyl)-titandichlorid
1,3-Propandiyl-bis-(2-isobutyl-4-(4'-propylphenyl)-indenyl)-titandichlorid
1,3-Propandiyl-bis-(2-isobutyl-4-(4'-isopropylphenyl)-indenyl)-titandichlorid
1,3-Propandiyl-bis-(2-isobutyl-4-(4'-tert-butylphenyl)-indenyl) -titandichlorid
1,3-Propandiyl-bis-(2-isobutyl-4-(4'-methoxyphenyl)-indenyl)-titandichlorid
1,3-Propandiyl-bis-(2-isobutyl-4-(1'-naphthyl)-indenyl)-titandichlorid
1,3-Propandiyl-bis-(2-isobutyl-4-(9'-anthracenyl)-indenyl)-titandichlorid
1,3-Propandiyl-bis-(2-isobutyl-4-(3',5'-di-tert-butylphenyl)-inde nyl)-titandichlorid
1,3-Propandiyl-bis-(2-isobutyl-4-(4'-trifluormethylphenyl)-indenyl)-titandichlorid
1,3-Propandiyl-bis-(2-butylindenyl)-titandichlorid
1,3-Propandiyl-bis-(2-butyl-4,5-benzindenyl)-titandichlorid
1,3-Propandiyl-bis-(2-butyl-4-phenylindenyl)-titandichlorid
1,3-Propandiyl-bis-(2-butyl-4-(4'-methylphenyl)-indenyl)-titandichlorid
1,3-Propandiyl-bis-(2-butyl-4-(4'-ethylphenyl)-indenyl)-titandichlorid
1,3-Propandiyl-bis-(2-butyl-4-(4'-propylphenyl)-indenyl)-titandichlorid
1,3-Propandiyl-bis-(2-butyl-4-(4'-isopropylphenyl)-indenyl)-titandichlorid
1,3-Propandiyl-bis-(2-butyl-4-(4'-tert-butylphenyl)-indenyl)-titandichlorid
1,3-Propandiyl-bis-(2-butyl-4-(4'-methoxyphenyl)-indenyl)-titandichlorid
1,3-Propandiyl-bis-(2-butyl-4-(1'-naphthyl)-indenyl)-titandichlorid
1,3-Propandiyl-bis-(2-butyl-4-(9'-anthracenyl)-indenyl)-titandichlorid
1,3-Propandiyl-bis-(2-butyl-4-(3',5'-di-tert-butylphenyl)-indenyl )-titandichlorid
1,3-Propandiyl-bis-(2-butyl-4-(4'-trifluormethylphenyl)-indenyl)-titandichlorid
1,3-Propandiyl-bis-(2-tert-butylindenyl)-titandichlorid
1,3-Propandiyl-bis-(2-tert-butyl-4,5-benzindenyl)-titandichlorid
1,3-Propandiyl-bis-(2-tert-butyl-4-phenylindenyl)-titandichlorid
1,3-Propandiyl-bis-(2-tert-butyl-4-(4'-methylphenyl)-indenyl)-titandichlorid
1,3-Propandiyl-bis-(2-tert-butyl-4-(4'-ethylphenyl)-indenyl)-titandichlorid
1,3-Propandiyl-bis-(2-tert-butyl-4-(4'-propylphenyl)-indenyl)-titandichlorid
1,3-Propandiyl-bis-(2-tert-butyl-4-(4'-isopropylphenyl)-indenyl)-titandichlorid
1,3-Propandiyl-bis-(2-tert-butyl-4-(4'-tert-butylphenyl)-indenyl) -titandichlorid
1,3-Propandiyl-bis-(2-tert-butyl-4-(4'-methoxyphenyl)-indenyl)-titandichlorid
1,3-Propandiyl-bis-(2-tert-butyl-4-(1'-naphthyl)-indenyl)-titandichlorid
1,3-Propandiyl-bis-(2-tert-butyl-4-(9'-anthracenyl)-indenyl)-titandichlorid
1,3-Propandiyl-bis-(2-tert-butyl-4-(3',5'-di-tert-butylphenyl)-in denyl)-titandichlorid
1,3-Propandiyl-bis-(2-tert-butyl-4-(4'-trifluormethylphenyl)-inde nyl)-titandichlorid
1,3-Propandiyl-bis-(2-cyclopentylindenyl)-titandichlorid
1,3-Propandiyl-bis-(2-cyclopentyl-4,5-benzindenyl)-titandichlorid
1,3-Propandiyl-bis-(2-cyclopentyl-9-phenylindenyl)-titandichlorid
1,3-Propandiyl-bis-(2-cyclopentyl-4-(4'-methylphenyl)-indenyl)-titandichlorid
1,3-Propandiyl-bis-(2-cyclopentyl-4-(4'-ethylphenyl)-indenyl)-tit andichlorid
1,3-Propandiyl-bis-(2-cyclopentyl-4-(4'-propylphenyl)-indenyl)-titandichlorid
1,3-Propandiyl-bis-(2-cyclopentyl-4-(4'-isopropylphenyl)-indenyl) -titandichlorid
1,3-Propandiyl-bis-(2-cyclopentyl-4-(4'-tert-butylphenyl)-indenyl )-titandichlorid
1,3-Propandiyl-bis-(2-cyclopentyl-4-(4'-methoxyphenyl)-indenyl) -titandichlorid
1,3-Propandiyl-bis-(2-cyclopentyl-4-(1'-naphthyl)-indenyl)-titandichlorid
1,3-Propandiyl-bis-(2-cyclopentyl-4-(9'-anthracenyl)-indenyl)-titandichlorid
1,3-Propandiyl-bis-(2-cyclopentyl-4-(3',5'-di-tert-butylphenyl) -indenyl)-titandichlorid
1,3-Propandiyl-bis-(2-cyclopentyl-4-(4'-trifluormethylphenyl)-ind enyl)-titandichlorid
1,3-Propandiyl-bis-(2-cyclohexylindenyl)-titandichlorid
1,3-Propandiyl-bis-(2-cyclohexyl-4,5-benzindenyl)-titandichlorid
1,3-Propandiyl-bis-(2-cyclohexyl-4-phenylindenyl)-titandichlorid
1,3-Propandiyl-bis-(2-cyclohexyl-4-(4'-methylphenyl)-indenyl)-titandichlorid
1,3-Propandiyl-bis-(2-cyclohexyl-4-(4'-ethylphenyl)-indenyl)-titandichlorid
1,3-Propandiyl-bis-(2-cyclohexyl-4-(4'-propylphenyl)-indenyl)-titandichlorid
1,3-Propandiyl-bis-(2-cyclohexyl-4-(4'-isopropylphenyl)-indenyl)-titandichlorid
1,3-Propandiyl-bis-(2-cyclohexyl-4-(4'-tert-butylphenyl)-indenyl) -titandichlorid
1,3-Propandiyl-bis-(2-cyclohexyl-4-(4'-methoxyphenyl)-indenyl)-titandichlorid
1,3-Propandiyl-bis-(2-cyclohexyl-4-(1'-naphthyl)-indenyl)-titandichlorid
1,3-Propandiyl-bis-(2-cyclohexyl-4-(9'-anthracenyl)-indenyl)-titandichlorid
1,3-Propandiyl-bis-(2-cyclohexyl-4-(3',5'-di-tert-butylphenyl)-in denyl)-titandichlorid
1,3-Propandiyl-bis-(2-cyclohexyl-4-(4'-trifluormethylphenyl)-inde nyl)-titandichlorid
1,3-Propandiyl-bis-(2-methylindenyl)-hafniumdichlorid
1,3-Propandiyl-bis-(2-methyl-4,5-benzindenyl)-hafniumdichlorid
1,3-Propandiyl-bis-(2-methyl-4-phenylindenyl)-hafniumdichlorid
1,3-Propandiyl-bis-(2-methyl-4-(4'-methylphenyl)-indenyl)-hafniumdichlorid
1,3-Propandiyl-bis-(2-methyl-4-(4'-ethylphenyl)-indenyl)-hafniumdichlorid
1,3-Propandiyl-bis-(2-methyl-4-(4'-propylphenyl)-indenyl)-hafniumdichlorid
1,3-Propandiyl-bis-(2-methyl-4-(4'-isopropylphenyl)-indenyl)-hafniumdichlorid
1,3-Propandiyl-bis-(2-methyl-4-(4'-tert-butylphenyl)-indenyl)-haf niumdichlorid
1,3-Propandiyl-bis-(2-methyl-4-(4'-methoxyphenyl)-indenyl)-hafniumdichlorid
1,3-Propandiyl-bis-(2-methyl-4-(1'-naphthyl)-indenyl)-hafniumdichlorid
1,3-Propandiyl-bis-(2-methyl-4-(9'-anthracenyl)-indenyl)-hafniumdichlorid
1,3-Propandiyl-bis-(2-methyl-4-(3',5'-di-tert-butylphenyl)-indenyl)-hafniumdichlorid
1,3-Propandiyl-bis-(2-methyl-4-(4'-trifluormethylphenyl)-indenyl) -hafniumdichlorid
1,3-Propandiyl-bis-(2-ethylindenyl)-hafniumdichlorid
1,3-Propandiyl-bis-(2-ethyl-4,5-benzindenyl)-hafniumdichlorid
1,3-Propandiyl-bis-(2-ethyl-4-phenylindenyl)-hafniumdichlorid
1,3-Propandiyl-bis-(2-ethyl-4-(4'-methylphenyl)-indenyl)-hafniumdichlorid
1,3-Propandiyl-bis-(2-ethyl-4-(4'-ethylphenyl)-indenyl)-hafniumdichlorid
1,3-Propandiyl-bis-(2-ethyl-4-(4'-propylphenyl)-indenyl)-hafniumdichlorid
1,3-Propandiyl-bis-(2-ethyl-4-(4'-isopropylphenyl)-indenyl)-hafniumdichlorid
1,3-Propandiyl-bis-(2-ethyl-4-(4'-tert-butylphenyl)-indenyl)-hafniumdichlorid
1,3-Propandiyl-bis-(2-ethyl-4-(4'-methoxyphenyl)-indenyl)-hafniumdichlorid
1,3-Propandiyl-bis-(2-ethyl-4-(1'-naphthyl)-indenyl)-hafniumdichlorid
1,3-Propandiyl-bis-(2-ethyl-4-(9'-anthracenyl)-indenyl)-hafniumdichlorid
1,3-Propandiyl-bis-(2-ethyl-4-(3',5'-di-tert-butylphenyl)-indenyl )-hafniumdichlorid
1,3-Propandiyl-bis-(2-ethyl-4-(4'-trifluormethylphenyl)-indenyl)-hafniumdichlorid
1,3-Propandiyl-bis-(2-propylindenyl)-hafniumdichlorid
1,3-Propandiyl-bis-(2-propyl-4,5-benzindenyl)-hafniumdichlorid
1,3-Propandiyl-bis-(2-propyl-4-phenylindenyl)-hafniumdichlorid
1,3-Propandiyl-bis-(2-propyl-4-(4'-methylphenyl)-indenyl)-hafniumdichlorid
1,3-Propandiyl-bis-(2-propyl-4-(4'-ethylphenyl)-indenyl)-hafniumdichlorid
1,3-Propandiyl-bis-(2-propyl-4-(4'-propylphenyl)-indenyl)-hafniumdichlorid
1,3-Propandiyl-bis-(2-propyl-4-(4'-isopropylphenyl)-indenyl)-hafniumdichlorid
1,3-Propandiyl-bis-(2-propyl-4-(4'-tert-butylphenyl)-indenyl)-haf niumdichlorid
1,3-Propandiyl-bis-(2-propyl-4-(4'-methoxyphenyl)-indenyl)-hafniumdichlorid
1,3-Propandiyl-bis-(2-propyl-4-(1'-naphthyl)-indenyl)-hafniumdichlorid
1,3-Propandiyl-bis-(2-propyl-4-(9'-anthracenyl)-indenyl)-hafniumdichlorid
1,3-Propandiyl-bis-(2-propyl-4-(3',5'-di-tert-butylphenyl)-indenyl)-hafniumdichlorid
1,3-Propandiyl-bis-(2-propyl-4-(4'-trifluormethylphenyl)-indenyl) -hafniumdichlorid
1,3-Propandiyl-bis-(2-isopropylindenyl)-hafniumdichlorid
1,3-Propandiyl-bis-(2-isopropyl-4,5-benzindenyl)-hafniumdichlorid
1,3-Propandiyl-bis-(2-isopropyl-4-phenylindenyl)-hafniumdichlorid
1,3-Propandiyl-bis-(2-isopropyl-4-(4'-methylphenyl)-indenyl)-hafn iumdichlorid
1,3-Propandiyl-bis-(2-isopropyl-4-(4'-ethylphenyl)-indenyl)-hafniumdichlorid
1,3-Propandiyl-bis-(2-isopropyl-4-(4'-propylphenyl)-indenyl)-hafniumdichlorid
1,3-Propandiyl-bis-(2-isopropyl-4-(4'-isopropylphenyl)-indenyl) -hafniumdichlorid
1,3-Propandiyl-bis-(2-isopropyl-4-(4'-tert-butylphenyl)-indenyl)-hafniumdichlorid
1,3-Propandiyl-bis-(2-isopropyl-4-(4'-methoxyphenyl)-indenyl)-haf niumdichlorid
1,3-Propandiyl-bis-(2-isopropyl-4-(1'-naphthyl)-indenyl)-hafniumdichlorid
1,3-Propandiyl-bis-(2-isopropyl-4-(9'-anthracenyl)-indenyl)-hafniumdichlorid
1,3-Prapandiyl-bis-(2-isopropyl-4-(3',5'-di-tert-butylphenyl)-ind enyl)-hafniumdichlorid
1,3-Propandiyl-bis-(2-isopropyl-4-(4'-trifluormethylphenyl)-inden yl)-hafniumdichlorid
1,3-Propandiyl-bis-(2-isobutylindenyl)-hafniumdichlorid
1,3-Propandiyl-bis-(2-isobutyl-4,5-benzindenyl)-hafniumdichlorid
1,3-Propandiyl-bis-(2-isobutyl-4-phenylindenyl)-hafniumdichlorid
1,3-Propandiyl-bis-(2-isobutyl-4-(4'-methylphenyl)-indenyl)-hafniumdichlorid
1,3-Propandiyl-bis-(2-isobutyl-4-(4'-ethylphenyl)-indenyl)-hafniumdichlorid
1,3-Propandiyl-bis-(2-isobutyl-4-(4'-propylphenyl)-indenyl)-hafniumdichlorid
1,3-Propandiyl-bis-(2-isobutyl-4-(4'-isopropylphenyl)-indenyl)-ha fniumdichlorid
1,3-Propandiyl-bis-(2-isobutyl-4-(4'-tert-butylphenyl)-indenyl) -hafniumdichlorid
1,3-Propandiyl-bis-(2-isobutyl-4-(4'-methoxyphenyl)-indenyl)-hafniumdichlorid
1,3-Propandiyl-bis-(2-isobutyl-4-(1'-naphthyl)-indenyl)-hafniumdichlorid
1,3-Propandiyl-bis-(2-isobutyl-4-(9'-anthracenyl)-indenyl)-hafniumdichlorid
1,3-Propandiyl-bis-(2-isobutyl-4-(3',5'-di-tert-butylphenyl)-inde nyl)-hafniumdichlorid
1,3-Propandiyl-bis-(2-isobutyl-4-(4'-trifluormethylphenyl)-indenyl)-hafniumdichlorid
1,3-Propandiyl-bis-(2-butylindenyl)-hafniumdichlorid
1,3-Propandiyl-bis-(2-butyl-4,5-benzindenyl)-hafniumdichlorid
1,3-Propandiyl-bis-(2-butyl-4-phenylindenyl)-hafniumdichlorid
1,3-Propandiyl-bis-(2-butyl-4-(4'-methylphenyl)-indenyl)-hafniumdichlorid
1,3-Propandiyl-bis-(2-butyl-4-(4'-ethylphenyl)-indenyl)-hafniumdichlorid
1,3-Propandiyl-bis-(2-butyl-4-(4'-propylphenyl)-indenyl)-hafniumdichlorid
1,3-Propandiyl-bis-(2-butyl-4-(4'-isopropylphenyl)-indenyl)-hafniumdichlorid
1,3-Propandiyl-bis-(2-butyl-4-(4'-tert-butylphenyl)-indenyl)-hafniumdichlorid
1,3-Propandiyl-bis-(2-butyl-4-(4'-methoxyphenyl)-indenyl)-hafniumdichlorid
1,3-Propandiyl-bis-(2-butyl-4-(1'-naphthyl)-indenyl)-hafniumdichlorid
1,3-Propandiyl-bis-(2-butyl-4-(9'-anthracenyl)-indenyl)-hafniumdichlorid
1,3-Propandiyl-bis-(2-butyl-4-(3',5'-di-tert-butylphenyl)-indenyl )-hafniumdichlorid
1,3-Propandiyl-bis-(2-butyl-4-(4'-trifluormethylphenyl)-indenyl)-hafniumdichlorid
1,3-Propandiyl-bis-(2-tert-butylindenyl)-hafniumdichlorid
1,3-Propandiyl-bis-(2-tert-butyl-4,5-benzindenyl)-hafniumdichlorid
1,3-Propandiyl-bis-(2-tert-butyl-4-phenylindenyl)-hafniumdichlorid
1,3-Propandiyl-bis-(2-tert-butyl-4-(4'-methylphenyl)-indenyl)-haf niumdichlorid
1,3-Propandiyl-bis-(2-tert-butyl-4-(4'-ethylphenyl)-indenyl)-hafniumdichlorid
1,3-Propandiyl-bis-(2-tert-butyl-4-(4'-propylphenyl)-indenyl)-haf niumdichlorid
1,3-Propandiyl-bis-(2-tert-butyl-4-(4'-isopropylphenyl)-indenyl)-hafniumdichlorid
1,3-Propandiyl-bis-(2-tert-butyl-4-(4'-tert-butylphenyl)-indenyl) -hafniumdichlorid
1,3-Propandiyl-bis-(2-tert-butyl-4-(4'-methoxyphenyl)-indenyl) -hafniumdichlorid
1,3-Propandiyl-bis-(2-tert-butyl-4-(1'-naphthyl)-indenyl)-hafniumdichlorid
1,3-Propandiyl-bis-(2-tert-butyl-4-(9'-anthracenyl)-indenyl)-hafniumdichlorid
1,3-Propandiyl-bis-(2-tert-butyl-4-(3',5'-di-tert-butylphenyl)-in denyl)-hafniumdichlorid
1,3-Propandiyl-bis-(2-tert-butyl-4-(4'-trifluormethylphenyl)-inde nyl)-hafniumdichlorid
1,3-Propandiyl-bis-(2-cyclopentylindenyl)-hafniumdichlorid
1,3-Propandiyl-bis-(2-cyclopentyl-4,5-benzindenyl)-hafniumdichlorid
1,3-Propandiyl-bis-(2-cyclopentyl-4-phenylindenyl)-hafniumdichlorid
1,3-Propandiyl-bis-(2-cyclopentyl-4-(4'-methylphenyl)-indenyl) -hafniumdichlorid
1,3-Propandiyl-bis-(2-cyclopentyl-4-(4'-ethylphenyl)-indenyl)-haf niumdichlorid
1,3-Propandiyl-bis-(2-cyclopentyl-4-(4'-propylphenyl)-indenyl)-ha fniumdichlorid
1,3-Propandiyl-bis-(2-cyclopentyl-4-(4'-isopropylphenyl)-indenyl) -hafniumdichlorid
1,3-Propandiyl-bis-(2-cyclopentyl-4-(4'-tert-butylphenyl)-indenyl )-hafniumdichlorid
1,3-Propandiyl-bis-(2-cyclopentyl-4-(4'-methoxyphenyl)-indenyl) -hafniumdichlorid
1,3-Propandiyl-bis-(2-cyclopentyl-4-(1'-naphthyl)-indenyl)-hafniu mdichlorid
1,3-Propandiyl-bis-(2-cyclopentyl-4-(9'-anthracenyl)-indenyl)-haf niumdichlorid
1,3-Propandiyl-bis-(2-cyclopentyl-4-(3',5'-di-tert-butylphenyl) -indenyl)-hafniumdichlorid
1,3-Propandiyl-bis-(2-cyclopentyl-4-(4'-trifluormethylphenyl)-ind enyl)-hafniumdichlorid
1,3-Propandiyl-bis-(2-cyclohexylindenyl)-hafniumdichlorid
1,3-Propandiyl-bis-(2-cyclohexyl-4,5-benzindenyl)-hafniumdichlorid
1,3-Propandiyl-bis-(2-cyclohexyl-4-phenylindenyl)-hafniumdichlorid
1,3-Propandiyl-bis-(2-cyclohexyl-4-(4'-methylphenyl)-indenyl)-haf niumdichlorid
1,3-Propandiyl-bis-(2-cyclohexyl-4-(4'-ethylphenyl)-indenyl)-hafniumdichlorid
1,3-Propandiyl-bis-(2-cyclohexyl-4-(4'-propylphenyl)-indenyl)-haf niumdichlorid
1,3-Propandiylbis-(2-cyclohexyl-4-(4'-isopropylphenyl)-indenyl)-hafniumdichlori d
1,3-Propandiyl-bis-(2-cyclohexyl-4-(4'-tert-butylphenyl)-indenyl) -hafniumdichlorid
1,3-Propandiyl-bis-(2-cyclohexyl-4-(4'-methoxyphenyl)-indenyl) -hafniumdichlorid
1,3-Propandiyl-bis-(2-cyclohexyl-4-(1'-naphthyl)-indenyl)-hafniumdichlorid
1,3-Propandiyl-bis-(2-cyclohexyl-4-(9'-anthracenyl)-indenyl)-hafn iumdichlorid
1,3-Progandiyl-bis-(2-cyclohexyl-4-(3',5'-di-tert-butylphenyl)-in denyl)-hafniumdichlorid
1,3-Propandiyl-bis-(2-cyclohexyl-4-(4'-trifluormethylphenyl)-inde nyl)-hafniumdichlorid

Die nach dem erfindungsgemäßen Verfahren hergestellten Metallocene sind hochaktive Katalysatorkomponenten für die Olefinpolymerisation. Je nach Substitutionsmuster der Liganden können die Metallocene als Isomerengemisch anfallen. Die Metallocene werden für die Polymerisation bevorzugt isomerenrein eingesetzt, die Verwendung des Racemats ist aber in den meisten Fällen ausreichend. Die nach dem erfindungsgemäßen Verfahren hergestellten Metallocene können auch als Katalysatoren in der organischen Synthese eingesetzt werden, wobei vorzugsweise die reinen Enantiomere zum Einsatz kommen.

Die nach dem erfindungsgemäßen Verfahren hergestellten Metallkomplexe der Formel I eignen sich insbesondere als Bestandteil von Katalysatorsystemen zur Herstellung von Polyolefinen durch Polymerisation von mindestens einem Olefin in Gegenwart eines Katalysators, der mindestens einen Cokatalysator und mindestens einen Metallkomplex enthält.

Der Cokatalysator, der zusammen mit einem Metallkomplex der Formel I das Katalysatorsystem bildet, enthält mindestens eine Verbindung vom Typ eines Aluminoxans oder einer Lewis-Säure oder einer ionischen Verbindung, die durch Reaktion mit einem Metallkomplex diesen in eine kationische Verbindung überführt.

Beispiele für solche Cokatalysatoren sind in DE 19962905 beschrieben.

Der Cokatalysator und/oder der Metallkomplex können ungeträgert oder geträgert vorliegen. Beispiele für geträgerte Cokatalysatoren und/oder geträgerte Metallkomplexe sind in DE 19962905 beschrieben.

Die Trägerkomponente des Katalysatorsystems kann ein beliebiger organischer oder anorganischer, inerter Feststoff sein, insbesondere ein poröser Träger wie Talk, anorganische Oxide und feinteilige Polymerpulver (z.B. Polyolefine). Beispiele für geeignete Trägermaterialien und Trägerungsverfahren sind in DE 19962905 beschrieben.

Unter dem Begriff Polymerisaton wird eine Homopolymerisation wie auch eine Copolymerisation verstanden.

Bevorzugt werden Olefine der Formel Rₘ-CH=CH-Rₙ polymerisiert, worin Rₘ und Rₙ gleich oder verschieden sind und ein Wasserstoffatom oder einen kohlenstoffhaltigen Rest mit 1 bis 20 C-Atomen, insbesondere 1 bis 10 C-Atome, bedeuten, und Rₘ und Rₙ zusammen mit den sie verbindenden Atomen einen oder mehrere Ringe bilden können. Beispiele für solche Olefine sind in DE 19962905 beschrieben.

Die Polymerisation wird bei einer Temperatur von 0 bis 300 °C , bevorzugt 50 bis 200°C, ganz besonders bevorzugt 50 - 80 °C durchgeführt. Der Druck beträgt 0,5 bis 2000 bar, bevorzugt 5 bis 64 bar.

Die Polymerisation kann in Lösung, in Masse, in Suspension oder in der Gasphase, kontinuierlich oder diskontinuierlich, ein- oder mehrstufig durchgeführt werden. Beispiele für geeignete Polymerisationsverfahren sind in DE 19962905 beschrieben.

Als Molmassenregler und/oder zur Steigerung der Aktivität wird, falls erforderlich, Wasserstoff zugegeben.

Das Katalysatorsystem kann dem Polymerisationssystem pur zugeführt werden oder zur besseren Dosierbarkeit mit inerten Komponenten wie Paraffinen, Ölen oder Wachsen versetzt werden. Bei der Polymerisation kann außerdem ein Antistatikum zusammen mit oder getrennt von dem eingesetzten Katalysatorsystem in das Polymerisationssystem eindosiert werden.

Das erfindungsgemäße Verfahren zeichnet sich dadurch aus, daß unter Verwendung eines speziellen Verbrückungsreagenzes der Formel V mehrfach substituierte Ligandensysteme der Formel VI in hohen Ausbeuten und Reinheiten erhalten werden können, die einen effizienten Zugang zu Übergangsmetallkomplexen der Formel I eröffnen.

Die Erfindung wird durch folgende, die Erfindung jedoch nicht einschränkenden Beispiele erläutert.

Allgemeine Angaben: Die Herstellung und Handhabung der organometallischen Verbindungen erfolgte unter Ausschluß von Luft und Feuchtigkeit unter Argon-Schutzgas (Schlenk-Technik bzw. Glove-Box). Alle benötigten Lösemittel wurden vor Gebrauch mit Argon gespült und über Molsieb absolutiert. 1,2-Bistrifluormethylsulfonyloxyethan wurde nach Lindner, Ekkehard; Au, Guenter von; Eberle, Hans-Juergen; Chem.Ber.; 114; 2; 1981; 810-813 synthetisiert. Die Darstellung von 1,3-Bistrifluormethylsulfonyloxypropan 1,2-Bistrifluormethylsulfonyl-oxycyclohexan erfolgte analog. Die verwendeten Indene wurden wie in WO 9840331 beschrieben dargestellt.

### Beispiel 1:

### Bis-1,2-(2-methyl-4-(4'-tert-butylphenyl)-indenyl)-ethan

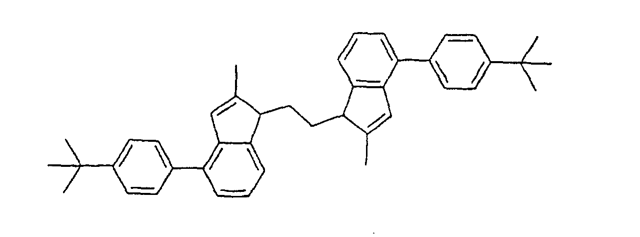

In einem 1 1-Dreihalskolben wurden 39,3 g (150 mmol) 2-Methyl-7-(4'-tert-butylphenyl)-inden in 110 ml Tetrahydrofuran mit 60 ml n-Butyllithium (150 mmol, 2,5 M in Toluol) bei 0°C versetzt. Es wurde noch 1 h bei Raumtemperatur gerührt und die resultierende rote Lösung zu einer auf - 40°C abgekühlten Lösung von 24,5 g (75 mmol) 1,2-Bistrifluormethylsulfonyloxyethan in 26 ml Tetrahydrofuran innerhalb von 30 min zugetropft. Es wurde noch 1 h bei -20°C und 13 h bei Raumtemperatur gerührt. Danach wurde das Lösungsmittel im Vakuum entfernt und der Rückstand mit 150 ml Toluol versetzt. Die organische Phase wurde nacheinander 1 x mit 100 ml einer gesättigten NaHCO₃ - Lösung, 2 x mit je 50 ml einer gesättigten NaHCO₃ - Lösung und 2 x mit je 100 ml Wasser gewaschen. Die organische Phase wurde über Magnesiumsulfat getrocknet und das Lösungsmittel im Vakuum entfernt. Das so erhaltene.Rohprodukt wurde durch eine Säulenchromatographie an Kieselgel gereinigt, wobei das Produkt mit einer Ausbeute von 32 g (58 mmol, 77 %) und einer Reinheit von > 95 % (laut GC) in Form eines gelben Öls erhalten wurde. ¹H-NMR: δ = 7,50 - 7,16 (m, 14 H, aromat. H), 3,34 (s, 4H, benzyl. H), 2,77 (s, 4H, C2-Brücke), 1,94 (s, 6H, CH₃), 1,37 (s, 18H, C(CH₃)₃) ppm.

### Beispiel 2: Bis-1,2-(2-ethyl-4-(4'-tert-butylphenyl)-indenyl)-ethan

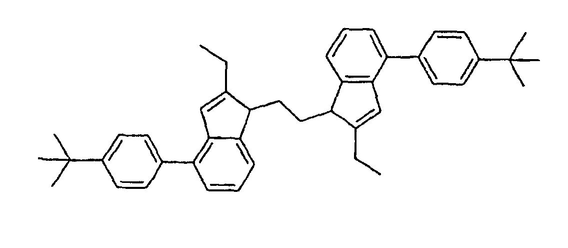

In einem 250 ml-Dreihalskolben wurden 11,1 g (40 mmol) 2-Ethyl-7-(4'-tert-butylphenyl)-inden in 30 ml Tetrahydrofuran mit 16 ml n-Butyllithium (40 mmol, 2,5 M in Toluol) bei 0°C versetzt. Es wurde noch 1 h bei Raumtemperatur gerührt und die resultierende rote Lösung zu einer auf - 40°C abgekühlten Lösung von 6,5 g.(20 mmol) 1,2-Bistrifluormethylsulfonyloxyethan in 26 ml Tetrahydrofuran innerhalb von 30 min zugetropft. Es wurde noch 1 h bei -20°C und 13 h bei Raumtemperatur gerührt. Danach wurde das Lösungsmittel im Vakuum entfernt und der Rückstand mit 150 ml Toluol versetzt. Die organische Phase wurde nacheinander 1 x mit 100 ml einer gesättigten NaHCO₃ - Lösung, 2 x mit je 50 ml einer gesättigten NaHCO₃ - Lösung und 2 x mit je 100 ml Wasser gewaschen. Die organische Phase wurde über Magnesiumsulfat getrocknet und das Lösungsmittel im Vakuum entfernt. Das so erhaltene Rohprodukt wurde durch eine Säulenchromatographie an Kieselgel gereinigt, wobei das Produkt mit einer Ausbeute von 7,4 g (13 mmol, 64 %) und einer Reinheit von > 95 % (laut GC) in Form eines gelben Öls erhalten wurde. ¹H-NMR: δ = 7,51 - 7,15 (m, 14 H, aromat. H), 3,32 (s, 4H, benzyl. H), 2,67 (s, 4H, C2-Brücke), 1,94 (q, 4H, CH₂), 1,37 (s, 18H, C(CH₃)₃), 1,07 (t, 6H, CH₃) ppm.

### Beispiel 3: Bis-1,2-(2-isopropyl-4-(4'-tert-butylphenyl)-indenyl)-ethan

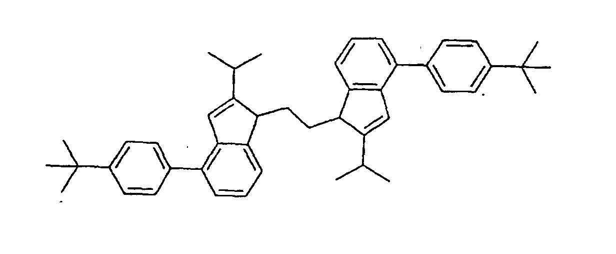

In einem 250 ml-Dreihalskolben wurden 17,4 g (60 mmol) 2-Isopropyl-7-(4'-tert-butylphenyl)-inden in 50 ml Tetrahydrofuran mit 24 ml n-Butyllithium (60 mmol, 2,5 M in Toluol) bei 0°C versetzt. Es wurde noch 1 h bei Raumtemperatur gerührt und die resultierende rote Lösung zu einer auf - 40°C abgekühlten Lösung von 9,8 g (30 mmol) 1,2-Bistrifluormethylsulfonyloxyethan in 10 ml Tetrahydrofuran innerhalb von 30 min zugetropft. Es wurde noch 1 h bei -20°C und 13 h bei Raumtemperatur gerührt. Danach wurde das Lösungsmittel im Vakuum entfernt und der Rückstand mit 150 ml Toluol versetzt. Die organische Phase wurde nacheinander 1 x mit 100 ml einer gesättigten NaHCO₃ - Lösung, 2 x mit je 50 ml einer gesättigten NaHCO₃ - Lösung und 2 x mit je 100 ml Wasser gewaschen. Die organische Phase wurde über Magnesiumsulfat getrocknet und das Lösungsmittel im Vakuum entfernt. Das so erhaltene Rohprodukt wurde durch eine Säulenchromatographie an Kieselgel gereinigt, wobei das Produkt mit einer Ausbeute von 9 g (15 mmol, 53 %) und einer Reinheit von > 95 % (laut GC) in Form eines gelben Öls erhalten wurde. ¹H-NMR: δ = 7,49 - 7,13 (m, 14 H, aromat. H), 3,33 (s, 4H, benzyl. H), 2,71 (s, 4H, C2-Brücke), 2,52 (m, 2H, iso-Propyl-H), 1,37 (s, 18H, C(CH₃)₃), 1,11 (m, 12H, CH₃) ppm.

### Beispiel 4: Bis-1,3-(2-methyl-4-phenylindenyl)-propan

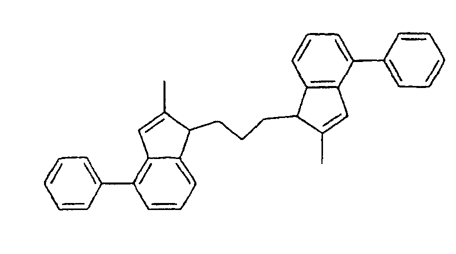

In einem 250 ml-Dreihalskolben wurden 20,6 g (100 mmol) 2-Methyl-7-phenyl-inden in 100 ml Tetrahydrofuran mit 40 ml n-Butyllithium (100 mmol, 2,5 M in Toluol) bei 0°C versetzt. Es wurde noch 1 h bei Raumtemperatur gerührt und die resultierende rote Lösung zu einer auf - 40°C abgekühlten Lösung von 17,1 g (50 mmol) 1,3-Bistrifluormethylsulfonyloxypropan in 40 ml Tetrahydrofuran innerhalb von 30 min zugetropft. Es wurde noch 1 h bei -20°C und 13 h bei Raumtemperatur gerührt. Danach wurde das Lösungsmittel im Vakuum entfernt und der Rückstand mit 150 ml Toluol versetzt. Die organische Phase wurde nacheinander 1 x mit 100 ml einer gesättigten NaHCO₃ - Lösung, 2 x mit je 50 ml einer gesättigten NaHCO₃ - Lösung und 2 x mit je 100 ml Wasser gewaschen. Die organische Phase wurde über Magnesiumsulfat getrocknet und das Lösungsmittel im Vakuum entfernt. Das so erhaltene Rohprodukt wurde durch eine Säulenchromatographie an Kieselgel gereinigt, wobei das Produkt mit einer Ausbeute von 37 g (81 mmol, 81 %) und einer Reinheit von > 95 % (laut GC) in Form eines gelben Öls erhalten wurde. ¹H-NMR: δ = 7,48 - 7,08 (m, 16 H, aromat. H), 3,22 (s, 4H, benzyl. H), 1,96 (s, 4H, CH₂), 1,71 (s, 6H, CH₃), 1,37 (s, 2H, CH₂) ppm.

### Beispiel 5: Bis-E-1,2-(2-propyl-4-phenylindenyl)-cyclohexan

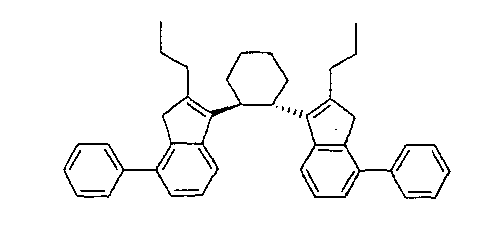

In einem 250 ml-Dreihalskolben wurden 23,4 g (100 mmol) 2-n-Propyl-7-phenyl-inden in 100 ml Tetrahydrofuran mit 40 ml n-Butyllithium (100 mmol, 2,5 M in Toluol) bei 0°C versetzt. Es wurde noch 1 h bei Raumtemperatur gerührt und die resultierende rote Lösung zu einer auf - 40°C abgekühlten Lösung von 19,0 g (50 mmol) 1,2-Bistrifluormethylsulfonyloxycyclohexan in 40 ml Tetrahydrofuran innerhalb von 30 min zugetropft. Es wurde noch 1 h bei -20°C und 13 h bei Raumtemperatur gerührt. Danach wurde das Lösungsmittel im Vakuum entfernt und der Rückstand mit 150 ml Toluol versetzt. Die organische Phase wurde nacheinander 1 x mit 100 ml einer gesättigten NaHCO₃ - Lösung, 2 x mit je 50 ml einer gesättigten NaHCO₃ - Lösung und 2 x mit je 100 ml Wasser gewaschen. Die organische Phase wurde über Magnesiumsulfat getrocknet und das Lösungsmittel im Vakuum entfernt. Das so erhaltene Rohprodukt wurde durch eine Säulenchromatographie an Kieselgel gereinigt, wobei das Produkt mit einer Ausbeute von 43 g (79 mmol, 79 %) und einer Reinheit von > 95 % (laut GC) in Form eines gelben Öls erhalten wurde. ¹H-NMR: δ = 7,50 - 7,06 (m, 16 H, aromat. H), 3,33 (s, 4H, benzyl. H), 1,94 - 0,96 (m, 24H, CH, CH₂, CH₃) ppm.

### Beispiel 6: 1,2-Ethandiyl-bis-(2-methyl-4-(4'-tert-butylphenyl)-indenyl)-zirkoniumdichlorid

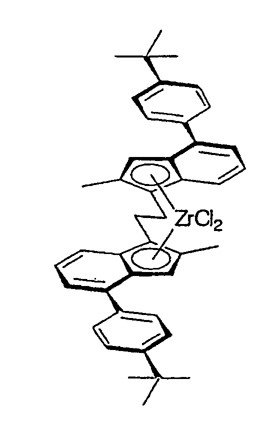

In einem 500 ml Dreihalskolben wurden 9,1 g (16,5 mmol) Bis-1,2-(2-methyl-4-(4'-tert-butylphenyl)-indenyl)-ethan in 230 ml Diethylether vorgelegt. Die Suspension wurde bei Raumtemperatur mit 20,7 ml (33,1 mmol, 1,6 M in Hexan) n-BuLi versetzt.

Die nun gelbe Suspension wurde 12 h bei Raumtemperatur gerührt. Dann wurden bei 0°C 5,3 g (16,5 mmol) Zirkontetrachlorid-Dimethoxyethan-Komplex zugegeben. Die Suspension wurde noch 12 h bei RT gerührt. Der gelbe Feststoff wurde durch Filtration über eine G3-Fritte isoliert und mit 20 ml Diethylether gewaschen. Der LiCl-haltige Rohkomplex (quant.) wurde in einem 1 l Kolben mit 310 ml Toluol bei 80°C gerührt und dann über toluol-feuchtes Celite filtriert. Das Celite wurde noch mit 150 ml 80°C warmem Toluol gewaschen. Das Filtrat wurde auf 20 ml eingeengt und bei 4°C gelagert, wobei der Komplex in gelben Nadeln auskristallisierte. Durch Filtration wurden 3,4 g (4,8 mmol, 29 %, r/m > 4:1) des gelben Komplexes isoliert. ¹H-NMR: δ = 7,75 - 6,97 (m, 14 H, aromat. H), 6,54 (s, 2H, Cp-Ind-H), 4,10, 3,60 (2 x m, 4H, CH₂CH₂), 2,12 (s, 6H, CH₃), 1,31 (s, 18H, tert-Butyl) ppm.

### Beispiel 7: 1,2-Ethandiyl-bis-(2-ethyl-4-(4'-tert-butylphenyl)-indenyl)-zirkoniumdichlorid

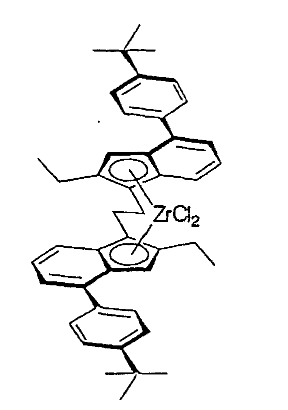

In einem 500 ml Dreihalskolben wurden 7,4 g (13,0 mmol) Bis-1,2-(2-ethyl-4-(4'-tert-butylphenyl)-indenyl)-ethan in 200 ml Diethylether vorgelegt. Die Suspension wurde bei Raumtemperatur mit 16,3 ml (26 mmol, 1,6 M in Hexan) n-BuLi versetzt.

Die nun gelbe Suspension wurde 12 h bei Raumtemperatur gerührt. Dann wurden bei 0°C 4,2 g (13 mmol) Zirkontetrachlorid-Dimethoxyethan-Komplex zugegeben. Die Suspension wurde noch 12 h bei RT gerührt. Der gelbe Feststoff wurde durch Filtration über eine G3-Fritte isoliert und mit 20 ml Diethylether gewaschen. Der LiCl-haltige Rohkomplex (quant.) wurde in einem 1 l Kolben mit 240 ml Toluol bei 80°C gerührt und dann über toluol-feuchtes Celite filtriert. Das Celite wurde noch mit 100 ml 80°C warmem Toluol gewaschen. Das Filtrat wurde auf 20 ml eingeengt und bei 4°C gelagert, wobei der Komplex in gelben Nadeln auskristallisierte. Durch Filtration wurden 3,3 g (4,5 mmol, 34 %, r/m > 7:1) des gelben Komplexes isoliert. ¹H-NMR: δ = 7,70 - 6,92 (m, 14 H, aromat. H), 6,52 (s, 2H, Cp-Ind-H), 4,11, 3,62 (2 x m, 4H, CH₂CH₂), 2,86 (m, 4H, CH₂), 1,32 (s, 18H, tert-Butyl), 0,88 (m, 6H, CH₃) ppm.

### Beispiel 8: 1,2-Ethandiyl-bis-(2-isopropyl-4-(4'-tert-butylphenyl)-indenyl)-zirkoniumdichlorid

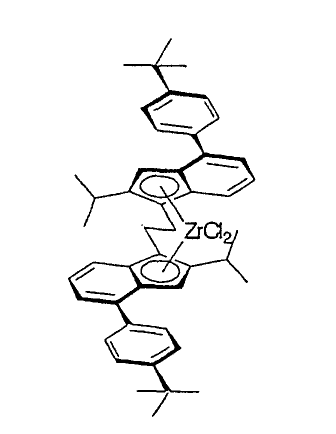

In einem 500 ml Dreihalskolben wurden 9,0 g (15,0 mmol) Bis-1,2-(2-isopropyl-4-(4'-tert-butylphenyl)-indenyl)-ethan in 210 ml Diethylether vorgelegt. Die Suspension wurde bei Raumtemperatur mit 18,8 ml (30 mmol, 1,6 M in Hexan) n-BuLi versetzt.

Die nun gelbe Suspension wurde 12 h bei Raumtemperatur gerührt. Dann wurden bei 0°C 4,8 g (15 mmol) Zirkontetrachlorid-Dimethoxyethan-Komplex zugegeben. Die Suspension wurde noch 12 h bei RT gerührt. Der gelbe Feststoff wurde durch Filtration über eine G3-Fritte isoliert und mit 20 ml Diethylether gewaschen. Der LiCl-haltige Rohkomplex (quant.) wurde in einem 1 1 Kolben mit 220 ml Toluol bei 80°C gerührt und dann über toluol-feuchtes Celite filtriert. Das Celite wurde noch mit 90 ml 80°C warmem Toluol gewaschen. Das Filtrat wurde auf 20 ml eingeengt und bei 4°C gelagert, wobei der Komplex in gelben Nadeln auskristallisierte. Durch Filtration wurden 3,7 g (4,8 mmol, 32 %, r/m > 5:1) des gelben Komplexes isoliert. ¹H-NMR: δ = 7,74 - 6,90 (m, 14 H, aromat. H), 6,55 (s, 2H, Cp-Ind-H), 4,12, 3,63 (2 x m, 4H, CH₂CH₂), 2,97 (m, 2H, C_{H}), 1,31 (s, 18H, tert-Butyl), 0,80 (m, 12H, CH₃) ppm.

### Beispiel 9: 1,3-Propandiyl-bis-(2-methyl-4-phenyl-indenyl)-zirkoniumdichlorid

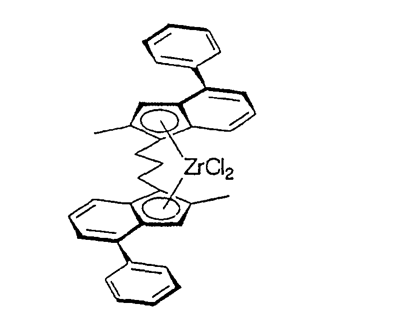

In einem 500 ml Dreihalskolben wurden 7,6 g (15,0 mmol) Bis-1,3-(2-methyl-4-phenyl-indenyl)-propan in 210 ml Diethylether vorgelegt. Die Suspension wurde bei Raumtemperatur mit 18,8 ml (30 mmol, 1,6 M in Hexan) n-BuLi versetzt.

Die nun gelbe Suspension wurde 12 h bei Raumtemperatur gerührt. Dann wurden bei 0°C 4,8 g (15 mmol) Zirkontetrachlorid-Dimethoxyethan-Komplex zugegeben. Die Suspension wurde noch 12 h bei RT gerührt. Der gelbe Feststoff wurde durch Filtration über eine G3-Fritte isoliert und mit 20 ml Diethylether gewaschen. Der LiCl-haltige Rohkomplex (quant.) wurde in einem 1 1 Kolben mit 210 ml Toluol bei 80°C gerührt und dann über toluol-feuchtes Celite filtriert. Das Celite wurde noch mit 100 ml 80°C warmem Toluol gewaschen. Das Filtrat wurde auf 20 ml eingeengt und bei 4°C gelagert, wobei der Komplex in gelben Nadeln auskristallisierte. Durch Filtration wurden 3,9 g (5,8 mmol, 38 %, r/m > 3:1) des gelben Komplexes isoliert. ¹H-NMR: δ = 7,69 - 6,87 (m, 16 H, aromat. H), 6,43 (s, 2H, Cp-Ind-H), 4,15, 3,73 (2 x m, 6H, CH₂CH₂), 2,11 (s, 6H, CH₃) ppm.

### Beispiel 10: 1,2-Cyclohexandiyl-bis-(2-propyl-4-phenyl)-indenyl)-zirkoniumdichlorid

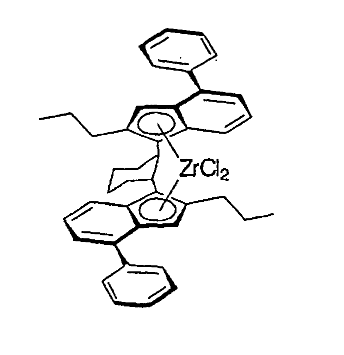

In einem 500 ml Dreihalskolben wurden 8,2 g (15,0 mmol) Bis-1,2-(2-methyl-4-phenyl-indenyl)-cyclohexan in 210 ml Diethylether vorgelegt. Die Suspension wurde bei Raumtemperatur mit 18,8 ml (30 mmol, 1,6 M in Hexan) n-BuLi versetzt.

Die nun gelbe Suspension wurde 12 h bei Raumtemperatur gerührt. Dann wurden bei 0°C 4,8 g (15 mmol) Zirkontetrachlorid-Dimethoxyethan-Komplex zugegeben. Die Suspension wurde noch 12 h bei RT gerührt. Der gelbe Feststoff wurde durch Filtration über eine G3-Fritte isoliert und mit 20 ml Diethylether gewaschen. Der LiCl-haltige Rohkomplex (quant.) wurde in einem 1 1 Kolben mit 180 ml Toluol bei 80°C gerührt und dann über toluol-feuchtes Celite filtriert. Das Celite wurde noch mit 80 ml 80°C warmem Toluol gewaschen. Das Filtrat wurde auf 20 ml eingeengt und bei 4°C gelagert, wobei der Komplex in gelben Nadeln auskristallisierte.. Durch Filtration wurden 3,3 g (4,7 mmol, 31 %, r/m > 4:1) des gelben Komplexes isoliert. ¹H-NMR: δ = 7,74 - 6,89 (m, 16 H, aromat. H), 6,47 (s, 2H, Cp-Ind-H), 4,01, 3,52 (2 x m, 2H, CHCH), 2,96 (m, 4H, CH₂), 1,33-0,88 (m, 18H, CH₂, CH₃, Cy-CH₂) ppm.

## Patentansprüche

1. Verfahren zur Herstellung von Verbindungen der Formel I: 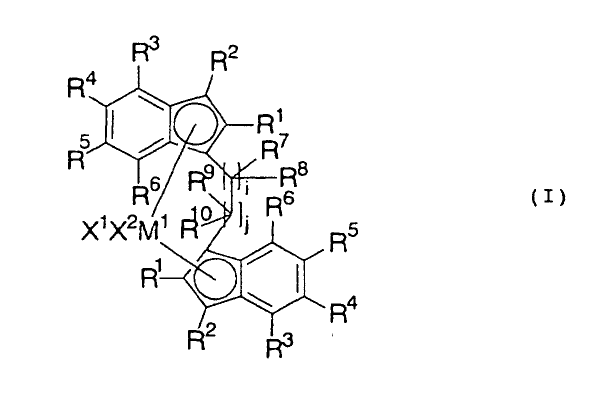 worin
M¹ Ti, Zr oder Hf ist,
R¹ gleich oder verschieden sind und eine C₁-C₂₀ - kohlenstoffhaltige Gruppe bedeuten, und
R² gleich oder verschieden sind und Wasserstoff, eine C₁-C₂₀ - kohlenstoffhaltige Gruppe bedeuten, wobei R¹ mit R² auch ein mono- oder polycyclisches Ringsystem bilden kann, und
R³ gleich oder verschieden sind und ein Wasserstoffatom oder eine C₆-C₁₈-Arylgruppe, die gegebenenfalls substituiert sein kann, C₅-C₁₈-Heteroaryl, C₇-C₂₀-Arylalkyl, C₇-C₂₀-Alkylaryl, fluorhaltiges C₆-C₁₈-Aryl, fluorhaltiges C₇-C₂₀-Arylalkyl oder fluorhaltiges C₇-C₂₀-Alkylaryl ist und zwei Reste R³ mit R⁴ ein mono- oder polycyclisches Ringssystem bilden können,
R⁴ gleich oder verschieden sind und entweder ein Wasserstoffatom bedeutet oder mit R³ ein mono- oder polycyclisches Ringsystem bildet,
R⁵, R⁶ jeweils gleich oder verschieden sind und ein Wasserstoffatom, eine C₁-C₂₀ - kohlenstoffhaltige Gruppe, bedeuten,
R⁷, R⁸, R⁹, R¹⁰ gleich oder verschieden sind und wasserstoffatome, eine C₁-C₂₀- kohlenstoffhaltige Gruppe bedeuten, und untereinander ein mono- oder bicyclisches Ringsystem bilden können,
i gleich 1 bis 10 ist und
j gleich 1 bis 10 ist und
X¹, X² gleich oder verschieden sein können und Halogenatome, Alkylgruppen oder substituierte oder unsubstituierte Phenolate sind oder X¹ mit einem oder mehreren Resten X¹ oder X² ein mono- oder polycyclisches Ringsystem bildet,
umfassend folgendene Schritte:
A) Umsetzung einer Verbindung der Formel II 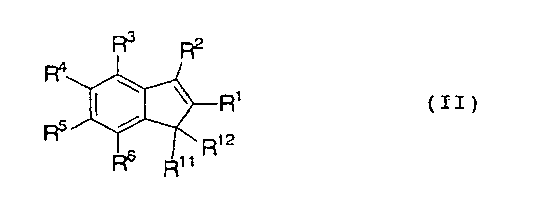 worin
R¹, R², R³, R⁴, R⁵ und R⁶ die gleiche Bedeutung wie oben genannt haben und
R¹¹ ein Wasserstoffatom und
R¹² Wasserstoff oder eine gegen ein Metall austauschbare Gruppe ist
mit einer Verbindung der Formel III
M²R¹³ (III)
worin
M² Lithium ist und
R¹³ ein Wasserstoffatom, eine C₁-C₂₀ - kohlenstoffhaltige Gruppe ist
zu einer Verbindung der Formel IV 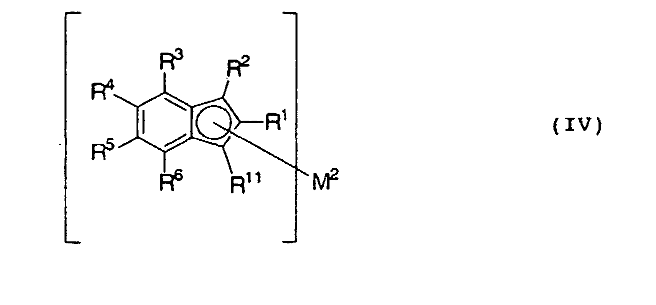 worin
R¹, R², R³, R⁴, R⁵, R⁶, R¹¹ die gleiche Bedeutung wie oben genannt haben und
M² die gleiche Bedeutung wie oben genannt hat.
B) Umsetzung der aus Schritt A) erhaltenen Verbindung der Formel IV mit einer Verbindung der Formel V 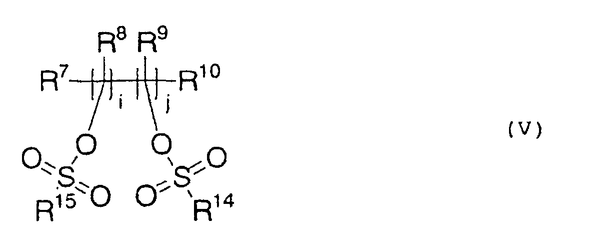 worin
R⁷, R⁸, R⁹ und R¹⁰ die gleiche Bedeutung wie oben genannt haben und
R¹⁴, R¹⁵ gleich Trifluormethyl sind und
i gleich 1 bis 10 ist und
j gleich 1 bis 10 ist,
zu einer Verbindung der Formel VI 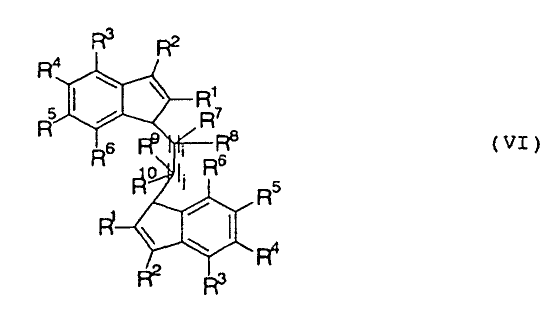 worin
R¹, R², R³, R⁴, R⁵, R⁶, R⁷, R⁸, R9, R¹⁰ die gleiche Bedeutung wie oben genannt haben und
i und j die gleiche Bedeutung wie oben genannt haben.
C) Umsetzung der aus Schritt B) erhaltenen Verbindung der Formel VI mit einer Verbindung der Formel III wie unter Schritt A) beschrieben zu einer Verbindung der Formel VII 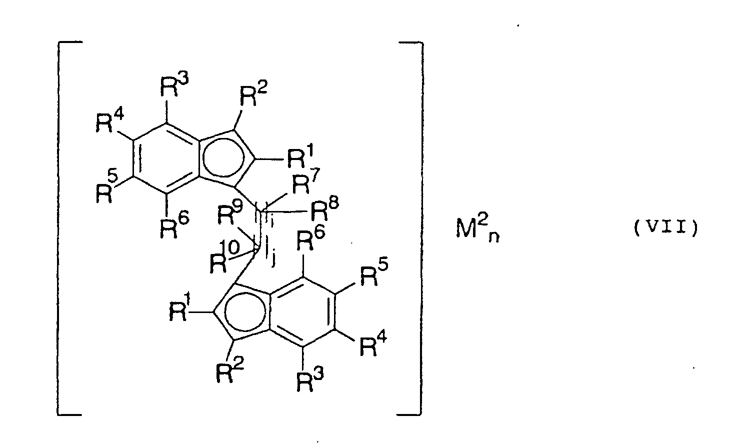 worin
R¹, R², R³, R⁴, R⁵, R⁶, R⁷, R⁸, R⁹, R¹⁰, und R¹¹ die gleiche Bedeutung wie oben genannt haben und
M² die gleiche Bedeutung wie oben genannt hat und
n 2 ist und
i und j die gleiche Bedeutung wie oben genannt haben.
D) Umsetzung der aus Schritt C) erhaltenen Verbindung der Formel VII kann mit einer Verbindung der Formel VIII
M¹(X¹)_{f}(X²)_{g}(D)ₐ
worin
M¹ Titan, Zirkonium oder Hafnium ist und
D ein Donorlösungsmittel ist, das mindestens ein Sauerstoffatom und/oder ein Schwefelatom, enthält und
X¹ und X² gleich oder verschieden sind und die gleiche Bedeutung wie oben genannt haben, und
f eine Zahl zwischen 0 und 4 ist, und
g eine Zahl zwischen 0 und 4 ist, und die Summe aus f + g der Oxidationszahl des Metallions entspricht, und
a eine Zahl zwischen 1 und 100 ist,
zur Zielverbindung der Formel I.

2. Verfahren gemäß Anspruch 1, **dadurch gekennzeichnet, daß**
M¹ gleich Zirkonium,
R¹ gleich oder verschieden sind und C₁-C₁₈-Alkyl, C₂-C₁₀-Alkenyl, C₃-C₁₅-Alkylalkenyl, C₆-C₁₈-Aryl, C₄-C₁₈-Heteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇-C₂₀-Alkylaryl bedeuten, und
R² gleich oder verschieden sind und Wasserstoff, C₁-C₁₈-Alkyl, C₂-C₁₀-Alkenyl, C₃-C₁₅-Alkylalkenyl, C₆-C₁₈-Aryl, C₄-C₁₈-Heteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇₋C₂₀-Alkylaryl bedeuten, wobei R¹ mit R² auch ein mono- oder polycyclisches Ringsystem bilden kann, und
R³ gleich oder verschieden sind und ein Wasserstoffatom oder eine C₆-C₁₈-Arylgruppe, die gegebenenfalls substituiert sein kann, C₅-C₁₈-Heteroaryl, C₇-C₂₀-Arylalkyl, C₇-C₂₀-Alkylaryl, fluorhaltiges C₆-C₁₈-Aryl, fluorhaltiges C₇-C₂₀-Arylalkyl oder fluorhaltiges C₇-C₂₀-Alkylaryl ist und zwei Reste R³ mit R⁴ ein mono- oder polycyclisches Ringssystem bilden können, ist,
R⁵, R⁶ jeweils gleich oder verschieden sind und ein Wasserstoffatom, C₂-C₁₀-Alkenyl, C₃-C₁₅-Alkylalkenyl, C₆-C₁₈-Aryl, C₄-C₁₈-Heteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇-C₂₀-Alkylaryl bedeuten.
R⁷, R⁸, R⁹, R¹⁰ gleich oder verschieden sind und Wasserstoffatome, C₁-C₁₀-Alkyl, C₂-C₁₀-Alkenyl, C₃-C₁₅-Alkylalkenyl, C₆-C₁₈-Aryl, C₄-C₁₈-Heteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇-C₂₀-Alkylaryl bedeuten, und untereinander ein mono- oder bicyclisches Ringsystem bilden können,
i gleich 1 bis 3 ist und
j gleich 1 bis 3 ist und
R¹² Wasserstoff, Chlor, Brom oder Iod, ist
M² für Lithium steht und
R¹³ ein Wasserstoffatom, C₁-C₁₈-Alkyl, C₂-C₁₀-Alkenyl, C₃-C₁₅-Alkylalkenyl, C₆-C₁₈-Aryl, C₆-C₁₈-Aryl, C₅-C₁₈-Heteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇-C₂₀-Alkylaryl ist,
R¹⁴, R¹⁵ gleich Trifluormethyl sind, und
n gleich 2 ist, und
D ein Donorlösungsmittel ist, das mindestens ein Sauerstoffatom enthält und
X¹ und X² gleich oder verschieden sind und für Halogen oder Phenolate steht, und
f eine Zahl zwischen 1 und 4 ist, und
g eine Zahl zwischen 1 und 4 ist, und die Summe aus f+ g der Oxidationszahl des Metallions entspricht, und
a eine Zahl zwischen 1 und 10 ist.

3. Verfahren gemäß Anspruch 1, **dadurch gekennzeichnet, daß** der Rest D für einen Ether, einen cyclischen Ether oder ein Acetal steht.

4. Verfahren gemäß Anspruch 3, **dadurch gekennzeichnet, daß** der Rest D für Tetrahydrofuran, Tetrahydropyran, Diethylether, Dimethoxymethan, Diethoxymethan, Dipropoxymethan, 1,2-Dimethoxyethan, 1,2-Diethoxyethan, 1,2-Dipropoxyethan, 1,3-Dimethoxypropan; 1,3-Diethoxypropan, 1,3-Dipropoxypropan, 1,2-Dimethoxybenzol, 1,2-Diethoxybenzol und/oder 1,2-Dipropoxybenzol steht.

5. Verfahren gemäß Anspruch 1, **dadurch gekennzeichnet, daß** R¹ jeweils gleich ist, R² jeweils gleich ist und jeweils für eine C₁-C₂₀ - kohlenstoffhaltige Gruppe steht, wobei R¹ mit R² auch ein mono- oder polycyclisches Ringsystem bilden können.

6. Verfahren gemäß Anspruch 5, **dadurch gekennzeichnet, daß** die Reste R¹ gleich sind und für C₁-C₁₈-Alkyl, C₂-C₁₀-Alkenyl, C₃-C₁₅-Alkylalkenyl, C₆-C₁₈-Aryl, C₄-C₁₈-Heteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇-C₂₀-Alkylaryl stehen und die Reste R² gleich sind und für C₁-C₁₈-Alkyl, C₂-C₁₀-Alkenyl, C₃-C₁₅-Alkylalkenyl, C₆-C₁₈-Aryl, C₄-C₁₈-Heteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇-C₂₀-Alkylaryl stehen, wobei R¹ mit R² auch ein mono- oder polycyclisches Ringsystem bilden können.

## Claims

1. A process for preparing compounds of the formula I: 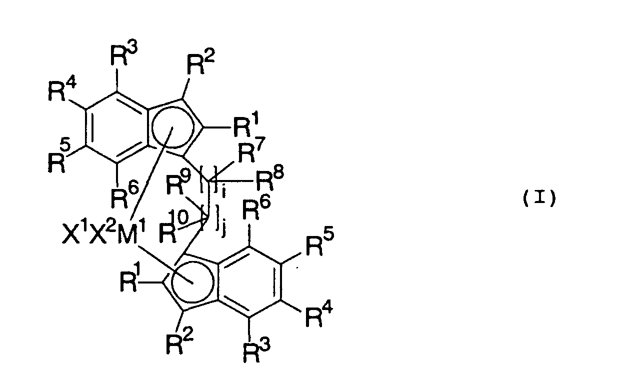 where
M¹ is Ti, Zr or Hf,
R¹ are identical or different and are each hydrogen or a C₁-C₂₀ group, and
R² are identical or different and are each hydrogen or a C₁-C₂₀ group, where R¹ together with R² may also form a monocyclic or polycyclic ring system, and
R³ are identical or different and are each a hydrogen atom or a C₆-C₁₈-aryl group which may be substituted, C₅-C₁₈-heteroaryl, C₇-C₂₀-arylalkyl, C₇-C₂₀-alkylaryl, fluorinated C₆-C₁₈-aryl, fluorinated C₇-C₂₀-arylalkyl or fluorinated C₇-C₂₀-alkylaryl, and two radicals R³ and R⁴ may form a monocyclic or polycyclic ring system,
R⁴ are identical or different and are each a hydrogen atom or together with R³ form a monocyclic or polycyclic ring system,
R⁵, R⁶ are identical or different and are each a hydrogen atom or a C₁-C₂₀ group,
R⁷, R⁸, R⁹, R¹⁰ are identical or different and are each a hydrogen atom or a C₁-C₂₀ group, and may, among one another, form a monocyclic or bicyclic ring system,
i is from 1 to 10 and
j is from 1 to 10 and
X¹, X² may be identical or different and are halogen atoms, alkyl groups or substituted or unsubstituted phenoxides or X¹ together with one or more radicals X¹ or X² forms a monocyclic or polycyclic ring system,
comprising the following steps:
A) reacting a compound of the formula II 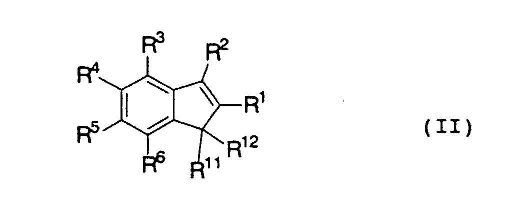 where
R¹, R², R³, R⁴, R⁵ and R⁶ are as defined above and
R¹¹ is a hydrogen atom and
R¹² is hydrogen or a group which can be replaced by a metal,
with a compound of the formula III
M²R¹³ (III)
where
M² is lithium and
R¹³ is a hydrogen atom or a C₁-C₂₀ group,
to form a compound of the formula IV 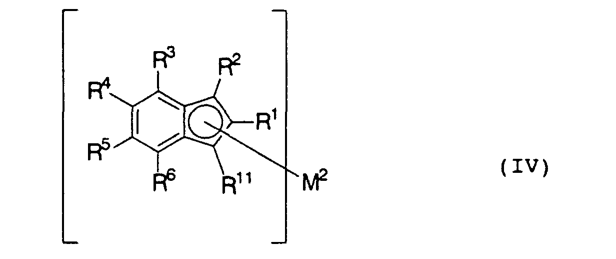 where
R¹, R², R³, R⁴, R⁵, R⁶, R¹¹ are as defined above and
M² is as defined above
B) reacting the compound of the formula IV obtained from step A) with a compound of the formula V 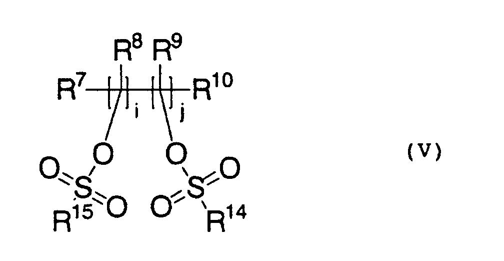 where
R⁷, R⁸, R⁹ and R¹⁰ are as defined above and
R¹⁴, R¹⁵ are each trifluoromethyl and
i is from 1 to 10 and
j is from 1 to 10,
to form a compound of the formula VI 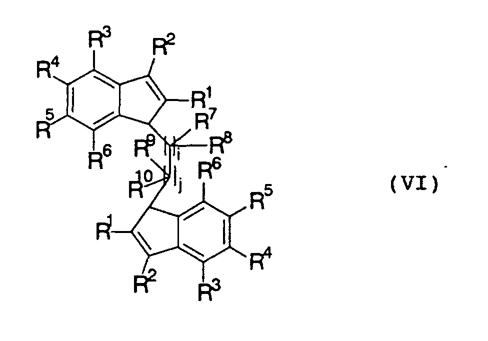 where
R¹, R², R³, R⁴, R⁵, R⁶, R⁷, R⁸, R⁹, R¹⁰ are as defined above and
i and j are as defined above,
C) reacting the compound of the formula VI obtained from step B) with a compound of the formula III as described in step A) to form a compound of the formula VII 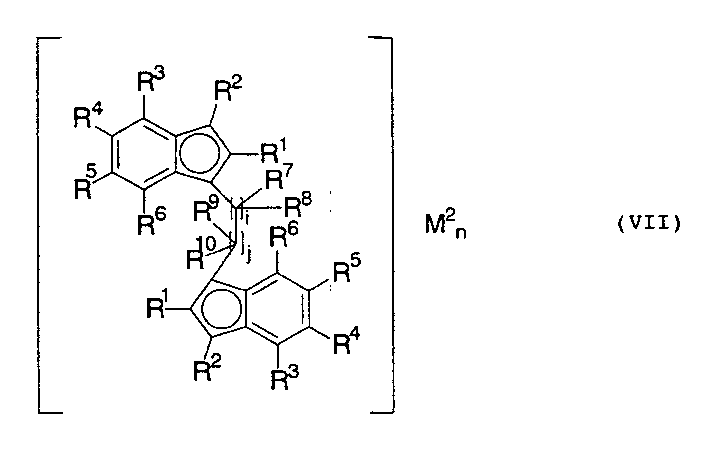 where
R¹, R², R³, R⁴, R⁵, R⁶, R⁷, R⁸, R⁹, R¹⁰ and R¹¹ are as defined above and
M² is as defined above and
n is 2 and
i and j are as defined above, and
D) reacting the compound of the formula VII obtained from step C) with a compound of the formula VIII
M¹(X¹)_{f}(X²)_{g}(D)ₐ
where
M¹ is titanium, zirconium or hafnium and
D is a donor solvent containing at least one oxygen atom and/or sulfur atom, and
X¹ and X² are identical or different and are as defined above, and
f is from 0 to 4, and
g is from 0 to 4 and the sum of f + g corresponds to the oxidation state of the metal ion, and
a is from 1 to 100,
to give the target compound of the formula I.

2. A process as claimed in claim 1, wherein
M¹ is zirconium,
R¹ are identical or different and are each hydrogen, C₁-C₁₈-alkyl, C₂-C₁₀-alkenyl, C₃-C₁₅-alkylalkenyl, C₆-C₁₈-aryl, C₄-C₁₈-heteroaryl, C₇-C₂₀-arylalkyl, C₇-C₂₀-alkylaryl, fluorinated C₁-C₁₂-alkyl, fluorinated C₆-C₁₈-aryl, fluorinated C₇-C₂₀-arylalkyl or fluorinated C₇-C₂₀-alkylaryl, and
R² are identical or different and are each hydrogen, C₁-C₁₈-alkyl, C₂-C₁₀-alkenyl, C₃-C₁₅-alkylalkenyl, C₆-C₁₈-aryl, C₄-C₁₈-heteroaryl, C₇-C₂₀-arylalkyl, C₇-C₂₀-alkylaryl, fluorinated C₁-C₁₂-alkyl, fluorinated C₆-C₁₈-aryl, fluorinated C₇-C₂₀-arylalkyl or fluorinated C₇-C₂₀-alkylaryl, where R¹ together with R² may also form a monocyclic or polycyclic ring system, and
R³ are identical or different and are each a hydrogen atom or a C₆-C₁₈-aryl group which may be substituted, C₅-C₁₈-heteroaryl, C₇-C₂₀-arylalkyl, C₇-C₂₀-alkylaryl, fluorinated C₆-C₁₈-aryl, fluorinated C₇-C₂₀-arylalkyl or fluorinated C₇-C₂₀-alkylaryl, and two radicals R³ and R⁴ may form a monocyclic or polycyclic ring system,
R⁵, R⁶ are identical or different and are each a hydrogen atom, C₂-C₁₀-alkenyl, C₃-C₁₅-alkylalkenyl, C₆-C₁₈-aryl, C₄-C₁₈-heteroaryl, C₇-C₂₀-arylalkyl, C₇-C₂₀-alkylaryl, fluorinated C₁-C₁₂-alkyl, fluorinated C₆-C₁₈-aryl, fluorinated C₇-C₂₀-arylalkyl or fluorinated C₇-C₂₀-alkylaryl,
R⁷, R⁸, R⁹, R¹⁰ are identical or different and are each a hydrogen atom, C₁-C₁₀-alkyl, C₂-C₁₀-alkenyl, C₃-C₁₅-alkylalkenyl, C₆-C₁₈-aryl, C₄-C₁₈-heteroaryl, C₇-C₂₀-arylalkyl, C₇-C₂₀-alkylaryl, fluorinated C₁-C₁₂-alkyl, fluorinated C₆-C₁₈-aryl, fluorinated C₇-C₂₀-arylalkyl or fluorinated C₇-C₂₀-alkylaryl, and may, among one another, form a monocyclic or bicyclic ring system,
i is from 1 to 3 and
j is from 1 to 3 and
R¹² is hydrogen, chlorine, bromine or iodine,
M² is lithium and
R¹³ is a hydrogen atom, C₁-C₁₈-alkyl, C₂-C₁₀-alkenyl, C₃-C₁₅-alkylalkenyl, C₆-C₁₈-aryl, C₅-C₁₈-heteroaryl, C₇-C₂₀-arylalkyl, C₇-C₂₀-alkylaryl, fluorinated C₁-C₁₂-alkyl, fluorinated C₆-C₁₈-aryl, fluorinated C₇-C₂₀-arylalkyl or fluorinated C₇-C₂₀-alkylaryl,
R¹⁴, R¹⁵ are each trifluoromethyl, and
n is 2 and
D is a donor solvent containing at least one oxygen atom and
X¹ and X² are identical or different and are each halogen or a phenoxide, and
f is from 1 to 4, and
g is from 1 to 4 and the sum f + g corresponds to the oxidation state of the metal ion, and
a is from 1 to 10.

3. A process as claimed in claim 1, wherein D is an ether, a cyclic ether or an acetal.

4. A process as claimed in claim 3, wherein D is tetrahydrofuran, tetrahydropyran, diethyl ether, dimethoxymethane, diethoxymethane, dipropoxymethane, 1,2-dimethoxyethane, 1,2-diethoxyethane, 1,2-dipropoxyethane, 1,3-dimethoxypropane; 1,3-diethoxypropane, 1,3-dipropoxypropane, 1,2-dimethoxybenzene, 1,2-diethoxybenzene and/or 1,2-dipropoxybenzene.

5. A process as claimed in claim 1, wherein R¹ are all identical and R² are all identical and are each a C₁-C₂₀ group, where R¹ together with R² may also form a monocyclic or polycyclic ring system.

6. A process as claimed in claim 5, wherein the radicals R¹ are identical and are each C₁-C₁₈-alkyl, C₂-C₁₀-alkenyl, C₃-C₁₅-alkylalkenyl, C₆-C₁₈-aryl, C₄-C₁₈-heteroaryl, C₇-C₂₀-arylalkyl, C₇-C₂₀-alkylaryl, fluorinated C₁-C₁₂-alkyl, fluorinated C₆-C₁₈-aryl, fluorinated C₇-C₂₀-arylalkyl or fluorinated C₇-C₂₀-alkylaryl and the radicals R² are identical and are each C₁-C₁₈-alkyl, C₂-C₁₀-alkenyl, C₃-C₁₅-alkylalkenyl, C₆-C₁₈-aryl, C₄-C₁₈-heteroaryl, C₇-C₂₀-arylalkyl, C₇-C₂₀-alkylaryl, fluorinated C₁-C₁₂-alkyl, fluorinated C₆-C₁₈-aryl, fluorinated C₇-C₂₀-arylalkyl or fluorinated C₇-C₂₀-alkylaryl, where R¹ together with R² may also form a monocyclic or polycyclic ring system.

## Revendications

1. Procédé de préparation de composés de formule 1 : 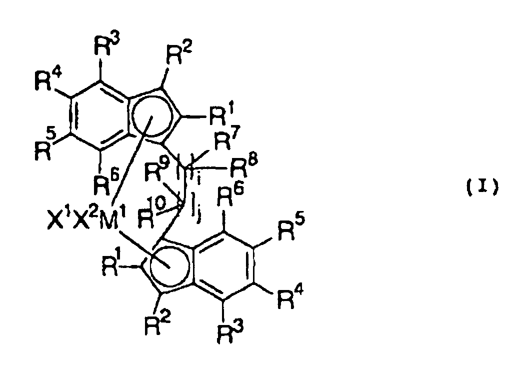 dans laquelle
M¹ est Ti, Zr ou Hf,
R¹ sont identiques ou différents et représentent un groupe hydrocarboné en C₁-C₂₀, et
R² sont identiques ou différents et représentent l'hydrogène, un groupe hydrocarboné en C₁-C₂₀, R¹ avec R² pouvant aussi former un système cyclique mono- ou polycyclique, et
R³ sont identiques ou différents et représentent un atome d'hydrogène ou un groupe aryle en C₆-C₁₈, qui peut être éventuellement substitué, hétéroaryle en C₅-C₁₈, arylalkyle en C₇-C₂₀, alkylaryle en C₇-C₂₀, aryle en C₆-C₁₈ fluoré, arylalkyle en C₇-C₂₀ fluoré ou alkylaryle en C₇-C₂₀ fluoré et deux radicaux R³ avec R⁴ peuvent former un système cyclique mono- ou polycyclique,
R⁴ sont identiques ou différents et représente soit un atome d'hydrogène, soit forme avec R³ un système cyclique mono- ou polycyclique,
R⁵, R⁶, respectivement, sont identiques ou différents et représentent un atome d'hydrogène, un groupe hydrocarboné en C₁-C₂₀,
R⁷, R⁸, R⁹, R¹⁰ sont identiques ou différents et représentent des atomes d'hydrogène, un groupe hydrocarboné en C₁-C₂₀, et peuvent former entre eux un système cyclique mono- ou polycyclique,
i est égal à 1 à 10, et
j est égal à 1 à 10 et
X¹, X² peuvent être identiques ou différents et sont des atomes d'halogène, des groupes alkyle ou des phénolates substitués ou non substitués ou X¹ forme avec un ou plusieurs radicaux X¹ ou X² un système cyclique mono- ou polycyclique,
ledit procédé comprenant les étapes suivantes :
A) conversion d'un composé de formule II 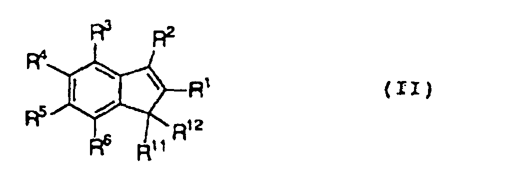 dans laquelle
R¹, R², R³, R⁴, R⁵ et R⁶ ont la même signification que susmentionnée et
R¹¹ est un atome d'hydrogène et
R¹² est un hydrogène ou un groupe remplaçable par un métal
avec un composé de formule III
M²R¹³ (III)
dans laquelle
M² est le lithium et
R¹³ est un atome d'hydrogène, un groupe hydrocarboné en C₁-C₂₀,
en un composé de formule IV 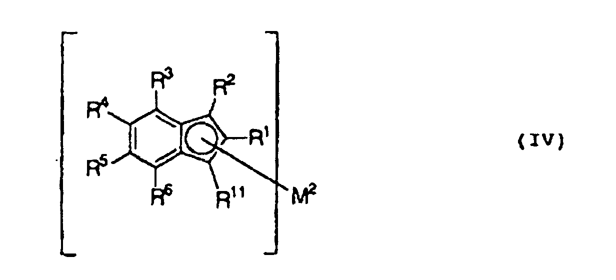 dans laquelle
R¹, R², R³, R⁴, R⁵, R⁶, R¹¹ ont la même signification que susmentionnée et
M² a la même signification que susmentionnée.
B) conversion d'un composé obtenu à l'étape A) de formule IV avec un composé de formule V 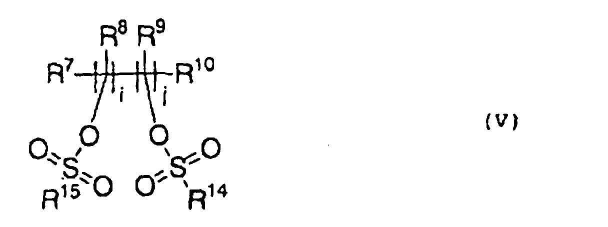 dans laquelle
R⁷, R⁸, R⁹ et R¹⁰ ont la même signification que susmentionnée et
R¹⁴, R¹⁵ sont égaux au trifluorométhyle et
i est égal à 1 à 10, et
j est égal à 1 à 10,
en un composé de formule VI 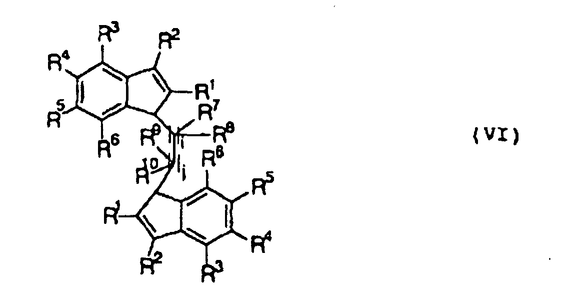 dans laquelle
R¹, R², R³, R⁴, R⁵, R⁶, R⁷, R⁸, R⁹, R¹⁰ ont la même signification que susmentionnée et
i et j ont la même signification que susmentionnée.
C) conversion du composé obtenu à l'étape B) de formule VI avec un composé de formule III, comme décrit pour l'étape A), en un composé de formule VII 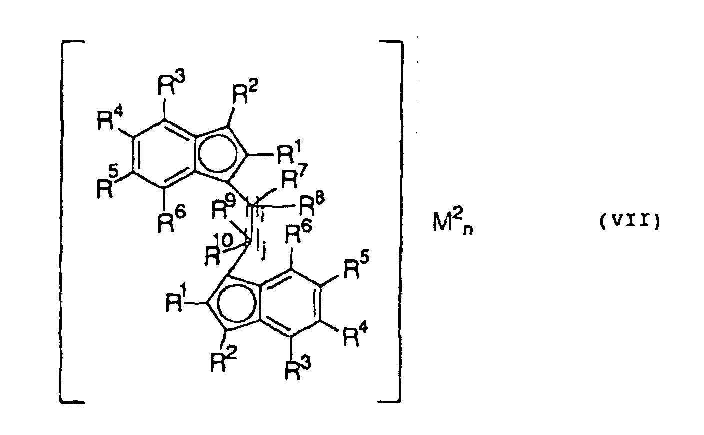 dans laquelle
R¹, R², R³, R⁴, R⁵, R⁶ R⁷, R⁸, R⁹, R¹⁰ et R¹¹ ont la même signification que précédemment et
M² a la même signification que susmentionnée, et
n est 2 et
i et j ont la même signification que susmentionnée.
D) la conversion du composé obtenu à l'étape C) de formule VII peut se faire avec un composé de formule VIII
M¹(X¹)_{f}(X²)_{g}(D)ₐ
dans laquelle
M¹ est le titane, le zirconium ou le hafnium, et
D est un solvant donneur qui comprend au moins un atome d'oxygène et/ou un atome de soufre, et
X¹ et X² sont identiques ou différents et ont la même signification que susmentionnée, et
f est un nombre entre 0 et 4, et
g est un nombre entre 0 et 4, et la somme de f + g correspond à l'indice d'oxydation de l'ion métallique, et
a est un nombre entre 1 et 100,
pour l'obtention du composé cible de formule I.

2. Procédé selon la revendication 1, **caractérisé en ce que**
M¹ est égal au zirconium,
R¹ sont identiques ou différents et représentent un groupe alkyle en C₁-C₁₈, alcényle en C₂-C₁₀, alkylalcényle en C₃-C₁₅, aryle en C₆-C₁₈, hétéroaryle en C₄-C₁₈, arylalkyle en C₇-C₂₀, alkylaryle en C₇-C₂₀, alkyle en C₁-C₁₂ fluoré, aryle en C₆-C₁₈ fluoré, arylalkyle en C₇-C₂₀ fluoré ou alkylaryle en C₇-C₂₀ fluoré, et
R² sont identiques ou différents et représentent l'hydrogène, un groupe alkyle en C₁-C₁₈, alcényle en C₂-C₁₀, alkylalcényle en C₃-C₁₅, aryle en C₆-C₁₈, hétéroaryle en C₄-C₁₈, arylalkyle en C₇-C₂₀, alkylaryle en C₇-C₂₀, alkyle en C₁-C₁₂ fluoré, aryle en C₆-C₁₈ fluoré, arylalkyle en C₇-C₂₀ fluoré ou alkylaryle en C₇-C₂₀ fluoré, R¹ avec R² pouvant aussi former un système cyclique mono- ou polycyclique,
R³ sont identiques ou différents et représentent un atome d'hydrogène ou un groupe aryle en C₆-C₁₈, qui peut être éventuellement substitué, hétéroaryle en C₅-C₁₈, arylalkyle en C₇-C₂₀, alkylaryle en C₇-C₂₀, aryle en C₆-C₁₈ fluoré, arylalkyle en C₇-C₂₀ fluoré ou alkylaryle en C₇-C₂₀ fluoré et deux radicaux R³ avec R⁴ peuvent aussi former un système cyclique mono- ou polycyclique,
R⁵, R⁶ sont identiques ou différents et représentent un atome d'hydrogène, un groupe alcényle en C₂-C₁₀, alkylalcényle en C₃-C₁₅, aryle en C₆-C₁₈, hétéroaryle en C₄-C₁₈, arylalkyle en C₇-C₂₀, alkylaryle en C₇-C₂₀, alkyle en C₁-C₁₂ fluoré, aryle en C₆-C₁₈ fluoré, arylalkyle en C₇-C₂₀ fluoré ou alkylaryle en C₇-C₂₀ fluoré.
R⁷, R⁸, R⁹, R¹⁰ sont identiques ou différents et représentent des atomes d'hydrogène, un groupe alkyle en C₁-C₁₀, alcényle en C₂-C₁₀, alkylalcényle en C₃-C₁₅, aryle en C₆-C₁₈, hétéroaryle en C₄-C₁₈, arylalkyle en C₇-C₂₀, alkylaryle en C₇-C₂₀, alkyle en C₁-C₁₂ fluoré, aryle en C₆-C₁₈ fluoré, arylalkyle en C₇-C₂₀ fluoré ou alkylaryle en C₇-C₂₀ fluoré, et peuvent former entre eux un système cyclique mono- ou bicyclique,
i est égal à 1 à 3, et
j est égal à 1 à 3 et
R¹² est l'hydrogène, le chlore, le brome ou l'iode et
M² représente le lithium et
R¹³ est un atome d'hydrogène, un groupe alkyle en C₁-C₁₈, alcényle en C₂-C₁₀, alkylalcényle en C₃-C₁₅, aryle en C₆-C₁₈, hétéroaryle en C₅-C₁₈, arylalkyle en C₇-C₂₀, alkylaryle en C₇-C₂₀, alkyle en C₁-C₁₂ fluoré, aryle en C₆-C₁₈ fluoré, arylalkyle en C₇-C₂₀ fluoré ou alkylaryle en C₇-C₂₀ fluoré, et
R¹⁴, R¹⁵ sont égaux au trifluorométhyle et
n est égal à 2, et
D est un solvant donneur qui comprend au moins un atome d'oxygène, et
X¹ et X² sont identiques ou différents et représentent un halogène ou des phénolates, et
f est un nombre entre 1 et 4, et
g est un nombre entre 1 et 4, et la somme de f + g correspond à l'indice d'oxydation de l'ion métallique, et
a est un nombre entre 1 et 100.

3. Procédé selon la revendication 1, **caractérisé en ce que** le radical D représente un éther, un éther cyclique ou un acétal.

4. Procédé selon la revendication 3, **caractérisé en ce que** le radical D représente le tétrahydrofurane, tétrahydropyrane, diéthyléther, diméthoxyméthane, diéthoxyméthane, dipropoxy-méthane, 1,2-diméthoxyéthane, 1,2-diéthoxyéthane, 1,2-dipropoxyéthane, 1,3-diméthoxypropane, 1,3-diéthoxypropane, 1,3-dipropoxypropane, 1,2-diméthoxybenzène, 1,2-diéthoxy-benzène et/ou 1,2-dipropoxybenzène.

5. Procédé selon la revendication 1, **caractérisé en ce que** R¹ est à chaque fois identique, R² est à chaque fois identique et représente respectivement un groupe hydrocarboné en C₁-C₂₀, R¹ avec R² pouvant aussi former un système cyclique monocyclique ou polycyclique.

6. Procédé selon la revendication 5, **caractérisé en ce que** les radicaux R¹ sont identiques et représentent un groupe alkyle en C₁-C₁₈, alcényle en C₂-C₁₀, alkylalcényle en C₃-C₁₅, aryle en C₆-C₁₈, hétéroaryle en C₄-C₁₈, arylalkyle en C₇-C₂₀, alkylaryle en C₇-C₂₀, alkyle en C₁-C₁₂ fluoré, aryle en C₆-C₁₈ fluoré, arylalkyle en C₇-C₂₀ fluoré ou alkylaryle en C₇-C₂₀ fluoré et les deux radicaux R² sont identiques et représentent un groupe alkyle en C₁-C₁₈, alcényle en C₂-C₁₀, alkylalcényle en C₃-C₁₅, aryle en C₆-C₁₈, hétéroaryle en C₄-C₁₈, arylalkyle en C₇-C₂₀, alkylaryle en C₇-C₂₀, alkyle en C₁-C₁₂ fluoré, aryle en C₆-C₁₈ fluoré, arylalkyle en C₇-C₂₀ fluoré ou alkylaryle en C₇-C₂₀ fluoré, R¹ avec R² pouvant aussi former un système cyclique mono- ou polycyclique.
